(19) Europäisches Patentamt / European Patent Office / Office européen des brevets

(11) **EP 4 443 789 A1**

(12) **EUROPEAN PATENT APPLICATION**
published in accordance with Art. 153(4) EPC

(43) Date of publication:
**09.10.2024 Bulletin 2024/41**

(21) Application number: **22919095.4**

(22) Date of filing: **29.12.2022**

(51) International Patent Classification (IPC):
**H04L 1/18** (2023.01)          **H04L 5/00** (2006.01)
**H04L 1/08** (2006.01)

(52) Cooperative Patent Classification (CPC):
**H04L 1/08; H04L 1/18; H04L 5/00**

(86) International application number:
**PCT/KR2022/021561**

(87) International publication number:
**WO 2023/132558 (13.07.2023 Gazette 2023/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.01.2022  KR 20220002012
11.01.2022  KR 20220004152**

(71) Applicant: **Samsung Electronics Co., Ltd
Suwon-si, Gyeonggi-do 16677 (KR)**

(72) Inventors:
• **CHOI, Kyungjun**
  **Suwon-si, Gyeonggi-do 16677 (KR)**
• **LIM, Seongmok**
  **Suwon-si, Gyeonggi-do 16677 (KR)**
• **JANG, Youngrok**
  **Suwon-si, Gyeonggi-do 16677 (KR)**
• **LEE, Kyunggyu**
  **Suwon-si, Gyeonggi-do 16677 (KR)**
• **JI, Hyoungju**
  **Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(54) **HARQ-ACK TRANSMISSION METHOD AND DEVICE FOR MULTI-PDSCH SCHEDULING AND PDSCH REPETITION IN WIRELESS COMMUNICATION SYSTEM**

(57)    The present disclosure relates to a 5G or 6G communication system for supporting higher data transfer rates. The present disclosure provides a method of, when a terminal receives PDSCH repetitive transmission and scheduling of multiple PDSCHs through one DCI in a wireless communication system, collecting pieces of HARQ-ACK information of the PDSCHs to generate a type-1 HARQ-ACK codebook.

EP 4 443 789 A1

EP 4 443 789 A1

# FIG. 17

(a)

(b) (1760)

(c) (1770)

2

## Description

[Technical Field]

The disclosure relates to operations of a terminal and a base station in a wireless communication system. Specifically, the disclosure relates to a method for transmitting an HARQ-ACK by a terminal, the HARQ-ACK indicating whether reception of multiple physical downlink shared channels through single piece of downlink control information is successful, and a device capable of performing the same.

[Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system is considered to be implemented in ultrahigh frequency (mmWave) bands, (e.g., 60GHz bands) so as to accomplish higher data rates. To decrease the propagation loss of the radio waves and increase the transmission distance of radio waves in the ultrahigh frequency (mmWave) bands, beamforming, massive multiple-input multiple-output (massive MIMO), full dimensional MIMO (FD-MIMO), array antenna, an analog beam forming, and large scale antenna techniques have been discussed in the 5G communication system. In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like. In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply the 5G communication system (5th generation communication system or new radio (NR)) to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

With the advance of wireless communication systems as described above, various services can be provided, and accordingly there is a need for ways to smoothly provide these services.

[Disclosure of Invention]

[Technical Problem]

An aspect of the disclosed embodiments is to provide a device and a method capable of effectively providing a service in a mobile communication system.

[Solution to Problem]

The disclosure provides a method of, when a terminal receives PDSCH repetitive transmission and scheduling of multiple PDSCHs through one DCI in a wireless communication system, collecting pieces of HARQ-ACK information of the PDSCHs to generate a type-1 HARQ-ACK codebook.

The terminal may receive a configuration of a first RRC parameter for PDSCH repetitive transmission from a higher layer. In addition, the terminal may receive a configuration of a second RRC parameter for receiving scheduling of multiple PDSCHs from a higher layer. If the terminal receives a configuration of both the first RRC parameter and the second RRC parameter, the terminal interprets a PDSCH scheduled in a first DCI format, through PDSCH repetitive transmission scheduling, based on the first RRC parameter, to receive the PDSCH repeatedly, and interprets a PDSCH scheduled in a second DCI format, through multiple PDSCH scheduling, based on the second RRC parameter, to receive multiple PDSCHs. The terminal is required to generate a Type-1 HARQ-ACK codebook including HARQ-ACK information of PDSCHs scheduled in the first DCI format or the second DCI format.

More specifically, when the terminal generates the Type-1 HARQ-ACK codebook, the terminal may determine an associated DCI format, based on a start and length value (SLIV) of a PDSCH candidate. Based on the determined DCI format, the terminal may perform determination of PDSCH repetitive transmission or multiple PDSCH transmission by using a PDSCH scheduling method of the DCI format. The terminal may generate the Type-1 HARQ-ACK codebook, based on the scheduling method.

In addition, a method performed by a terminal in a communication system may include: receiving time-domain bundling configuration information of a hybrid automatic repeat request-acknowledgement (HARQ-ACK) bit from a base station; receiving multiple downlink data from the base station through a physical downlink shared channel (PDSCH); generating an HARQ-ACK codebook including an HARQ-ACK bit for the multiple downlink data; and transmitting the HARQ-ACK codebook to the base station through an uplink channel, wherein the HARQ-ACK codebook is based on a set of occasions of PDSCH reception candidates, and in case that multi-PDSCH scheduling and repetitive reception are configured through higher layer signaling, the set of the occasions of the PDSCH reception candidates is determined based on a determination of whether multi-PDSCH scheduling or repetitive reception is applied to scheduling information included in a row included in TDRA configuration information based on a downlink control information (DCI) format related to the row.

In addition, a method performed by a base station in a communication system may include: transmitting time-domain bundling configuration information of a hybrid automatic repeat request-acknowledgement (HARQ-ACK) bit to a terminal; transmitting multiple downlink data to the terminal through a physical downlink shared channel (PDSCH); and receiving an HARQ-ACK codebook including an HARQ-ACK bit for the multiple downlink data from the terminal through an uplink channel, wherein the HARQ-ACK codebook is based on a set of occasions of PDSCH reception candidates, and in case that multi-PDSCH scheduling and repetitive reception are configured for the terminal through higher layer signaling, the set of the occasions of the PDSCH reception candidates is based on a determination of whether multi-PDSCH scheduling or repetitive reception is applied to scheduling information included in a row included in TDRA configuration information based on a downlink control information (DCI) format related to the row.

In addition, a terminal in a communication system may include: a transceiver; and a controller configured to perform control to: receive time-domain bundling configuration information of a hybrid automatic repeat request-acknowledgement (HARQ-ACK) bit from a base station; receive multiple downlink data from the base station through a physical downlink shared channel (PDSCH); generate an HARQ-ACK codebook including an HARQ-ACK bit for the multiple downlink data; and transmit the HARQ-ACK codebook to the base station through an uplink channel, wherein the HARQ-ACK codebook is based on a set of occasions of PDSCH reception candidates, and in case that multi-PDSCH scheduling and repetitive reception are configured through higher layer signaling, the set of the occasions of the PDSCH reception candidates is determined based on a determination of whether multi-PDSCH scheduling or repetitive reception is applied to scheduling information included in a row included in TDRA configuration information based on a downlink control information (DCI) format related to the row.

In addition, a base station in a communication system may include: a transceiver; and a controller configured to perform control to: transmit time-domain bundling configuration information of a hybrid automatic repeat request-acknowledgement (HARQ-ACK) bit to a terminal; transmit multiple downlink data to the terminal through a physical downlink shared channel (PDSCH); and receive an HARQ-ACK codebook including an HARQ-ACK bit for the multiple downlink data from the terminal through an uplink channel, wherein the HARQ-ACK codebook is based on a set of occasions of PDSCH reception candidates, and in case that multi-PDSCH scheduling and repetitive reception are configured for the terminal through higher layer signaling, the set of the occasions of the PDSCH reception candidates is based on a determination of whether multi-PDSCH scheduling or repetitive reception is applied to scheduling information included in a row included in TDRA configuration information based on a downlink control information (DCI) format related to the row.

[Advantageous Effects of Invention]

The disclosed embodiments may provide a device and a method capable of effectively providing a service in a mobile communication system.

[Brief Description of Drawings]

FIG. 1 illustrates a basic structure of a time-frequency domain in a wireless communication system according to an embodiment of the disclosure;

FIG. 2 illustrates a structure of a frame, a subframe, and a slot in a wireless communication system according to an embodiment of the disclosure;

FIG. 3 illustrates an example of bandwidth part configuration in a wireless communication system according to an embodiment of the disclosure;

FIG. 4 illustrates an example of control resource set configuration of a downlink control channel in a wireless communication system according to an embodiment of the disclosure;

FIG. 5 illustrates a structure of a downlink control channel in a wireless communication system according to an embodiment of the disclosure;

FIG. 6 illustrates a diagram for explaining a method in which a base station and a UE transmit/receive data in consideration of a downlink data channel and a rate matching resource in a wireless communication system according to an embodiment of the disclosure;

FIG. 7 illustrates an example of frequency domain resource allocation with regard to a PDSCH in a wireless communication system according to an embodiment of the disclosure;

FIG. 8 illustrates an example of time domain resource allocation with regard to a PDSCH in a wireless communication system according to an embodiment of the disclosure;

FIG. 9 illustrates an example of time domain resource allocation according to a subcarrier spacing with regard to a data channel and a control channel in a wireless communication system according to an embodiment of the disclosure;

FIG. 10 illustrates radio protocol structures of a base station and a UE in single cell, carrier aggregation, and dual connectivity situations in a wireless communication system according to an embodiment of the disclosure;

FIG. 11 illustrates an example of scheduling one or more PDSCHs according to an embodiment of the disclosure;

FIG. 12 illustrates DCI for single-PDSCH scheduling and multi-PDSCH scheduling according to an embodiment of the disclosure;

FIG. 13 illustrates a method for transmitting HARQ-ACK of multiple PDSCHs according to an embodiment of the disclosure;

FIG. 14 illustrates an example of describing a pseudo-code for generating an HARQ-ACK codebook for a PDSCH received in one slot according to an embodiment of the disclosure;

FIG. 15 illustrates an example of describing a pseudo-code for generating an HARQ-ACK codebook for a PDSCH repeatedly received in multiple slots according to an embodiment of the disclosure;

FIG. 16A illustrates an example illustrating PDSCHs based on a TDRA table including multiple pieces of scheduling information according to an embodiment of the disclosure;

FIG. 16B illustrates an example of describing extension of K1 values as a result of considering PDSCHs based on a TDRA table including multiple pieces of scheduling information as single-PDSCH scheduling according to an embodiment of the disclosure;

FIG. 16C illustrates another example of describing a pseudo-code for generating an HARQ-ACK codebook according to an embodiment of the disclosure;

FIG. 16D illustrates another example of describing a pseudo-code for generating an HARQ-ACK codebook according to an embodiment of the disclosure;

FIG. 17 illustrates an example of describing a pseudo-code for generating an HARQ-ACK codebook by configuring/applying time-domain bundling for a PDSCH repeatedly received in multiple slots according to an embodiment of the disclosure;

FIG. 18 illustrates a structure of a UE in a wireless communication system according to an embodiment of the disclosure; and

FIG. 19 illustrates a structure of a base station in a wireless communication system according to an embodiment of the disclosure.

[Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types to the embodiments of the disclosure. Examples of such communication systems may include 5th generation mobile communication technologies (5G, new radio, and NR) developed beyond LTE-A, and in the following description, the "5G" may be the concept that covers the exiting LTE, LTE-A, and other similar services. addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in the embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a services supporting URLLC must satisfy an air interface latency of less than 0.5 ms, and also requires a packet error rate of 10$^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

[NR time-frequency resources]

Hereinafter, a frame structure of a 5G system will be described in more detail with reference to the accompanying drawings.

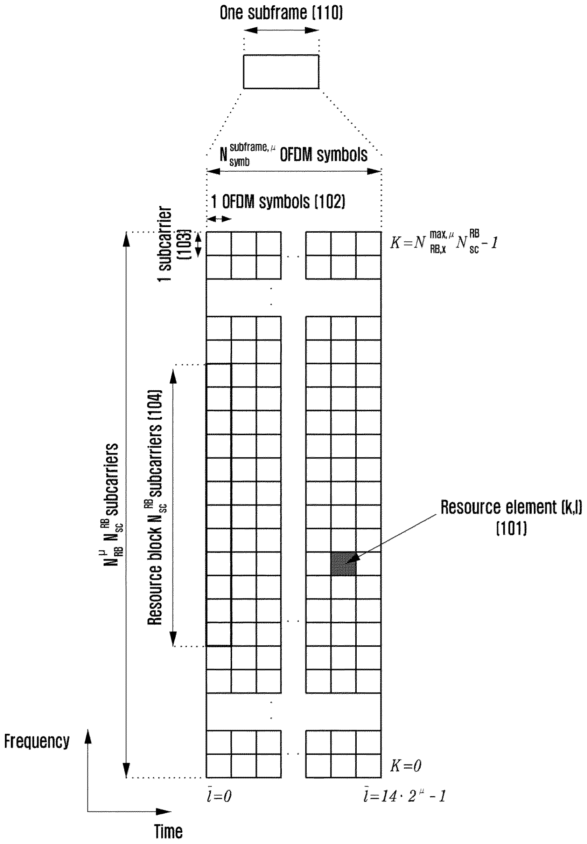

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104.

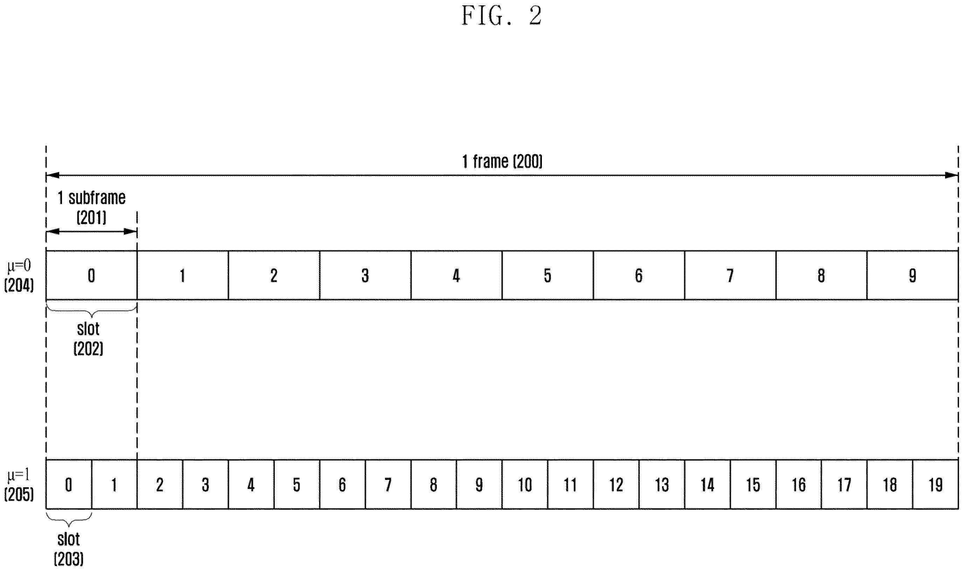

FIG. 2 illustrates a structure of a frame, a subframe, and a slot in a wireless communication system according to an embodiment of the disclosure.

FIG. 2 illustrates an example of the structure of a frame 200, a subframe 201, and a slot 202. One frame 200 may be defined as 10ms. One subframe 201 may be defined as 1 millisecond (ms), and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu$=0 (204), and a case in which $\mu$=1 (205). In the case of $\mu$=0 (204), one subframe 201 may include one slot 202, and in the case of $\mu$=1 (205), one subframe 201 may include two slots 203. That is, the number of slots per one subframe $N_{slot}^{sunframe,\mu}$ may differ depending on the subcarrier spacing configuration value $\mu$, and the number of slots per one frame $N_{slot}^{frame,\mu}$ may differ accordingly. $N_{slot}^{sunframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, bandwidth part (BWP) configuration in a 5G communication system will be described in detail with reference to the accompanying drawings.

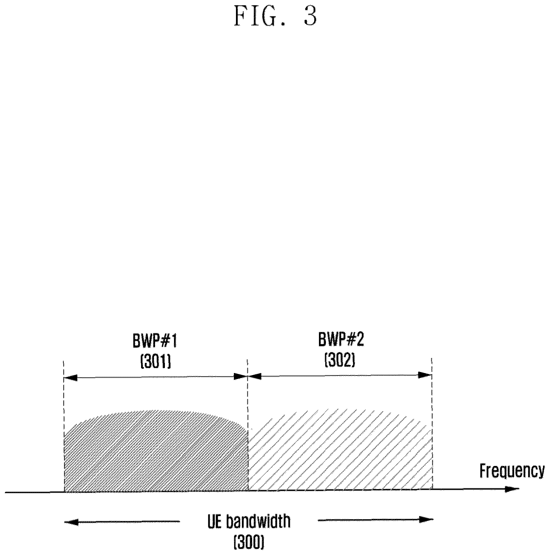

FIG. 3 illustrates an example of bandwidth part configuration in a wireless communication system according to an embodiment of the disclosure.

FIG. 3 illustrates an example in which a UE bandwidth 300 is configured to include two bandwidth parts, that is bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

```
BWP ::=                              SEQUENCE {
    bwp-Id                               BWP-Id,
    (bandwidth part identifier)
    locationAndBandwidth                 INTEGER (1..65536),
    (bandwidth part location)
    subcarrierSpacing                    ENUMERATED {n0, n1, n2, n3, n4, n5},
    (subcarrier spacing)
    cyclicPrefix                         ENUMERATED { extended }
    (cyclic prefix)
}
```

Obviously, the above example is not limiting, and various parameters related to the bandwidth part may be configured for the UE, in addition to the above configuration information. The above pieces of information may be transferred from the base station to the UE through upper layer signaling, for example, radio resource control (RRC) signaling. One configured bandwidth part or at least one bandwidth part among multiple configured bandwidth parts may be activated. Whether or not to activate a configured bandwidth part may be transferred from the base station to the UE semi-statically through RRC signaling, or dynamically through downlink control information (DCI).

According to some embodiment, the UE, prior to radio resource control (RRC) connection, may have an initial BWP for initial access configured by the base station through a master information block (MIB). To be more specific, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered (or configured) as identity (ID) 0. The base station may notify the UE of configuration information, such as frequency allocation information, time allocation information, and numerology, regarding CORESET #0 through the MIB. In addition, the base station may notify the UE of configuration information regarding the monitoring cycle and occasion regarding control resource set #0, that is, configuration information regarding control resource set #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing, and when data is to be transmitted/received at a specific subcarrier spacing, the bandwidth part configured as the corresponding subcarrier spacing may be activated.

In addition, according to an embodiment, the base station may configure bandwidth parts having different sizes of bandwidths for the UE for the purpose of reducing power consumed by the UE. For example, if the UE supports a substantially large bandwidth (for example, 100MHz) and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through a master information block (MIB) in the initial access step. To be more specific, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

[Bandwidth part (BWP) change]

If a UE has one or more bandwidth parts configured therefor, the base station may instruct to the UE to change (or switch) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time (TBWP) required during a bandwidth part change are specified in standards, and may be defined given in Table 3 below, for example.

[Table 3]

| $\mu$ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. Note 2: If the BWP switch involves changing of SCS, the BWP switch delay is determined by the larger one between the SCS before BWP switch and the SCS after BWP switch. | | | |

The requirements for the bandwidth part change delay time may support type 1 or type 2, depending on the capability of the UE. The UE may report the supportable bandwidth part delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot $n+T_{BWP}$, and may transmit/receive a data channel scheduled by the corresponding DCI in the newly changed bandwidth part. If the base station wants to schedule a data channel by using the new bandwidth part, the base station may determine time domain resource allocation regarding the data channel in consideration of the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (that is, the last symbol of slot n+K-1).

[SS/PBCH block]

Next, synchronization signal (SS)/PBCH blocks in 5G will be described.

An SS/PBCH block may refer to a physical layer channel block including a primary SS (PSS), a secondary SS (SSS), and a PBCH. Details thereof are as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides essential system information necessary for the UE's data channel and control channel transmission/reception. The essential system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5 ms, and each transmitted SS/PBCH block may be distinguished by an index.

The UE may detect the PSS and the SSS in the initial access stage, and may decode the PBCH. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 is quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

[PDCCH: regarding DCI]

Next, downlink control information (DCI) in a 5G system will be described in detail.

In a 5G system, scheduling information regarding uplink data (or physical uplink shared channel (PUSCH)) or downlink data (or physical downlink shared channel (PDSCH)) is transferred from a base station to a UE through DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check is attached to the DCI message payload, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI is not explicitly transmitted, but is transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling the PUSCH, and the CRC may be scrambled by a C-RNTI. DCI format 0_0 in which the CRC is scrambled by a C-RNTI may include the following pieces of information in Table 4 below, for example.

[Table 4]

- Identifier for DCI formats - [1] bit

- Frequency domain resource assignment - $\left\lceil \left\lceil log_2(N_{RB}^{UL,BWP}(N_{RB}^{UL,BWP}+1)/2)\right\rceil \right\rceil$ bits
- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- Transmit power control (TPC) command for scheduled PUSCH - [2] bits
- Uplink/supplementary uplink (UL/SUL) indicator - 0 or 1 bit

DCI format 0_1 may be used as non-fallback DCI for scheduling the PUSCH, and the CRC may be scrambled by a C-RNTI. DCI format 0_1 in which the CRC is scrambled by a C-RNTI may include the following pieces of information in Table 5 below, for example.

[Table 5]

- Carrier indicator - 0 or 3 bits

- UL/SUL indicator - 0 or 1 bit
- Identifier for DCI formats - [1] bits
- Bandwidth part indicator - 0, 1 or 2 bits
- Frequency domain resource assignment

    • For resource allocation type 0, $\left\lceil N_{RB}^{UL,BWP}/P\right\rceil$ bits
    • For resource allocation type 1,

$$\left\lceil log_2(N_{RB}^{UL,BWP}(N_{RB}^{UL,BWP}+1)/2)\right\rceil \text{ bits}$$

- Time domain resource assignment - 1, 2, 3, or 4 bits
- Virtual resource block (VRB)-to-physical resource block (PRB) mapping - 0 or 1 bit, only for resource allocation type 1.

    • 0 bit if only resource allocation type 0 is configured;
    • 1 bit otherwise.

- Frequency hopping flag - 0 or 1 bit, only for resource allocation type 1.

    • 0 bit if only resource allocation type 0 is configured;
    • 1 bit otherwise.

- Modulation and coding scheme - 5 bits
- New data indicator - 1 bit
- Redundancy version - 2 bits
- HARQ process number - 4 bits
- 1st downlink assignment index - 1 or 2 bits

    • 1 bit for semi-static HARQ-ACK codebook;
    • 2 bits for dynamic HARQ-ACK codebook with single HARQ-ACK codebook

- 2nd downlink assignment index - 0 or 2 bits

    • 2 bits for dynamic HARQ-ACK codebook with two HARQ-ACK sub-codebooks;
    • 0 bit otherwise.

- TPC command for scheduled PUSCH - 2 bits

- SRS resource indicator - $\left\lceil log_2\left(\sum_{k=1}^{L_{max}\Sigma}\binom{N_{SRS}}{k}\right)\right\rceil$ or $\left\lceil log_2(N_{SRS})\right\rceil$ bits

(continued)

$$\bullet \left\lceil log_2 \left( \sum_{k=1}^{L_{max}\Sigma} \binom{N_{SRS}}{k} 0 \right) \quad \right\rceil \text{ bits for non-codebook}$$

based PUSCH transmission;

$$\bullet \lceil log_2(N_{SRS}) \rceil \text{ bits for codebook based PUSCH transmission.}$$

- Precoding information and number of layers - up to 6 bits
- Antenna ports - up to 5 bits
- SRS request - 2 bits

- CSI request - 0, 1, 2, 3, 4, 5, or 6 bits
- Code block group (CBG) transmission
information - 0, 2, 4, 6, or 8 bits
- Phase tracking reference signal
(PTRS)-demodulation reference signal (DMRS)
association - 0 or 2 bits.
- beta_offset indicator - 0 or 2 bits
- DMRS sequence initialization - 0 or 1 bit

DCI format 1_0 may be used as fallback DCI for scheduling the PDSCH, and the CRC may be scrambled by a C-RNTI. DCI format 1_1 in which the CRC is scrambled by a C-RNTI may include the following pieces of information in Table 6 below, for example.

[Table 6]

- Identifier for DCI formats - [1] bit

- Frequency domain resource assignment - $\left\lceil \left\lceil log_2( N_{RB}^{DL,BWP} (N_{RB}^{DL,BWP} + 1)/2) \right\rceil \right\rceil$ bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling the PDSCH, and the CRC may be scrambled by a C-RNTI. DCI format 1_1 in which the CRC is scrambled by a C-RNTI may include the following pieces of information in Table 7 below, for example.

[Table 7]

- Carrier indicator - 0 or 3 bits
- Identifier for DCI formats - [1] bits
- Bandwidth part indicator - 0, 1 or 2 bits
- Frequency domain resource assignment

• For resource allocation type 0, $\left\lceil N_{RB}^{DL,BWP}/P \right\rceil$ bits

• For resource allocation type 1, $\left\lceil log_2( N_{RB}^{DL,BWP} (N_{RB}^{DL,BWP} + 1)/2) \right\rceil$ bits
- Time domain resource assignment -1, 2, 3, or 4 bits

(continued)

| |
| --- |
| - VRB-to-PRB mapping - 0 or 1 bit, only for resource allocation type 1.<br>                  • 0 bit if only resource allocation type 0 is configured;<br>                  • 1 bit otherwise.<br>- Physical resource block (PRB) bundling size indicator - 0 or 1 bit<br>- Rate matching indicator - 0, 1, or 2 bits<br>- Zero power (ZP) channel state information (CSI)-reference signal (RS) trigger - 0, 1, or 2 bits<br>For transport block 1:<br>- Modulation and coding scheme - 5 bits<br>- New data indicator - 1 bit<br>- Redundancy version - 2 bits<br>For transport block 2:<br>- Modulation and coding scheme - 5 bits<br>- New data indicator - 1 bit<br>- Redundancy version - 2 bits<br>- HARQ process number - 4 bits<br>- Downlink assignment index - 0 or 2 or 4 bits<br>- TPC command for scheduled PUCCH - 2 bits<br>- PUCCH resource indicator - 3 bits<br>- PDSCH-to-HARQ_feedback timing indicator - 3 bits<br>- Antenna ports - 4, 5 or 6 bits<br>- Transmission configuration indication - 0 or 3 bits<br>- SRS request - 2 bits<br>- Code block group (CBG) transmission information - 0, 2, 4, 6, or 8 bits<br>- CBG flushing out information - 0 or 1 bit<br>- DMRS sequence initialization - 1 bit |

[PDCCH: CORESET, REG, CCE, and Search Space]

Hereinafter, a downlink control channel in a 5G communication system will be described in more detail with reference to the accompanying drawings.

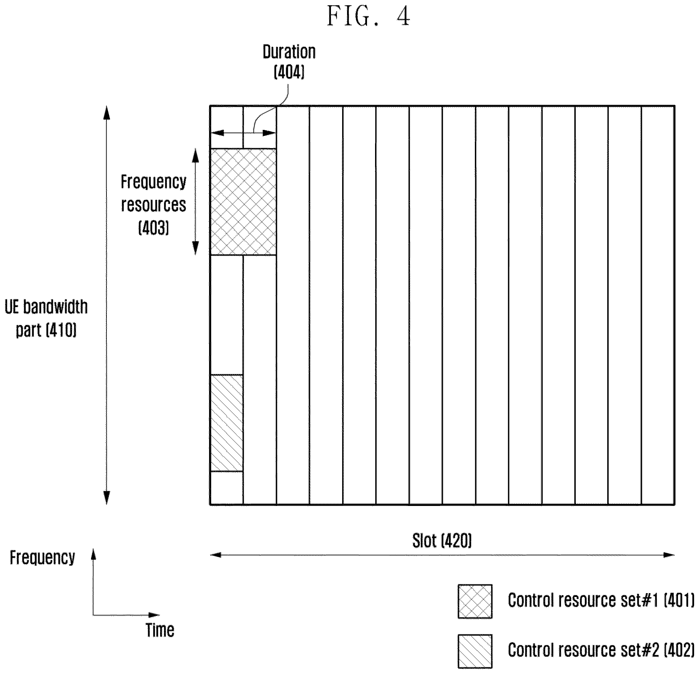

FIG. 4 illustrates an example of a control resource set (CORESET) used to transmit a downlink control channel in a 5G wireless communication system. FIG. 4 illustrates an example in which a UE bandwidth part 410 is configured along the frequency axis, and two control resource sets (control resource set #1 420 and control resource set #2 401) are configured within one slot 402 along the time axis. The control resource sets 401 and 402 may be configured in a specific frequency resource 410 within the entire UE bandwidth part 403 along the frequency axis. One or multiple OFDM symbols may be configured along the time axis, and this may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G described above may be configured for a UE by a base station through upper layer signaling (for example, system information, master information block (MIB), radio resource control (RRC) signaling). The description that a control resource set is configured for a UE means that information such as a control resource set identity, the control resource set's frequency location, and the control resource set's symbol duration is provided. For example, the control resource set may include the following pieces of information: given in Table 8 below.

[Table 8]

```
ControlResourceSet ::=                                      SEQUENCE {
    -- Corresponds to L1 parameter 'CORESET-ID'
    controlResourceSetId                                    ControlResourceSetId,
    (control resource set identity))
    frequencyDomainResources                               BIT STRING (SIZE (45)),
    (frequency domain resource allocation information)
    duration                                    INTEGER (1..maxCoReSetDuration),
    (time domain resource allocation information)
    cce-REG-MappingType                                     CHOICE {
    (CCE-to-REG mapping type)
        interleaved                             SEQUENCE {
        reg-BundleSize                          ENUMERATED {n2, n3, n6},
            (REG bundle size)
        precoderGranularity                     ENUMERATED  {sameAsREG-
bundle, allContiguousRBs},
        interleaverSize                         ENUMERATED  {n2,  n3,  n6}


    (interleaver size)
        shiftIndex
INTEGER(0..maxNrofPhysicalResourceBlocks-1)
OPTIONAL
        (interleaver shift)
```

```
    },
    nonInterleaved                                          NULL
    },
    tci-StatesPDCCH                             SEQUENCE(SIZE    (1..maxNrofTCI-
StatesPDCCH)) OF TCI-StateId                                 OPTIONAL,
    (QCL configuration information)
    tci-PresentInDCI                            ENUMERATED {enabled}
                                                            OPTIONAL,     --
Need S
    }
```

In Table 8, tci-StatesPDCCH (simply referred to as transmission configuration indication (TCI) state) configuration information may include information of one or multiple synchronization signal (SS)/physical broadcast channel (PBCH) block index or channel state information reference signal (CSI-RS) index, which is quasi-co-located with a DMRS transmitted in a corresponding control resource set.

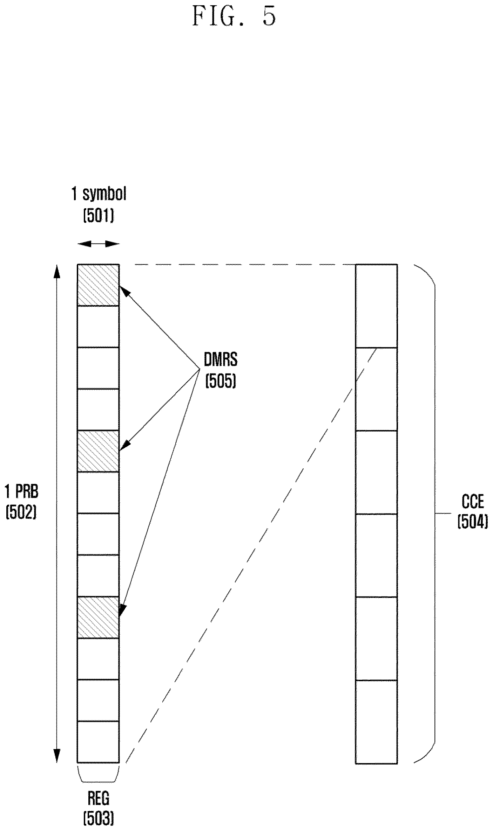

FIG. 5 illustrates an example of a basic unit of time and frequency resources constituting a downlink control channel available in 5G. According to FIG. 5, the basic unit of time and frequency resources constituting a control channel may be referred to as a resource element group (REG) 503, and the REG 503 may be defined by one OFDM symbol %n along the time axis and one physical resource block (PRB) 502 (that is, 12 subcarriers) along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while having no information regarding the downlink control channel, and a search space indicating a set of CCEs has thus been defined for blind decoding. The search space is a set of downlink control channel candidates including CCEs which the UE needs to attempt to decode at a given AL. Since 1, 2, 4, 8, or 16 CCEs constitute a bundle at various ALs, the UE may have multiple search spaces. A search space set may be defined as a set of search spaces at all configured ALs.

Search spaces may be classified into common search spaces and UE-specific search spaces. A group of UEs or all UEs may search a common search space of the PDCCH in order to receive cell-common control information such as a paging message or dynamic scheduling regarding system information. For example, PDSCH scheduling allocation information for transmitting an SIB including a cell operator information or the like may be received by searching the common search space of the PDCCH. In the case of a common search space, a group of UEs or all UEs need to receive the PDCCH, and the same may thus be defined as a pre-promised set of CCEs. Scheduling allocation information regarding a UE-specific PDSCH or PUSCH may be received by investigating the UE-specific search space of the PDCCH. The UE-specific search space may be defined UE-specifically as a function of various system parameters and the identity of the UE.

In 5G, a parameter regarding a search parameter regarding a PDCCH may be configured for the UE by the base station through upper layer signaling (for example, SIB, MIB, RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the control resource set may include the following pieces of information: given in Table 9 below.

[Table 9]

| SearchSpace ::= | | SEQUENCE { |
|---|---|---|
| -- Identity of the search space. SearchSpaceId = 0 identifies the SearchSpace configured via PBCH (MIB) or ServingCellConfigCommon. | | |
| searchSpaceId | | |
| SearchSpaceId, | | |
| (search space identity) | | |
| controlResourceSetId | | ControlResourceSetId, |
| (control resource set identity) | | |
| monitoringSlotPeriodicityAndOffset | CHOICE { | |
| (monitoring slot level perodicity) | | |
| sl1 | | NULL, |
| sl2 | | INTEGER (0..1), |
| sl4 | | INTEGER (0..3), |
| sl5 | | INTEGER (0..4), |
| sl8 | | INTEGER (0..7), |
| sl10 | | INTEGER (0..9), |
| sl16 | | INTEGER (0..15), |
| sl20 | | INTEGER (0..19) |
| } | | OPTIONAL, |
| duration(monitoring duration) | INTEGER (2..2559) | |
| monitoringSymbolsWithinSlot | | BIT STRING (SIZE (14)) OPTIONAL, |
| (monitoring symbols within slot) | | |

```
            nrofCandidates                              SEQUENCE {
  (number of PDCCH candidate groups for each aggregation level)
                aggregationLevel1                       ENUMERATED {n0, n1, n2, n3, n4,
n5, n6, n8},
                aggregationLevel2                       ENUMERATED {n0, n1, n2, n3, n4,
n5, n6, n8},
                aggregationLevel4                       ENUMERATED {n0, n1, n2, n3, n4,
n5, n6, n8},
                aggregationLevel8                       ENUMERATED {n0, n1, n2, n3, n4,
n5, n6, n8},
                aggregationLevel16                              ENUMERATED {n0, n1,
n2, n3, n4, n5, n6, n8}
            },
            searchSpaceType                 CHOICE {
            (search space type)
                -- Configures this search space as common search space (CSS) and DCI formats
to monitor.
            common                          SEQUENCE {
            (common search space)
                }
            ue-Specific                     SEQUENCE {
            (UE-specific search space)
                -- Indicates whether the UE monitors in this USS for DCI formats 0-0 and 1-0 or for formats
0-1 and 1-1.
                formats                              ENUMERATED   {formats0-0-And-1-
0, formats0-1-And-1-1},
                ...
            }
```

According to configuration information, the base station may configure one or multiple search space sets for the UE. According to an embodiment, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the example given below is not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the example given below is not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted

- System information RNTI (SI-RNTI): used to schedule a PDSCH in which system information is transmitted.

Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS

The DCI formats enumerated above may follow the definitions given in Table 10 below, for example.

[Table 10]

| DCI format | Usage |
| --- | --- |
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

L: aggregation level

- $n_{CI}$: carrier index
- $N_{CCE,p}$: total number of CCEs existing in control resource set $p$
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} - 1$: PDCCH candidate index at aggregation level L
- $i = 0, ..., L - 1$
- $Y_{p,n_{s,f}^{\mu}} = \left( A_p \cdot Y_{p,n_{s,f}^{\mu}-1} \right) mod\ D$ , $Y_{p,-1} = n_{RNTI} \neq 0$ , $A_p = 39827$ *for pmod3 = 0* , $A_p = 39829$ *for pmod*3 = 1 , $A_p = 39839$ *for pmod3 = 2, D = 65537*
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 9), and the group of search space sets monitored by the UE at each timepoint may differ. For example, if search space set #1 is configured at by X-slot cycle, if search space set #2 is configured at by Y-slot cycle, and if X and Y are different, the UE may monitor search space set #1 and search space set #2 both in a specific slot, and may monitor one of search space set #1 and search space set #2 both in another specific slot.

[PDCCH: BD/CCE limit]

If there are multiple search space sets configured for a UE, the following conditions may be considered in connection with a method for determining a search space set to be monitored by the UE.

If the value of "monitoringCapabilityConfig-r16" (upper layer signaling) has been configured to be "r15monitoringcapability" for the UE, the UE defines maximum values regarding the number of PDCCH candidates that can be monitored and the number of CCEs constituting the entire search space (as used herein, the entire search space refers to the entire CCE set corresponding to a union domain of multiple search space sets) with regard to each slot. If the value of "monitoringCapabilityConfig-r16" has been configured to be "r16monitoringcapability", the UE defines maximum values regarding the number of PDCCH candidates that can be monitored and the number of CCEs constituting the entire search space (as used herein, the entire search space refers to the entire CCE set corresponding to a union domain of multiple search space sets) with regard to each span.

[Condition 1: maximum number of PDCCH candidates limited]

According to the above-mentioned upper layer signaling configuration value, the maximum number $M^{\mu}$ of PDCCH candidates that the UE can monitor may follow Table 11 given below if the same is defined with reference to a slot in a cell configured to have a subcarrier spacing of $15 \cdot 2^{\mu}$ kHz, and may follow Table 12 given below if the same is defined with reference to a span.

[Table 11]

| $\mu$ | Maximum number of PDCCH candidates per slot and per serving cell ($M^{\mu}$) |
|---|---|
| 0 | 44 |
| 1 | 36 |
| 2 | 22 |
| 3 | 20 |

[Table 12]

| | Maximum number $M^\mu$ of monitored PDCCH candidates per span for combination (X, Y) and per serving cell | | |
|---|---|---|---|
| $\mu$ | (2,2) | (4,3) | (7,3) |
| 0 | 14 | 28 | 44 |
| 1 | 12 | 24 | 36 |

[Condition 2: maximum number of CCEs limited]

According to the above-mentioned upper layer signaling configuration value, the maximum number $C^\mu$ of CCEs constituting the entire search space (as used herein, the entire search space refers to the entire CCE set corresponding to a union domain of multiple search space sets) may follow Table 13 given below if the same is defined with reference to a slot in a cell configured to have a subcarrier spacing of $15 \cdot 2^\mu$ kHz, and may follow Table 14 given below if the same is defined with reference to a span.

[Table 13]

| $\mu$ | Maximum number of non-overlapped CCEs per slot and per serving cell ($C^\mu$) |
|---|---|
| 0 | 56 |
| 1 | 56 |
| 2 | 48 |
| 3 | 32 |

[Table 14]

| | Maximum number $C^\mu$ of non-overlapped CCEs per span for combination (X,Y) and per serving cell | | |
|---|---|---|---|
| $\mu$ | (2,2) | (4,3) | (7,3) |
| 0 | 18 | 36 | 56 |
| 1 | 18 | 36 | 56 |

For the sake of descriptive convenience, a situation satisfying both conditions 1 and 2 above at a specific timepoint will be defined as "condition A". Therefore, the description that condition A is not satisfied may mean that at least one of conditions 1 and 2 above is not satisfied.

[PDCCH: Overbooking]

According to the configuration of search space sets of the base station, a case in which condition A is not satisfied may occur at a specific timepoint. If condition A is not satisfied at a specific timepoint, the UE may select and monitor only some of search space sets configured to satisfy condition A at the corresponding timepoint, and the base station may transmit a PDCCH to the selected search space set.

A method for selecting some search spaces from all configured search space sets may follow methods given below.

If condition A regarding a PDCCH fails to be satisfied at a specific timepoint (slot), the UE (or the base station) may preferentially select a search space set having a search space type configured as a common search space, among search space sets existing at the corresponding timepoint, over a search space set configured as a UE-specific search space.

If all search space sets configured as common search spaces have been selected (that is, if condition A is satisfied even after all search spaces configured as common search spaces have been selected), the UE (or the bae station) may select search space sets configured as UE-specific search spaces. If there are multiple search space sets configured as UE-specific search spaces, a search space set having a lower search space set index may have a higher priority. UE-specific search space sets may be selected as long as condition A is satisfied, in consideration of the priority.

[Regarding rate matching/puncturing]

Hereinafter, a rate matching operation and a puncturing operation will be described in detail.
If time and frequency resource A to transmit symbol sequence A overlaps time and frequency resource B, a rate matching or puncturing operation may be considered as an operation of transmitting/receiving channel A in consideration of resource C (region in which resource A and resource B overlap). Specific operations may follow the following description.

Rate matching operation

- The base station may transmit channel A after mapping the same only to remaining resource domains other than resource C (area overlapping resource B) among the entire resource A which is to be used to transmit symbol sequence A to the UE. For example, assuming that symbol sequence A is configured as {symbol#1, symbol#2, symbol#3, symbol4}, resource A is {resource#1, resource#2, resource#3, resource#4}, and resource B is {resource#3, resource#5}, the base station may send symbol sequence A after successively mapping the same to remaining resources {resource#1, resource#2, resource#4} other than { resource#3} (corresponding to resource C) among resource A. Consequently, the base station may transmit symbol sequence {symbol#1, symbol#2, symbol#3} after mapping the same to {resource#1, resource#2, resource#4}, respectively.

The UE may assess resource A and resource B from scheduling information regarding symbol sequence A from the base station, thereby assessing resource C (region in which resource A and resource B overlap). The UE may receive symbol sequence A based on an assumption that symbol sequence A has been mapped and transmitted in the remaining area other than resource C among the entire resource A. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may receive symbol sequence A based on an assumption that the same has been successively mapped to remaining resources { resource# 1, resource#2, resource#4} other than {resource#3} (corresponding to resource C) among resource A. Consequently, the UE may perform a series of following receiving operations based on an assumption that symbol sequence {symbol# 1, symbol#2, symbol#3} has been transmitted after being mapped to {resource#1, resource#2, resource#4}, respectively.

Puncturing operation

If there is resource C (region overlapping resource B) among the entire resource A which is to be used to transmit symbol sequence A to the UE, the base station may map symbol sequence A to the entire resource A, but may not perform transmission in the resource area corresponding to resource C, and may perform transmission with regard to only the remaining resource area other than resource C among resource A. For example, assuming that symbol sequence A is configured as {symbol#1, symbol#2, symbol#3, symbol4}, resource A is {resource#1, resource#2, resource#3, resource#4}, and resource B is {resource#3, resource#5}, the base station may map symbol sequence {symbol#1, symbol#2, symbol#3, symbol#4} to resource A {resource#1, resource#2, resource#3, resource#4}, respectively, may transmit only symbol sequence {symbol#1, symbol#2, symbol#4} corresponding to remaining resources {resource#1, resource#2, resource#4} other than {resource#3} (corresponding to resource C) among resource A, and may not transmit {symbol#3} mapped to {resource#3 } (corresponding to resource C). Consequently, the base station may transmit symbol sequence {symbol# 1, symbol#2, symbol#4} after mapping the same to {resource#1, resource#2, resource#4}, respectively.
The UE may assess resource A and resource B from scheduling information regarding symbol sequence A from the base station, thereby assessing resource C (region in which resource A and resource B overlap). The UE may receive symbol sequence A based on an assumption that symbol sequence A has been mapped to the entire resource A but transmitted only in the remaining area other than resource C among the resource area A. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may assume that symbol sequence A {symbol#1, symbol#2, symbol#3, symbol#4} is mapped to resource A {resource#1, resource#2, resource#3, resource#4}, respectively, but {symbol#3} mapped to {resource#3} (corresponding to resource C) is not transmitted, and based on the assumption that symbol sequence {symbol# 1, symbol#2, symbol#4} corresponding to remaining resources {resource#1, resource#2, resource#4} other than {resource#3} (corresponding to resource C) among resource A has been mapped and transmitted, the UE may receive the same. Consequently, the UE may perform a series of following receiving operations based on an assumption that symbol sequence {symbol# 1, symbol#2, symbol#4} has been transmitted after being mapped to {resource#1, resource#2, resource#4}, respectively.

Hereinafter, a method for configuring a rate matching resource for the purpose of rate matching in a 5G communication system will be described. Rate matching refers to adjusting the size of a signal in consideration of the amount of resources that can be used to transmit the signal. For example, data channel rate matching may mean that a data channel is not mapped and transmitted with regard to specific time and frequency resource domains, and the size of data is adjusted accordingly.

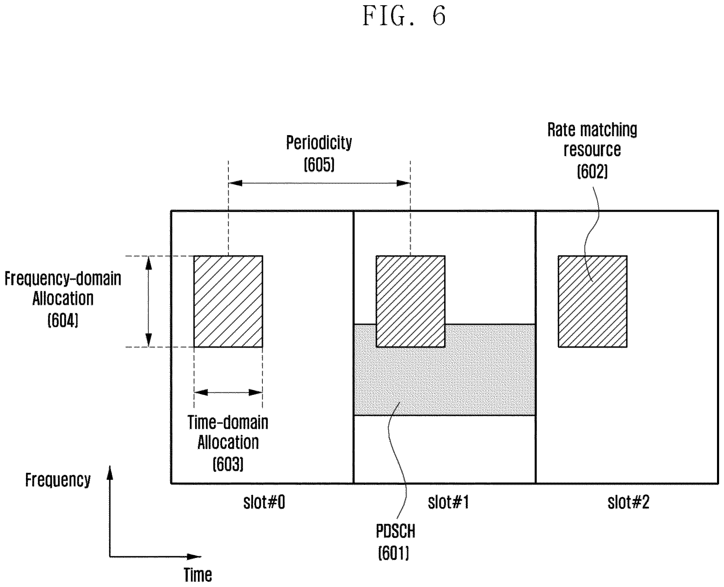

FIG. 6 illustrates a diagram for explaining a method in which a base station and a UE transmit/receive data in consideration of a downlink data channel and a rate matching resource in a wireless communication system according to an embodiment of the disclosure.

FIG. 6 illustrates a PDSCH 601 and a rate matching resource 602. The base station may configure one or multiple rate matching resources 602 for the UE through upper layer signaling (for example, RRC signaling). Rate matching resource 602 configuration information may include time-domain resource allocation information 603, frequency-domain resource allocation information 604, and periodicity information 605. A bitmap corresponding to the frequency-domain resource allocation information 604 will hereinafter be referred to as "first bitmap", a bitmap corresponding to the time-domain resource allocation information 603 will be referred to as "second bitmap", and a bitmap corresponding to the periodicity information 605 will be referred to as "third bitmap". If all or some of time and frequency resources of the scheduled PDSCH 601 overlap a configured rate matching resource 602, the base station may rate-match and transmit the PDSCH 602 in a rate matching resource 601 part, and the UE may perform reception and decoding after assuming that the PDSCH 602 has been rate-matched in a rate matching resource 601 part.

The base station may dynamically notify the UE, through DCI, of whether the PDSCH will be rate-matched in the configured rate matching resource part through an additional configuration (corresponding to "rate matching indicator" inside DCI format described above). Specifically, the base station may select some from the configured rate matching resources and group them into a rate matching resource group, and may indicate, to the UE, whether the PDSCH is rate-matched with regard to each rate matching resource group through DCI by using a bitmap type. For example, if four rate matching resources RMR#1, RMR#2, RMR#3, and RMR#4 are configured, the base station may configure a rate matching groups RMG#1={RMR#1, RMR#2}, RMG#2={RMR#3, RMR#4}, and may indicate, to the UE, whether rate matching occurs in RMG#1 and RMG#2, respectively, through a bitmap by using two bits inside the DCI field. For example, "1" may mean that rate matching is to be conducted, and "0" may mean that rate matching is not to be conducted.

5G supports granularity of "RB symbol level" and "RE level" as a method for configuring the above-described rate matching resources for a UE. More specifically, the following configuration method may be followed.

RB symbol level

The UE may have a maximum of four RateMatchPatterns configured per each bandwidth part through upper layer signaling, and one RateMatchPattern may include the following contents.

- may include, in connection with a reserved resource inside a bandwidth part, a resource having time and frequency resource domains of the corresponding reserved resource configured as a combination of an RB-level bitmap and a symbol-level bitmap in the frequency domain. The reserved resource may span one or two slots. A time domain pattern (periodicityAndPattern) may be additionally configured wherein time and frequency domains including respective RB-level and symbol-level bitmap pairs are repeated.

may include a resource area corresponding to a time domain pattern configured by time and frequency domain resource areas configured by a control resource set inside a bandwidth part and a search space configuration in which corresponding resource areas are repeated.

RE level

The UE may have the following contents configured through upper layer signaling.

- configuration information (lte-CRS- ToMatchAround) regarding a RE corresponding to a LTE CRS (Cell-specific Reference Signal or common reference signal) pattern, which may include LTE CRS's port number (nrofCRS-Ports) and LTE-CRS-vshift(s) value (v-shift), location information (carrierFreqDL) of a center subcarrier of a LTE carrier from a reference frequency point (for example, reference point A), the LTE carrier's bandwidth size (carrierBandwidthDL) information, subframe configuration information (mbsfn-SubframConfigList) corresponding to a multicast-broadcast single-frequency network (MBSFN), and the like. The UE may determine the position of the CRS inside the NR slot corresponding to the LTE subframe, based on the above-mentioned pieces of information.

- may include configuration information regarding a resource set corresponding to one or multiple zero power (ZP) CSI-RSs inside a bandwidth part.

[Regarding LTE CRS rate match]

Next, a rate matching process regarding the above-mentioned LTE CRS will be described in detail. For coexistence between long term evolution (LTE) and new RAT (NR) (LTE-NR coexistence), NR provides an NR UE with a function for configuring the pattern of cell-specific reference signal (CRS) of LTE. More specifically, the CRS pattern may be provided by RRC signaling including at least one parameter inside ServingCellConfig IE (information element) or ServingCellConfigCommon IE. Examples of the parameter may include lte-CRS-ToMatchAround, lte-CRS-PatternList1-r16, lte-CRS-PatternList2-r16, crs-RateMatch-PerCORESETPoolIndex-r16, and the like.

Rel-15 NR provides a function by which one CRS pattern can be configured per serving cell through parameter lte-CRS-ToMatchAround. In Rel-16 NR, the above function has been expanded such that multiple CRS patterns can be configured per serving cell. More specifically, a UE having a single-TRP (transmission and reception point) configuration may now have one CRS pattern configured per one LTE carrier, and a UE having a multi-TRP configuration may now have two CRS patterns configured per one LTE carrier. For example, the UE having a single-TRP configuration may have a maximum of three CRS patterns configured per serving cell through parameter lte-CRS-PatternList1-r16. As another example, the UE having a multi-TRP configuration may have a CRS configured for each TRP. That is, the CRS pattern regarding TRP 1 may be configured through parameter lte-CRS-PatternList1-r16, and the CRS pattern regarding TRP2 may be configured through parameter lte-CRS-PatternList2-r16. If two TRPs are configured as above, whether the CRS patterns of TRP1 and TRP2 are both to be applied to a specific physical downlink shared channel (PDSCH) or only the CRS pattern regarding one TRP is to be applied is determined through parameter crs-RateMatch-PerCORESETPoolIndex-r16, wherein if parameter crs-RateMatch-PerCORESETPoolIndex-r16 is configured "enabled", only the CRS pattern of one TRP is applied, and both CRS patterns of the two TRPs are applied in other cases.

Table 15 shows a ServingCellConfig IE including the CRS patterns, and Table 16 shows a RateMatchPatternLTE-CRS IE including at least one parameter regarding CRS patterns.

[Table 15]

| |
|---|
| ServingCellConfig ::= SEQUENCE { |
| tdd-UL-DL-ConfigurationDedicated TDD-UL-DL-ConfigDedicated OPTIONAL, -- Cond TDD |
| initialDownlinkBWP BWP-DownlinkDedicated OPTIONAL, -- Need M |
| downlinkBWP-ToReleaseList SEQUENCE (SIZE (1..maxNrofBWPs)) OF BWP-Id OPTIONAL, -- Need N |
| downlinkBWP-ToAddModList SEQUENCE (SIZE (1..maxNrofBWPs)) OF BWP-Downlink OPTIONAL, -- Need N |
| firstActiveDownlinkBWP-Id BWP-Id OPTIONAL, -- Cond SyncAndCellAdd |
| bwp-InactivityTimer ENUMERATED {ms2, ms3, ms4, ms5, ms6, ms8, ms10, ms20, ms30, ms40,ms50, ms60, ms80,ms100, ms200,ms300, ms500, ms750, ms1280, ms1920, ms2560, spare10, spare9, spare8, spare7, spare6, spare5, spare4, spare3, spare2, spare1 } OPTIONAL, --Need R |
| defaultDownlinkBWP-Id BWP-Id OPTIONAL, -- Need S |
| uplinkConfig UplinkConfig OPTIONAL, -- Need M |

```
        supplementaryUplink                                       UplinkConfig
OPTIONAL,      -- Need M
        pdcch-ServingCellConfig                 SetupRelease { PDCCH-ServingCellConfig }
OPTIONAL,      -- Need M
        pdsch-ServingCellConfig                 SetupRelease { PDSCH-ServingCellConfig }
OPTIONAL,      -- Need M
        csi-MeasConfig                             SetupRelease { CSI-MeasConfig }
OPTIONAL,      -- Need M
        sCellDeactivationTimer        ENUMERATED {ms20, ms40, ms80, ms160, ms200,
ms240,
                                             ms320,   ms400,   ms480,   ms520,
ms640, ms720,
                                             ms840,   ms1280,   spare2,spare1}
OPTIONAL,      -- Cond ServingCellWithoutPUCCH
        crossCarrierSchedulingConfig                CrossCarrierSchedulingConfig
OPTIONAL,      -- Need M
        tag-Id                          TAG-Id,
        dummy                                      ENUMERATED  {enabled}
OPTIONAL,      -- Need R
        pathlossReferenceLinking                  ENUMERATED  {spCell,  sCell}
OPTIONAL,      -- Cond SCellOnly
        servingCellMO                                      MeasObjectId
OPTIONAL,      -- Cond MeasObject

        ...,
        [[
        lte-CRS-ToMatchAround              SetupRelease { RateMatchPatternLTE-CRS }
OPTIONAL,      -- Need M
        rateMatchPatternToAddModList         SEQUENCE (SIZE (1..maxNrofRateMatchPatterns))
OF RateMatchPattern          OPTIONAL,    -- Need N
        rateMatchPatternToReleaseList         SEQUENCE (SIZE (1..maxNrofRateMatchPatterns))
OF RateMatchPatternId          OPTIONAL,    -- Need N
        downlinkChannelBW-PerSCS-List          SEQUENCE (SIZE (1..maxSCSs)) OF SCS-
SpecificCarrier                     OPTIONAL      -- Need S
        ]],
        [[
        supplementaryUplinkRelease                        ENUMERATED     {true}
OPTIONAL,      -- Need N
```

```
        tdd-UL-DL-ConfigurationDedicated-IAB-MT-r16        TDD-UL-DL-ConfigDedicated-IAB-
MT-r16                                    OPTIONAL,    -- Cond TDD_IAB
        dormantBWP-Config-r16                          SetupRelease  {  DormantBWP-Config-r16  }
OPTIONAL,    -- Need M
        ca-SlotOffset-r16                    CHOICE {
            refSCS15kHz                              INTEGER (-2..2),
            refSCS30KHz                              INTEGER (-5..5),
            refSCS60KHz                              INTEGER (-10..10),
            refSCS120KHz                             INTEGER (-20..20)
        }
OPTIONAL,     -- Cond AsyncCA
        channelAccessConfig-r16                        SetupRelease  {  ChannelAccessConfig-r16  }
OPTIONAL,    -- Need M
        intraCellGuardBandsDL-List-r16                 SEQUENCE   (SIZE   (1..maxSCSs))   OF
IntraCellGuardBandsPerSCS-r16                  OPTIONAL,    -- Need S
        intraCellGuardBandsUL-List-r16                 SEQUENCE   (SIZE   (1..maxSCSs))   OF
IntraCellGuardBandsPerSCS-r16                  OPTIONAL,    -- Need S
        csi-RS-ValidationWith-DCI-r16                                ENUMERATED    {enabled}
OPTIONAL,    -- Need R
        lte-CRS-PatternList1-r16                       SetupRelease  {  LTE-CRS-PatternList-r16  }
OPTIONAL,    -- Need M
        lte-CRS-PatternList2-r16                       SetupRelease  {  LTE-CRS-PatternList-r16  }
OPTIONAL,    -- Need M
        crs-RateMatch-PerCORESETPoolIndex-r16              ENUMERATED        {enabled}
OPTIONAL,    -- Need R
        enableTwoDefaultTCI-States-r16                      ENUMERATED    {enabled}
OPTIONAL,    -- Need R
        enableDefaultTCI-StatePerCoresetPoolIndex-r16      ENUMERATED        {enabled}
OPTIONAL,    -- Need R
        enableBeamSwitchTiming-r16                          ENUMERATED    {true}
OPTIONAL,    -- Need R
        cbg-TxDiffTBsProcessingType1-r16                    ENUMERATED    {enabled}
OPTIONAL,    -- Need R
        cbg-TxDiffTBsProcessingType2-r16                    ENUMERATED    {enabled}
OPTIONAL    -- Need R
        ]]
    }
```

[Table 16]

[Table 16]

–   *RateMatchPatternLTE-CRS*

The IE *RateMatchPatternLTE-CRS* is used to configure a pattern to rate match around LTE CRS. See TS 38.214 [19], clause 5.1.4.2.

*RateMatchPatternLTE-CRS* information element

```
-- ASN1START
-- TAG-RATEMATCHPATTERNLTE-CRS-START

RateMatchPatternLTE-CRS ::=          SEQUENCE {
    carrierFreqDL                        INTEGER (0..16383),
    carrierBandwidthDL                    ENUMERATED {n6, n15, n25, n50, n75, n100,
spare2, spare1},
    mbsfn-SubframeConfigList                  EUTRA-MBSFN-SubframeConfigList
OPTIONAL,    -- Need M
    nrofCRS-Ports                        ENUMERATED {n1, n2, n4},
    v-Shift                              ENUMERATED {n0, n1, n2, n3, n4, n5}
}


LTE-CRS-PatternList-r16 ::=          SEQUENCE (SIZE (1..maxLTE-CRS-Patterns-r16)) OF
RateMatchPatternLTE-CRS


-- TAG-RATEMATCHPATTERNLTE-CRS-STOP
-- ASN1STOP
```

| *RateMatchPatternLTE-CRS* 필드 descriptions |
|---|
| *carrierBandwidthDL* <br> BW of the LTE carrier in number of PRBs (see TS 38.214 [19], clause 5.1.4.2). |
| *carrierFreqDL* <br> Center of the LTE carrier (see TS 38.214 [19], clause 5.1.4.2). |
| *mbsfn-SubframeConfigList* <br> LTE MBSFN subframe configuration (see TS 38.214 [19], clause 5.1.4.2). |
| *nrofCRS-Ports* <br> Number of LTE CRS antenna port to rate-match around (see TS 38.214 [19], clause 5.1.4.2). |
| *v-Shift* |

> Shifting value v-shift in LTE to rate match around LTE CRS (see TS 38.214 [19], clause 5.1.4.2).

[PDSCH: regarding frequency resource allocation]

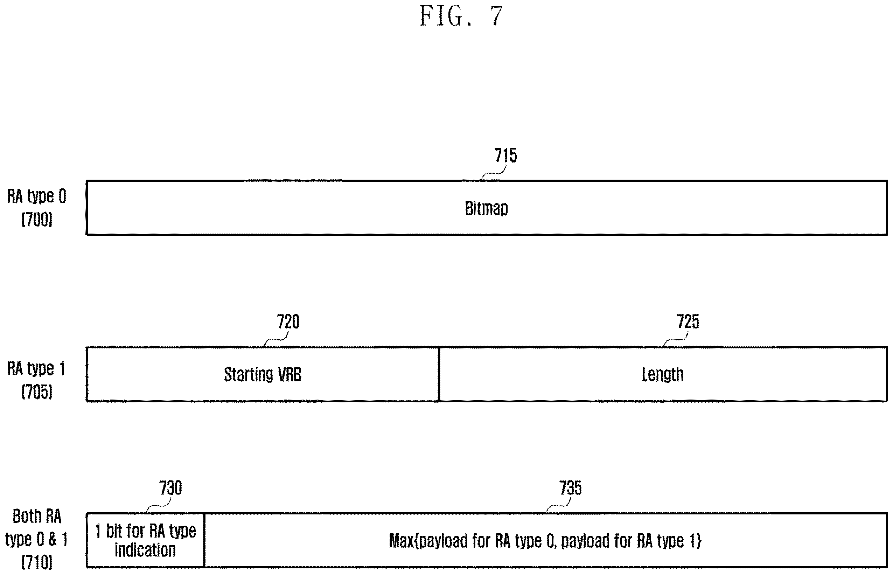

FIG. 7 illustrates an example of frequency domain resource allocation with regard to a physical downlink shared channel (PDSCH) in a wireless communication system according to an embodiment of the disclosure;

FIG. 7 illustrates three frequency domain resource allocation methods of type 0 700, type 1 705, and dynamic switch 710 which can be configured through an upper layer in an NR wireless communication system.

Referring to FIG. 7, in the case 700 in which a UE is configured to use only resource type 0 through upper layer signaling, partial downlink control information (DCI) for allocating a PDSCH to the UE include a bitmap including $N_{RBG}$ bits. The conditions for this will be described later. As used herein, $N_{RBG}$ refers to the number of resource block groups (RBGs) determined according to the BWP size allocated by a BWP indicator and upper layer parameter rbg-Size, as in Table 17 below, and data is transmitted in RBGs indicated as "1" by the bitmap.

[Table 17]

| Bandwidth Part Size | Configuration 1 | Configuration 2 |
|---|---|---|
| 1-36 | 2 | 2 |
| 27-72 | 4 | 8 |
| 73-144 | 8 | 16 |
| 145-275 | 16 | 16 |

In the case 705 in which the UE is configured to use only resource type 1 through upper layer signaling, partial DCI includes frequency domain resource allocation information including $[log_2(N_{RB}^{DL,BWP}(N_{RB}^{DL,BWP}+1)/2]$ bits. The conditions for this will be described again later. The base station may thereby configure a starting VRB 720 and the length 725 of a frequency domain resource allocated continuously therefrom.

In the case 710 in which the UE is configured to use both resource type 0 and resource type 1 through upper layer signaling, partial DCI for allocating a PDSCH to the corresponding UE includes frequency domain resource allocation information including as many bits as the larger value 735 between the payload 715 for configuring resource type 0 and the payload 720 and 725 for configuring resource type 1. The conditions for this will be described again later. One bit may be added to the foremost part (MSB) of the frequency domain resource allocation information inside the DCI. If the bit has the value of"0", use of resource type 0 may be indicated, and if the bit has the value of "1", use of resource type 1 may be indicated.

[PDSCH/PUSCH: regarding time resource allocation]

Hereinafter, a time domain resource allocation method regarding a data channel in a next-generation mobile communication system (5G or NR system) will be described.

A base station may configure a table for time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (corresponding to a slot-unit time interval between a timepoint at which a PDCCH is received and a timepoint at which a PDSCH scheduled by the received PDCCH is transmitted; labeled K0), PDCCH-to-PUSCH slot timing (corresponding to a slot-unit time interval between a timepoint at which a PDCCH is received and a timepoint at which a PUSCH scheduled by the received PDCCH is transmitted; labeled K2), information regarding the location and length of the start symbol by which a PDSCH or PUSCH is scheduled inside a slot, the mapping type of a PDSCH or PUSCH, and the like. For example, information such as in Table 18 or Table 19 below may be transmitted from the base station to the UE.

[Table 18]

```
PDSCH-TimeDomainResourceAllocationList ::=   SEQUENCE (SIZE(1..maxNrofDL-Allocations))
OF PDSCH-TimeDomainResourceAllocation


PDSCH-TimeDomainResourceAllocation ::=   SEQUENCE {
    k0                              INTEGER(0..32)
OPTIONAL,      -- Need S
      mappingType                       ENUMERATED {typeA, typeB},
      startSymbolAndLength              INTEGER (0..127)
}
```

[Table 19]

```
PUSCH-TimeDomainResourceAllocationList ::=   SEQUENCE (SIZE(1..maxNrofUL-Allocations))
OF PUSCH-TimeDomainResourceAllocation


PUSCH-TimeDomainResourceAllocation ::=   SEQUENCE {
    k2                              INTEGER(0..32)          OPTIONAL,      --
Need S
      mappingType                       ENUMERATED {typeA, typeB},
      startSymbolAndLength              INTEGER (0..127)
}
```

The base station may notify the UF of one of the entries of the table regarding time domain resource allocation information described above through L1 signaling (for example, DCI) (for example, "time domain resource allocation" field in DCI may indicate the same). The UE may acquire time domain resource allocation information regarding a PDSCH or PUSCH, based on the DCI acquired from the base station.

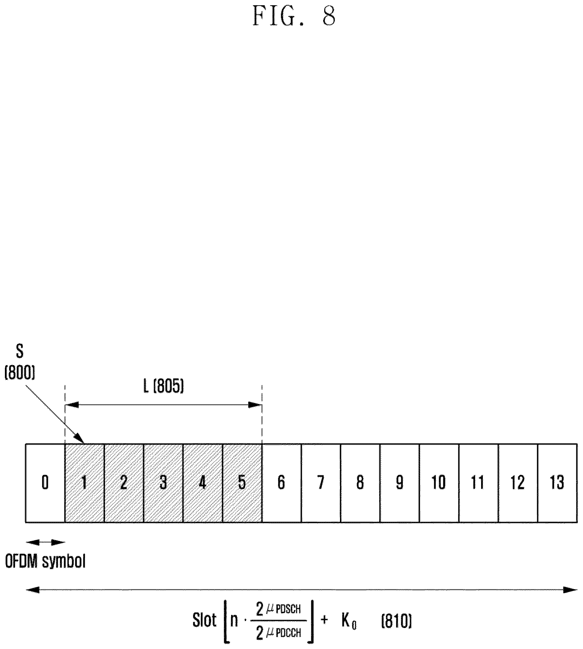

FIG. 8 illustrates an example of time domain resource allocation with regard to a PDSCH in a wireless communication system according to an embodiment of the disclosure.

Referring to FIG. 8, the base station may indicate the time domain location of a PDSCH resource according to the subcarrier spacing (SCS) ($\mu_{PDSCH}$, $\mu_{PDCCH}$) of a data channel and a control channel configured by using an upper layer, the scheduling offset (K0) value, and the OFDM symbol start location 800 and length 805 within one slot dynamically indicated through DCI. The slot in which a PDSCH resource is located is determined as $\left\lfloor n \times \frac{2^{\mu\_PDSCH}}{2^{\mu\_PDSCCH}} \right\rfloor + K_0$ 810.

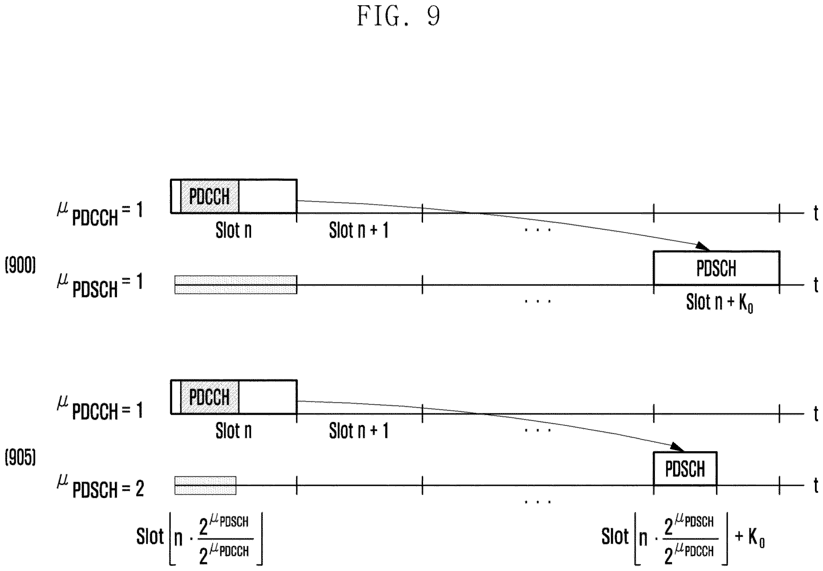

FIG. 9 illustrates an example of time domain resource allocation according to a subcarrier spacing with regard to a data channel and a control channel in a wireless communication system according to an embodiment of the disclosure.

Referring to FIG. 9, if the data channel and the control channel have the same subcarrier spacing 900 ($\mu_{PDSCH}$ =$\mu_{PDCCH}$), the slot number for data and that for control are identical, and the base station and the UE may accordingly generate a scheduling offset in conformity with a predetermined slot offset K0. On the other hand, if the data channel and the control channel have different subcarrier spacings 905 ($\mu_{PDSCH} \neq \mu_{PDCCH}$), the slot number for data and that for control are different, and the base station and the UE may accordingly generate a scheduling offset in conformity with a predetermined slot offset K0 with reference to the subcarrier spacing of the PDCCH.

[PUSCH: regarding transmission scheme]

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 20 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 20 through upper signaling. If PUSCH transmission is operated by a configured grant, parameters applied to the PUSCH transmission are applied through configuredGrantConfig (upper signaling) in Table 20 except for dataScramblingIdentityPUSCH, txConfig, codebookSubset, maxRank, and scaling of UCI-OnPUSCH, which are provided by pusch-Config (upper signaling) in Table 21. If provided with transformPrecoder inside configuredGrantConfig (upper signaling) in Table 20, the UE applies tp-pi2BPSK inside pusch-Config in Table 21 to PUSCH transmission operated by a configured grant.

[Table 20]

| | |
|---|---|
| ConfiguredGrantConfig ::= | SEQUENCE { |
|     frequencyHopping | ENUMERATED {intraSlot, interSlot} |
| OPTIONAL,   -- Need S, | |
|     cg-DMRS-Configuration | DMRS-UplinkConfig, |
|     mcs-Table | ENUMERATED {qam256, qam64LowSE} |
| OPTIONAL,   -- Need S | |
|     mcs-TableTransformPrecoder | ENUMERATED {qam256, qam64LowSE} |
| OPTIONAL,   -- Need S | |
|     uci-OnPUSCH | SetupRelease { CG-UCI-OnPUSCH } |
| OPTIONAL,   -- Need M | |

```
    resourceAllocation                    ENUMERATED { resourceAllocationType0,
resourceAllocationType1, dynamicSwitch },
    rbg-Size                              ENUMERATED {config2}
OPTIONAL,    -- Need S
    powerControlLoopToUse                 ENUMERATED {n0, n1},
    p0-PUSCH-Alpha                        P0-PUSCH-AlphaSetId,
    transformPrecoder                     ENUMERATED {enabled, disabled}
OPTIONAL,    -- Need S
    nrofHARQ-Processes                    INTEGER(1..16),
    repK                                  ENUMERATED {n1, n2, n4, n8},
    repK-RV                               ENUMERATED {s1-0231, s2-0303, s3-
0000}                                     OPTIONAL,    -- Need R
    periodicity                           ENUMERATED {
                                            sym2, sym7, sym1x14, sym2x14,
sym4x14, sym5x14, sym8x14, sym10x14, sym16x14, sym20x14,
                                            sym32x14, sym40x14, sym64x14,
sym80x14, sym128x14, sym160x14, sym256x14, sym320x14, sym512x14,
                                            sym640x14, sym1024x14,
sym1280x14, sym2560x14, sym5120x14,
                                            sym6, sym1x12, sym2x12,
sym4x12, sym5x12, sym8x12, sym10x12, sym16x12, sym20x12, sym32x12,
                                            sym40x12, sym64x12, sym80x12,
sym128x12, sym160x12, sym256x12, sym320x12, sym512x12, sym640x12,
                                            sym1280x12, sym2560x12
    },
    configuredGrantTimer                  INTEGER (1..64)
OPTIONAL,    -- Need R
    rrc-ConfiguredUplinkGrant             SEQUENCE {
        timeDomainOffset                      INTEGER (0..5119),
        timeDomainAllocation                  INTEGER   (0..15),
        frequencyDomainAllocation             BIT STRING (SIZE(18)),
        antennaPort                           INTEGER (0..31),
        dmrs-SeqInitialization                INTEGER (0..1)
OPTIONAL,    -- Need R
        precodingAndNumberOfLayers            INTEGER (0..63),
        srs-ResourceIndicator                 INTEGER (0..15)
OPTIONAL,    -- Need R
```

```
        mcsAndTBS                           INTEGER (0..31),
        frequencyHoppingOffset              INTEGER (1..
maxNrofPhysicalResourceBlocks-1)              OPTIONAL,    -- Need R
        pathlossReferenceIndex              INTEGER (0..maxNrofPUSCH-
PathlossReferenceRSs-1),

        ...
    }
OPTIONAL,      -- Need R
        ...
}
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 21, which is upper signaling, is "codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE perform beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE may not expect scheduling regarding PUSCH transmission through DCI format 0_0 inside a BWP having no configured PUCCH resource including pucch-spatialRelationInfo. If the UE has no configured txConfig inside pusch-Config in Table 21, the UE does not expect scheduling through DCI format 0_1.

[Table 21]

```
PUSCH-Config ::=                      SEQUENCE {
        dataScramblingIdentityPUSCH           INTEGER (0..1023)
OPTIONAL,      -- Need S
        txConfig                              ENUMERATED {codebook,
nonCodebook}                                  OPTIONAL,      -- Need S
```

dmrs-UplinkForPUSCH-MappingTypeA          SetupRelease { DMRS-UplinkConfig }
OPTIONAL,      -- Need M

dmrs-UplinkForPUSCH-MappingTypeB          SetupRelease { DMRS-UplinkConfig }
OPTIONAL,      -- Need M


pusch-PowerControl                        PUSCH-PowerControl
OPTIONAL,      -- Need M

frequencyHopping                          ENUMERATED {intraSlot, interSlot}
OPTIONAL,      -- Need S

frequencyHoppingOffsetLists               SEQUENCE (SIZE (1..4)) OF INTEGER
(1.. maxNrofPhysicalResourceBlocks-1)


OPTIONAL,      -- Need M

resourceAllocation                        ENUMERATED
{ resourceAllocationType0, resourceAllocationType1, dynamicSwitch},

pusch-TimeDomainAllocationList            SetupRelease { PUSCH-
TimeDomainResourceAllocationList }            OPTIONAL,     -- Need M

pusch-AggregationFactor                   ENUMERATED { n2, n4, n8 }
OPTIONAL,      -- Need S

mcs-Table                                 ENUMERATED {qam256,
qam64LowSE}                                    OPTIONAL,     -- Need S

mcs-TableTransformPrecoder                ENUMERATED {qam256, qam64LowSE}
OPTIONAL,      -- Need S

transformPrecoder                         ENUMERATED {enabled, disabled}
OPTIONAL,      -- Need S

codebookSubset                            ENUMERATED
{fullyAndPartialAndNonCoherent, partialAndNonCoherent,nonCoherent}


OPTIONAL, -- Cond codebookBased

maxRank                                   INTEGER (1..4)
OPTIONAL, -- Cond codebookBased

rbg-Size                                  ENUMERATED { config2}
OPTIONAL, -- Need S

uci-OnPUSCH                               SetupRelease { UCI-OnPUSCH}
OPTIONAL, -- Need M

tp-pi2BPSK                                ENUMERATED {enabled}
OPTIONAL, -- Need S

```
    …
}
```

Next, codebook-based PUSCH transmission will be described. The codebook-based PUSCH transmission may be dynamically scheduled through DCI format 0_0 or 0_1, and may be semi-statically operated by a configured grant. If a codebook-based PUSCH is dynamically scheduled through DCI format 0_1 or configured semi-statically by a configured grant, the UE determine a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. Similarly to the above-described codebook-based PUSCH transmission, if the UE is provided with the SRI through DCI, the SRS resource indicated by the corresponding SRI may refer to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAnd-NumberOfLayers (upper signaling). The TPMI is used to indicate a precoder applied to PUSCH transmission. If one SRS resource is configured for the UE, the TPMI may be used to indicate a precoder to be applied in the configured SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (upper signaling). In connection with codebook-based PUSCH transmission, the UE determines a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "noncoherent", based on UE capability reported by the UE to the base station. In addition, if the UE reported "partialAndNonCoherent" as UE capability, the UE does not expect that the value of codebookSubset (upper signaling) will be configured as "fullyAndPartialAndNonCoherent". In addition, if the UE reported "noncoherent" as UE capability, the UE does not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE does not expect that the value of codebookSubset (upper signaling) will be configured as "partialAndNonCoherent".

The UE may have one SRS resource set configured therefor, wherein the value of usage inside SRS-ResourceSet (upper signaling) is "codebook", and one SRS resource may be indicated through an SRI inside the SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical with regard to all SRS resources.

The UE transmits, to the base station, one or multiple SRS resources included in the SRS resource set wherein the value of usage is configured as "codebook" according to upper signaling, and the base station selects one from the SRS resources transmitted by the UE and indicates the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be operated semi-statically configured by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. For example, if the difference between the last received symbol of an aperiodic NZP CSI-RS resource associated with the SRS resource set and the first symbol of aperiodic SRS transmission in the UE is less than 42 symbols, the UE may not expect that information regarding the precoder for SRS transmission will be updated.

If the configured value of resourceType inside SRS-ResourceSet (upper signaling) is "aperiodic", the connected NZP CSI-RS may be indicated by an SRS request which is a field inside DCI format 0_1 or 1_1. If the connected NZP CSI-RS resource is an aperiodic NZP CSI-RS resource, the existence of the connected NZP CSI-RS is indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is positioned in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (upper signaling). With regard to non-codebook-based transmission, the UE does not expect that spatialRelationInfo which is upper signaling regarding the SRS resource and associatedCSI-RS inside SRS-ResourceSet (upper signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI may refer to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

The base station may transmit one NZP-CSI-RS connected to the SRS resource set to the UE, and the UE may calculate the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

[PUSCH: preparation procedure time]

Next, a PUSCH preparation procedure time will be described. If a base station schedules a UE so as to transmit a PUSCH by using DCI format 0_0, 0_1, or 0_2, the UE may require a PUSCH preparation procedure time such that a PUSCH is transmitted by applying a transmission method (SRS resource transmission precoding method, the number of transmission layers, spatial domain transmission filter) indicated through DCI. The PUSCH preparation procedure time is defined in NR in consideration thereof. The PUSCH preparation procedure time of the UE may follow Equation 2 given below.

[Equation 2]

$$T_{proc,2} = \max(( N_2 + d_{2,1} + d_2)( 2048 + 144 ) \kappa 2^{-\mu} T_c + T_{ext} + T_{switch}, d_{2,2} )$$

Each parameter in $T_{proc,2}$ described above in Equation 2 may have the following meaning.

- $N_2$: the number of symbols determined according to UE processing capability 1 or 2 based on the UE's capability and numerology $\mu$. $N_2$ may have a value in Table 22 if UE processing capability 1 is reported according to the UE's capability report, and may have a value in Table 23 if UE processing capability 2 is reported, and if availability of UE processing capability 2 is configured through upper layer signaling.

[Table 22]

| μ | PUSCH preparation time $N_2$ [symbols] |
|---|---|
| 0 | 10 |
| 1 | 12 |
| 2 | 23 |
| 3 | 36 |

[Table 23]

| μ | PUSCH preparation time $N_2$ [symbols] |
|---|---|
| 0 | 5 |
| 1 | 5.5 |
| 2 | 11 for frequency range 1 |

$d_{2,1}$: the number of symbols determined to be 0 if all resource elements of the first OFDM symbol of PUSCH transmission are configured to include only DM-RSs, and to be 1 otherwise.

- k: 64
- μ: follows a value, among $\mu_{DL}$ and $\mu_{UL}$ , which makes $T_{proc,2}$ larger. $\mu_{DL}$ refers to the numerology of a downlink used to transmit a PDCCH including DCI that schedules a PUSCH, and $\mu_{UL}$ refers to the numerology of an uplink used to transmit a PUSCH.

$$T_c: \ 1/(\Delta f_{max} \cdot N_f), \ \Delta f_{max} = 480 \cdot 10^3 Hz, \ N_f = 4096.$$

- $d_{2,2}$: follows a BWP switching time if DCI that schedules a PUSCH indicates BWP switching, and has 0 otherwise.

$d_2$: if OFDM symbols overlap temporally between a PUSCH having a high priority index and a PUCCH having a low priority index, the $d_2$ value of the PUSCH having a high priority index is used. Otherwise, $d_2$ is 0.

- $T_{ext}$: if the UE uses a shared spectrum channel access scheme, the UE may calculate $T_{ext}$ and apply the same to a PUSCH preparation procedure time. Otherwise, $T_{ext}$ is assumed to be 0.

- $T_{switch}$: if an uplink switching spacing has been triggered, $T_{switch}$ is assumed to be the switching spacing time. Otherwise, $T_{switch}$ is assumed to be 0.

The base station and the UE determine that the PUSCH preparation procedure time is insufficient if the first symbol of a PUSCH starts earlier than the first uplink symbol in which a CP starts after $T_{proc,2}$ from the last symbol of a PDCCH including DCI that schedules the PUSCH, in view of the influence of timing advance between the uplink and the downlink and time domain resource mapping information of the PUSCH scheduled through the DCI. Otherwise, the base station and the UE determine that the PUSCH preparation procedure time is sufficient. The UE may transmit the PUSCH only if the PUSCH preparation procedure time is sufficient, and may ignore the DCI that schedules the PUSCH if the PUSCH preparation procedure time is insufficient.

[Regarding CA/DC]

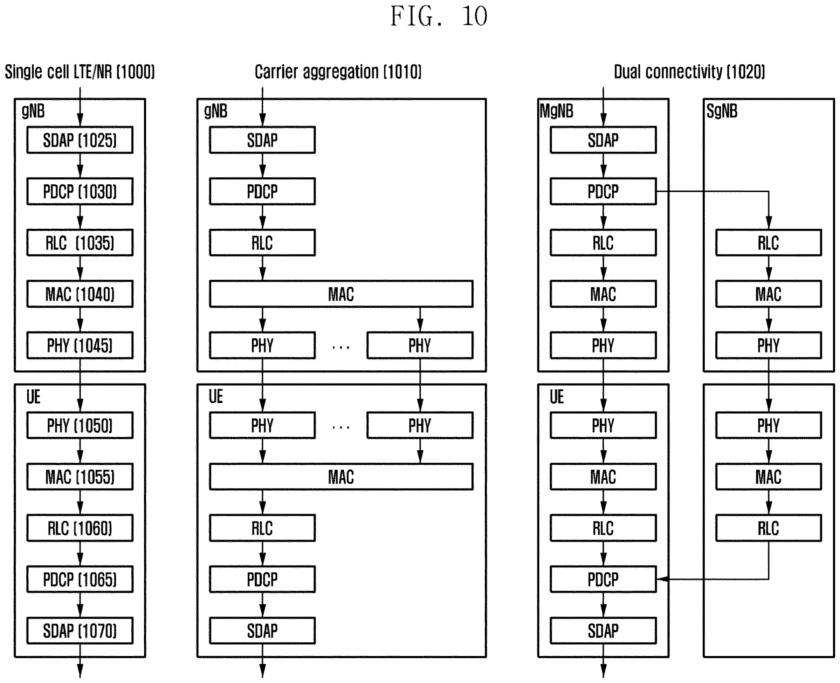

FIG. 10 illustrates radio protocol structures of a base station and a UE in single cell, carrier aggregation, and dual connectivity situations according to an embodiment of the disclosure.

Referring to FIG. 10, the radio protocol of a next-generation mobile communication system includes an NR service data adaptation protocol (SDAP) 1025 or 1070, an NR packet data convergence protocol (PDCP) 1030 or 1065, an NR radio link control (RLC) 1035 or 1060, and an NR medium access controls (MAC) 1040 or 1055, on each of UE and NR base station sides.

The main functions of the NR SDAP 1025 or 1070 may include some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 1030 or 1065 may include some of the following functions: below.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The above-mentioned reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC 1035 or 1060 may include some of the following functions: below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The above-mentioned in-sequence delivery of the NR RLC device may refer to a function of successively delivering RLC SDUs received from the lower layer to the upper layer. The in-sequence delivery of the NR RLC device may include a function of reassembling and delivering multiple RLC SDUs received, into which one original RLC SDU has been segmented, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs. The in-sequence delivery function of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all currently received RLC SDUs to the upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC 1040 or 1055 may be connected to multiple NR RLC layer devices configured in one UE, and major functions of the NR MACs may include some of the following functions:

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layer 1045 or 1050 may perform operations of channel-coding and modulating upper layer data, thereby obtaining OFDM symbols, and delivering the same through a radio channel, or demodulating OFDM symbols received through the radio channel, channeldecoding the same, and delivering the same to the upper layer.

The detailed structure of the radio protocol structure may be variously changed according to the carrier (or cell) operating scheme. As an example, assuming that the base station transmits data to the UE based on a single carrier (or cell), the base station and the UE use a protocol structure having a single structure with regard to each layer, such as 1000. On the other hand, assuming that the base station transmits data to the UE based on carrier aggregation (CA) which uses multiple carriers in a single TRP, the base station and the UE may use a protocol structure which has a single structure up to the RLC, such as 1010, but multiplexes the PHY layer through a MAC layer. As another example, assuming that the base station transmits data to the UE based on dual connectivity (DC) which uses multiple carriers in multiple TRPs, the base station and the UE use a protocol structure which has a single structure up to the RLC, such as 1020, but multiplexes the PHY layer through a MAC layer.

Referring to the above-mentioned descriptions relating to PDCCH and beam configurations, PDCCH repetitive transmission is not currently supported in Rel-15 and Rel-16 NR, and it is thus difficult to achieve required reliability in a scenario which requires high reliability, such as a URLLC. The disclosure provides a method of PDCCH repetitive transmission through multiple transmission points (TRPs) so as to improve PDCCH reception reliability of a terminal. Specific methods will be described in detail in the following embodiments.

Hereinafter, embodiments of the disclosure will be described in detail in conjunction with the accompanying drawings. The contents of the disclosure may be applied to FDD and TDD systems. As used herein, upper signaling (or upper layer signaling") is a method for transferring signals from a base station to a UE by using a downlink data channel of a physical layer, or from the UE to the base station by using an uplink data channel of the physical layer, and may also be referred to as "RRC signaling", "PDCP signaling", or "MAC control element (MAC CE)".

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed, for convenience of description, that NC-JT case refers to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through multiple embodiments, but they are not independent of each other, and one or more embodiments may be applied simultaneously or in combination.

Hereinafter, embodiments of the disclosure will be described in detail in conjunction with the accompanying drawings. In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the following description, embodiments of the disclosure will be described in connection with 5G systems by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The contents of the disclosure may be applied to FDD and TDD systems.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, upper layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through multiple embodiments, but they are not independent of each other, and one or more embodiments may be applied simultaneously or in combination.

[Relating to Multi-PDSCH/PUSCH scheduling]

A new scheduling method has been introduced in Rel-17 new radio (NR) of 3rd Generation Partnership Project (3GPP). The disclosure relates to the new scheduling method. The new scheduling method introduced in Rel-17 NR is "multi-PDSCH scheduling" in which one piece of DCI enables scheduling of one or multiple PDSCHs and "multi-PUSCH scheduling" in which one piece of DCI enables scheduling of one or multiple PUSCHs. In multiple PDSCHs or multiple PUSCHs, each PDSCH or each PUSCH delivers a different transport block (TB). By using the multi-PDSCH scheduling and the multi-PUSCH scheduling, a base station does not schedule multiple pieces of DCI for scheduling of each of multiple PDSCHs or multiple PUSCHs for a terminal, and thus overhead of a downlink control channel may be reduced. However, since one piece of DCI for the multi-PDSCH scheduling and the multi-PUSCH scheduling needs to include scheduling information for multiple PDSCHs or multiple PUSCHs, the size of the DCI may be increased. To this end, when multi-PDSCH scheduling and multi-PUSCH scheduling are configured for the terminal, a method for properly interpreting the DCI by the terminal is required.

Although an example of multi-PDSCH scheduling is described in the disclosure, the method and/or embodiment proposed in the disclosure may also be used in multi-PUSCH scheduling.

The base station may configure multi-PDSCH scheduling for the terminal. For example, the base station may explicitly configure, for the terminal, multi-PDSCH scheduling in a higher layer signal (e.g., an RRC signal). Alternatively, the base station may implicitly configure, for the terminal, multi-PDSCH scheduling in a higher layer signal (e.g., an RRC signal).

For multi-PDSCH scheduling for the terminal, the base station may configure a time domain resource assignment (TDRA) table through a higher layer signal (e.g., an RRC signal) as follows. The TDRA table may include one or multiple rows. The number of the rows may be configured to be up to N_rows, and a unique index may be assigned to each row. The unique index may be one value among 1, 2, ..., N_row. For example, N_row may be 16. One or multiple pieces of scheduling information may be configured for each row. Here, when one piece of scheduling information is configured in one row, the row schedules one PDSCH. That is, when the row is indicated, it may be interpreted that single-PDSCH scheduling is indicated. When multiple pieces of scheduling information are configured in one row, the multiple pieces of scheduling information are used to schedule multiple PDSCHs in order. That is, when the row is indicated, it may be interpreted that multi-PDSCH scheduling is indicated.

The scheduling information may be a K0 value, an SLIV, and a PDSCH mapping type. That is, when multi-PDSCH scheduling is indicated, the row may include multiple K0 values, SLIVs, and PDSCH mapping types. Among them, an N-th K0 value, an N-th SLIV, and an N-th PDSCH mapping type are scheduling information of an N-th PDSCH. For reference, one row may include a maximum of N_pdsch K0 values, SLIVs, and PDSCH mapping types. For example, N_pdsch=8. That is, one row may be for scheduling of up to 8 PDSCHs.

Here, K0 indicates a slot for which a PDSCH is scheduled, and represents a slot difference (offset) between a slot in which a PDCCH transmitting DCI for scheduling of the PDSCH is received and the slot for which the PDSCH is scheduled. For example, if K0=0, a slot in which the PDSCH is received is the same slot as a slot in which the PDCCH is received. Here, the starting and length indicator value (SLIV) indicates an index of a symbol in which the PDSCH starts and the number of consecutive symbols to which the PDSCH is allocated within one slot. The PDSCH mapping type indicates information related to a position of a first DMRS (front-loaded DMRS) of the PDSCH. In the case of PDSCH mapping type A, the first DMRS (front-loaded DMRS) of the PDSCH may be positioned at a third symbol or a fourth symbol of the slot, and in the case of PDSCH mapping type B, the first DMRS (front-loaded DMRS) of the PDSCH may be positioned at a first symbol of symbols in which the PDSCH is scheduled.

When a row of the TDRA table is configured through a higher layer signal, some of a K0 value, SLIV, and PDSCH mapping type may be omitted from scheduling information. In this case, an omitted value may be interpreted as a default value. For example, if K0 is omitted, a value of K0 may be interpreted to be 0. In addition, when the row of the TDRA table is configured, information other than the K0 value, SLIV, and PDSCH mapping type may be additionally configured.

In the following description, it is assumed that multi-PDSCH scheduling is configured for the terminal. The multi-PDSCH scheduling configuration may refer to configuration of multiple pieces of scheduling information in at least one row of the TDRA table. For reference, another row of the TDRA table may be for configuration of one piece of scheduling information. Therefore, even if multi-PDSCH scheduling is configured for the terminal, single-PDSCH scheduling may be indicated or multi-PDSCH scheduling may be indicated to the terminal depending on a row of a TDRA field of the received DCI. In other words, the multi-PDSCH scheduling indication corresponds to a case in which the row of the TDRA table indicated to the terminal from the DCI includes multiple pieces of scheduling information, and the single-PDSCH scheduling indication corresponds to a case in which the row of the TDRA table indicated to the terminal from the DCI includes one piece of scheduling information.

In the case of the single-PDSCH scheduling indication, one PDSCH is scheduled, and scheduling of the one PDSCH requires information, such as a modulation coding scheme (MCS), a new data indicator (NDI), a redundancy version (RV), and an HARQ process number (HPN). To this end, DCI indicating single-PDSCH scheduling is required to include information, such as an MCS, an NDI, an RV, and an HPN of the one PDSCH. More specifically,

- The DCI indicating single-PDSCH scheduling may include one MCS field. An MCS (that is, a modulation scheme and a code rate of a channel code) indicated in the MCS field may be applied to one PDSCH scheduled by the DCI.
- The DCI indicating single-PDSCH scheduling may include a 1-bit NDI field. An NDI value may be acquired from the 1-bit NDI field, and the terminal may determine whether one PDSCH transmits a new transport block or retransmits a previous transport block, based on the NDI value.
- The DCI indicating single-PDSCH scheduling may include a 2-bit RV field. The terminal may acquire an RV value from the 2-bit RV field, and determine a redundancy version of one PDSCH, based on the RV value.
- The DCI for single-PDSCH scheduling may include one HPN field. The one HPN field may be 4 bits. (For reference, if the terminal supports up to 32 HARQ processes, the HPN field may be extended to 5 bits, but an assumption of 4 bits is made for the convenience in description of the disclosure). One HARQ process ID may be indicated through the one HPN field. The one HARQ process ID may be an HARQ process ID of one scheduled PDSCH.

If DCI indicates multi-PDSCH scheduling, multiple PDSCHs are scheduled, and thus each PDSCH needs information, such as an MCS, an NDI, an RV, and an HPN. To this end, the DCI indicating multi-PDSCH scheduling is required to include information, such as an MCS, an NDI, an RV, and an HPN of each scheduled PDSCH. More specifically,

- The DCI indicating multi-PDSCH scheduling may include one MCS field. An MCS (that is, a modulation scheme and a code rate of a channel code) indicated in the MCS field may be equally applied to all PDSCHs scheduled by the DCI. That is, in the DCI for multi-PDSCH scheduling, different PDSCHs may not be scheduled using different MCSs.
- The DCI indicating multi-PDSCH scheduling may include a K-bit NDI field. Here, K may be a largest value in the number of scheduling information included in each row of the TDRA table. For example, when the TDRA table includes two rows, a first row includes 4 pieces of scheduling information, and a second row includes 8 pieces of scheduling information, K may be equal to 8 (K=8). A k-th bit of the K-bit NDI field may indicate an NDI value of a PDSCH corresponding to k-th scheduling information. That is, for a k-th PDSCH, the terminal may acquire an NDI value from the k-th bit of the K-bit NDI field, and determine whether the k-th PDSCH transmits a new transport block or retransmits a previous transport block, based on the NDI value.
- The DCI indicating multi-PDSCH scheduling may include a K-bit RV field. A k-th bit of the K-bit RV field may indicate an RV value of the PDSCH corresponding to the k-th scheduling information. That is, for the k-th PDSCH, the terminal may acquire an RV value from the k-th bit of the K-bit RV field, and determine a redundancy version of the k-th PDSCH, based on the RV value.
- The DCI indicating multi-PDSCH scheduling may include one HPN field. The one HPN field may be 4 bits. (For reference, if the terminal supports up to 32 HARQ processes, the HPN field may be extended to 5 bits, but an assumption of 4 bits is made for the convenience in description of the disclosure). One HARQ process ID may be indicated through the one HPN field. The one HARQ process ID may be an HARQ process ID of a first PDSCH among PDSCHs scheduled by the DCI indicating multi-PDSCH scheduling. Here, the first PDSCH corresponds to first scheduling information. HPNs of the PDSCHs may be sequentially increased by 1. That is, for a second PDSCH (corresponding to second scheduling information), an HPN is a value obtained by increasing the HARQ process ID of the first PDSCH by 1. For reference, if the HARQ process ID exceeds a maximum number of HARQ process IDs *(numOfHARQProcessID)* configured for the terminal, a modulo operation may be performed. In other words, if the HARQ process ID indicated by the DCI is "x", an HARQ process ID of the k-th PDSCH may be determined as follows.

HPN of k-th PDSCH = (x+k-1) modulo *numOfHARQProcessID*

As described above, if DCI indicates single-PDSCH scheduling, the DCI includes a 1-bit NDI field or a 2-bit RV field, and if DCI indicates multi-PDSCH scheduling, the DCI includes a K-bit NDI field or a K-bit RV field. Single-PDSCH scheduling indication or multi-PDSCH scheduling indication may be performed in a TDRA field of DCI (that is, whether single-PDSCH scheduling is indicated or multi-PDSCH scheduling is indicated is determined according to the number of pieces of scheduling information included in an indicated row of the TDRA field). Accordingly, one piece of DCI is required to support both single-PDSCH scheduling and multi-PDSCH scheduling. If a length of the DCI for single-PDSCH scheduling indication and a length of the DCI for multi-PDSCH scheduling indication are different from each other, "0" may be required to be added (padded) to DCI of a shorter length so as to match the lengths.

A process of DCI interpretation by the terminal is as follows. The terminal receives DCI. In this case, it is assumed that a length of the DCI is the same as a longer DCI length among the length of the DCI for single-PDSCH scheduling indication and the length of the DCI for multi-PDSCH scheduling indication. The terminal may identify a position of the TDRA field in the DCI. The position of the TDRA field in the DCI for single-PDSCH scheduling indication and that in the DCI for multi-PDSCH scheduling indication may be the same. The terminal may determine, through the TDRA field, whether the DCI is for single-PDSCH scheduling indication or is for multi-PDSCH scheduling indication. If the number of pieces of scheduling information included in the indicated row of the TDRA field is one, the terminal may determine that the DCI is for single-PDSCH scheduling indication, and if the number of pieces of scheduling information included in the row is two or more, the terminal may determine that the DCI is for multi-PDSCH scheduling indication.

If the terminal determines that the DCI is for single-PDSCH scheduling indication, the DCI may be interpreted according to the determination. That is, the terminal may interpret that an NDI field is 1 bit and an RV field is 2 bits. If the terminal determines that the DCI is for multi-PDSCH scheduling indication, the DCI may be interpreted according to the determination. That is, the terminal may interpret that the NDI field is K bits and the RV field is K bits. For reference, positions of other fields in the DCI may vary according to a length of the NDI field or a length of the RV field. Therefore, according to whether the DCI is for single-PDSCH scheduling indication or for multi-PDSCH scheduling indication, bit lengths of other fields may be the same, but positions of other fields within the DCI may be different.

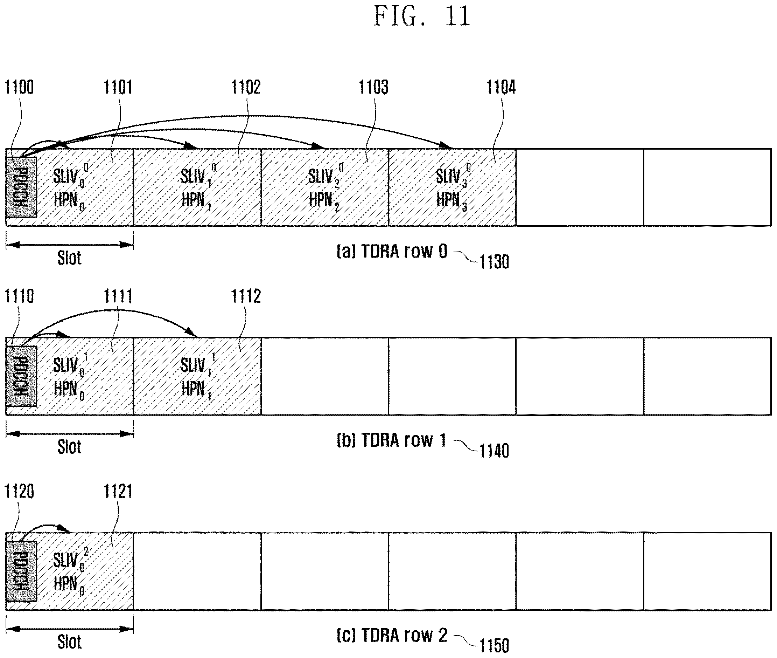

FIG. 11 illustrates a PDSCH scheduling scheme according to the above description.

- A first row (row 0) of a TDRA table includes four pieces of scheduling information (K0 values, SLIVs, and PDSCH mapping types). Here, a first SLIV is referred to as $SLIV^0_0$, a second SLIV is referred to as $SLIV^0_1$, a third SLIV is referred to as $SLIV^0_2$, and a fourth SLIV is referred to as $SLIV^0_3$. Therefore, when the first row (row 0) of the TDRA table is indicated to a terminal, it may be determined that multi-PDSCH scheduling is indicated.
- A second row (row 1) of the TDRA table includes two pieces of scheduling information (K0 values, SLIVs, and PDSCH mapping types). Here, a first SLIV is referred to as $SLIV^1_0$, and a second SLIV is referred to as $SLIV^1_1$. Therefore, when the second row (row 1) of the TDRA table is indicated to the terminal, it may be determined that multi-PDSCH scheduling is indicated.
- A third row (row 2) of the TDRA table includes one piece of scheduling information (a K0 value, an SLIV, and a PDSCH mapping type). Here, an SLIV is referred to as $SLIV^2_0$. Therefore, when the third row (row 2) of the TDRA table is indicated to the terminal, it may be determined that single-PDSCH scheduling is indicated.

1130 in FIG. 11 illustrates a case in which the first row (row 0) of the TDRA table is indicated to the terminal. In DCI received by the terminal in a PDCCH 1100, the first row (row 0) may be indicated in the TDRA field. Accordingly, the terminal may receive four PDSCHs, based on four pieces of scheduling information (K0 values, SLIVs, and PDSCH mapping types) in the first row (row 0). The terminal may determine symbols for receiving a first PDSCH 1101, based on $SLIV^0_0$ that is the first SLIV, determine symbols for receiving a second PDSCH 1102, based on $SLIV^0_1$ that is the second SLIV, determine symbols for receiving a third PDSCH 1103, based on $SLIV^0_2$ that is the third SLIV, and determine symbols for receiving a fourth PDSCH 1104, based on $SLIV^0_3$ that is the fourth SLIV.

Each of the four PDSCHs may have a unique HARQ process ID. That is, the first PDSCH 1101 may have $HPN_0$ as an HARQ process ID, the second PDSCH 1102 may have $HPN_1$ as an HARQ process ID, the third PDSCH 1103 may have $HPN_2$ as an HARQ process ID, and the fourth PDSCH 1104 may have $HPN_3$ as an HARQ process ID. Here, in the DCI, the HARQ process ID of the first PDSCH 1101 may be indicated. For example, in the DCI, $HPN_0=0$ may be indicated as the HARQ process ID of the first PDSCH 1101. In this case, $HPN_1=1$ may be the HARQ process ID of the second PDSCH 1102, $UPN_1=2$ may be the HARQ process ID of the third PDSCH 1103, and $UPN_1=3$ may be the HARQ process ID of the fourth PDSCH 1104.

1140 in FIG. 11 illustrates a case in which the second row (row 1) of the TDRA table is indicated to the terminal. In DCI received by the terminal in a PDCCH 1110, the second row (row 1) may be indicated in the TDRA field. Accordingly, the terminal may receive two PDSCHs, based on two pieces of scheduling information (K0 values, SLIVs, and PDSCH mapping types) in the second row (row 1). The terminal may determine symbols for receiving a first PDSCH 1111, based on $SLIV^1_0$ that is the first SLIV, and determine symbols for receiving a second PDSCH 1112, based on $SLIV^1_1$ that is the second SLIV.

Each of the two PDSCHs may have a unique HARQ process ID. That is, the first PDSCH 1111 may have $HPN_0$ as an HARQ process ID, and the second PDSCH 1112 may have $HPN_1$ as an HARQ process ID. Here, in the DCI, the HARQ process ID of the first PDSCH 1111 may be indicated. For example, in the DCI, $HPN_0=0$ may be indicated as the HARQ process ID of the first PDSCH 1111. In this case, the HARQ process ID of the second PDSCH 1112 may be $HPN_1=1$.

1150 in FIG. 11 illustrates a case in which the third row (row 2) of the TDRA table is indicated to the terminal. In DCI received by the terminal in a PDCCH 1120, the third row (row 2) may be indicated in the TDRA field. Accordingly, the terminal may receive one PDSCH, based on one piece of scheduling information (a K0 value, an SLIV, and a PDSCH mapping type) in the third row (row 2). The terminal may determine symbols for receiving one PDSCH 1121, based on $SLIV^2_0$ which is one SLIV. In the DCI, an HARQ process ID of one PDSCH, that is, $HPN_0$, is indicated. For example, in the DCI, $HPN_0=0$ may be indicated as an HARQ process ID of a first PDSCH 1121.

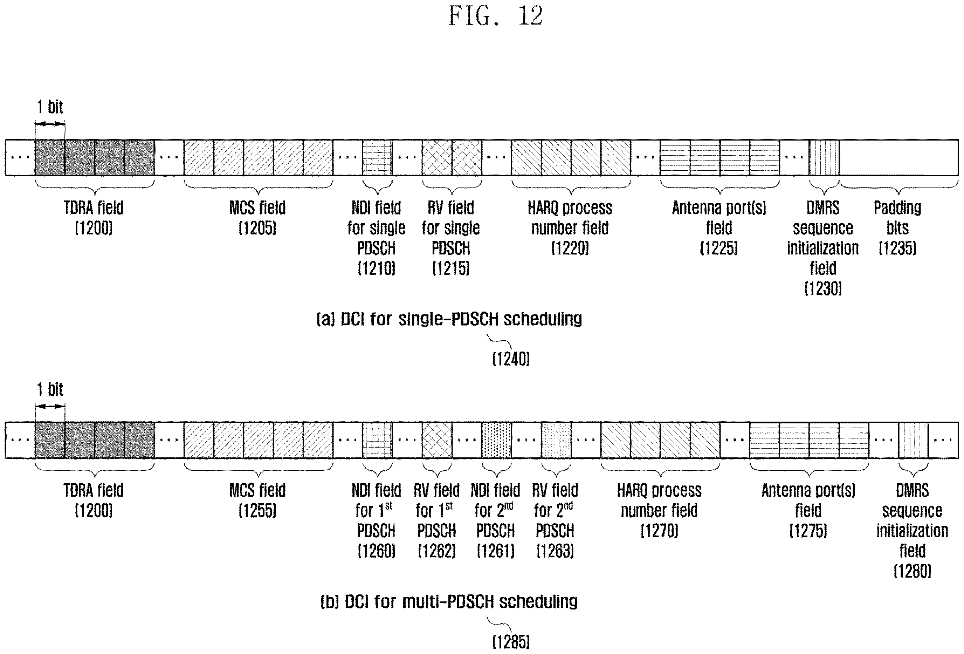

FIG. 12 illustrates DCI for single-PDSCH scheduling and multi-PDSCH scheduling.

As shown in 1240 and 1285 of FIG. 12, a terminal may determine a position of a TDRA field 1200 in received DCI. The position is the same position in single-PDSCH scheduling DCI and multi-PDSCH scheduling DCI. Based on a value of the TDRA field, the terminal may determine whether the received DCI is DCI indicating single-PDSCH scheduling or DCI indicating multi-PDSCH scheduling.

If a row corresponding to a value of the TDRA field of the received DCI includes one piece of scheduling information (a K0 value, an SLIV, and a PDSCH mapping type) (for example, in the case of FIG. 11, the third row (row 2) of the TDRA table), the terminal may interpret the received DCI as single-PDSCH scheduling DCI as in 1240. As in 1240, the single-PDSCH scheduling DCI may include a 5-bit MCS field 1205, a 1-bit NDI field 1210, a 2-bit RV field 1215, and a 4-bit HARQ field 1220. In addition, the single-PDSCH scheduling DCI may include other fields. For example, an antenna port(s) field 1225, a DMRS sequence initialization field 1230, or the like may be included. Further, if the single-PDSCH scheduling DCI is shorter than multi-PDSCH scheduling DCI, padding bits 1235 may be included.

If a row corresponding to a value of the TDRA field of the received DCI includes two or more pieces of scheduling information (K0 values, SLIVs, and PDSCH mapping types) (for example, in the case of FIG. 11, the first row (row 0) or the second row (row 1) of the TDRA table), the terminal may interpret the received DCI as multi-PDSCH scheduling DCI as in 1285. As in 1285, the multi-PDSCH scheduling DCI may include a 5-bit MCS field 1255, K-bit NDI fields 1260 and 1261, K-bit RV fields 1262 and 1263, and a 4-bits HARQ field 1270. In addition, the multi-PDSCH scheduling DCI may include other fields. For example, an antenna port(s) field 1275, a DMRS sequence initialization field 1280, or the like may be included. For reference, an example of DCI in which up to two PDSCHs are scheduled is shown in 1285. Here, the 2-bit NDI fields 1260 and 1261 are shown separately, but may be attached as one 2-bit field. In addition, in 1285, the 2-bit RV fields 1262 and 1263 are shown separately, but may be attached as one 2-bit field.

For reference, referring to 1240 and 1285, it is assumed that a length of the DCI indicating single-PDSCH scheduling is shorter than a length of the DCI indicating multi-PDSCH scheduling, so that padding bits 1235 are added to the single-PDSCH scheduling DCI. If the length of the DCI indicating single-PDSCH scheduling is longer than the length of the DCI indicating multi-PDSCH scheduling, padding bits may be added to the DCI indicating multi-PDSCH scheduling.

Hereinafter, the disclosure assumes that a PDSCH transmits a single codeword unless otherwise specified. If transmission of two codewords is configured for a terminal, fields of DCI are for a first codeword unless otherwise specified.

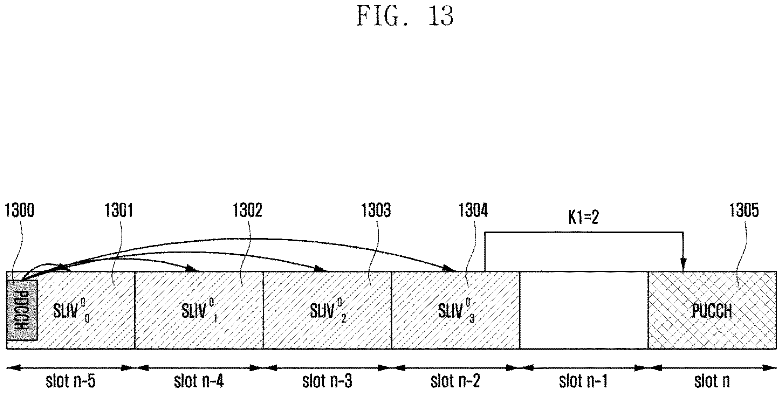

FIG. 13 illustrates a method for transmitting HARQ-ACK of multiple PDSCHs according to an embodiment of the disclosure. Referring to FIG. 13, descriptions are provided for a PUCCH for HARQ-ACK transmission of one or multiple PDSCHs scheduled by DCI when the DCI indicates multi-PDSCH scheduling.

A base station may configure one or multiple K1 value(s) for a terminal. This may be referred to as set K1. DCI indicating multi-PDSCH scheduling may include an indicator indicating one K1 value in the set K1. More specifically, the DCI may include a PDSCH-to-HARQ_feedback timing indicator field having up to 3 bits. The field may indicate one K1 value in the set K1.

The terminal may determine a slot for transmission of HARQ-ACKs of multiple PDSCHs, based on one K1 value and a slot for which the last PDSCH of the multiple PDSCHs is scheduled. For reference, HARQ-ACKs of all PDSCHs scheduled through one piece of DCI may be transmitted through one PUCCH in a slot for transmission of the HARQ-ACK. A slot after K1 slots from a slot for which the last PDSCH is scheduled is a slot for transmission of HARQ-ACKs of multiple PDSCHs. That is, a PUCCH including the HARQ-ACKs of the multiple PDSCHs may be transmitted in the slot after K1 slots from the slot for which the last PDSCH is scheduled.

Referring to FIG. 13, it is assumed that DCI received by the terminal indicates row 0 of the TDRA table as in FIG. 11, and according to row 0 of the TDRA table, a PDSCH has been scheduled in slot n-5, slot n-4, slot n-3, and slot n-2. In addition, it is assumed that the terminal is indicated with 2 as a K1 value. In this case, the terminal may determine, as a slot for transmission of HARQ-ACK, slot n after 2 slots, which is the K1 value, from slot n-2 which is the last slot for which the PDSCH is scheduled. That is, in a PUCCH 1305 in the slot n, the terminal may transmit HARQ-ACK information of a PDSCH 1301 in slot n-5, a PDSCH 1302 in slot n-4, a PDSCH 1303 in slot n-3, and a PDSCH 1304 in slot n-2.

The terminal may monitor a DCI format (e.g., DCI format 1_0, DCI format 1_1, or DCI format 1_2) to receive scheduling of PDSCH reception. The terminal may be configured to monitor one or more of DCI formats (e.g., DCI format 1_0, DCI format 1_1, and DCI format 1_2) in a specific search space. Among the DCI formats, DCI format 1_1 may be used for multi-PDSCH scheduling, but DCI format 1_0 and DCI format 1_2 cannot be used for multi-PDSCH scheduling. More specifically, a TDRA table for PDSCH reception for each DCI format is shown in Tables 24 to 25. The terminal may receive a configuration of four TDRA tables from the base station as follows.

- *pdsch-TimeDomainAllocationList* provided in *PDSCH-ConfigCommon*

  ▪ *PDSCH-ConfigCommon* is included in system information block 1 (SIB1), and thus *pdsch-TimeDomainAllocationList* is a cell-common TDRA table. The *pdsch-TimeDomainAllocationList* may include a maximum of 16 rows, and the rows include a K0 value, an SLIV value, or a PDSCH mapping type. Here, there is one SLIV value, and therefore, *pdsch-TimeDomainAllocationList* cannot be used for multi-PDSCH scheduling.

- *pdsch-TimeDomainAllocationList* provided in *PDSCH-Config*

  ▪ *PDSCH-Config* is included in an RRC parameter of the terminal, and thus *pdsch-TimeDomainAllocationList* is a terminal-specific TDRA table. The *pdsch-TimeDomainAllocationList* may include a maximum of 16 rows, and the rows include a K0 value, an SLIV value, or a PDSCH mapping type. Here, there is one SLIV value, and therefore, *pdsch-TimeDomainAllocationList* cannot be used for multi-PDSCH scheduling.

- *pdsch- TimeDomainAllocationListForMultiPDSCH-r 17* provided in *PDSCH-Config*

▪ *PDSCH-Config* is included in an RRC parameter of the terminal, and thus *pdsch-TimeDomainAllocationList-ForMultiPDSCH-rl 7* is a terminal-specific TDRA table. The *pdsch-TimeDomainAllocationListForMultiPDSCH-r17* may include a maximum of 64 rows, and the rows include a K0 value, an SLIV value, or a PDSCH mapping type. Here, there may be one or multiple K0 values and SLIV values. Therefore, *pdsch-TimeDomainAllocation-ListForMultiPDSCH-r17* can be used for multi-PDSCH scheduling.

• *pdsch-TimeDomainAllocationListForDCI-Format1-2* provided in *PDSCH-Config*

▪ *PDSCH-Config* is included in an RRC parameter of the terminal, and thus *pdsch-TimeDomainAllocationList-ForDCI-Format1-2* is a terminal-specific TDRA table. The *pdsch-TimeDomainAllocationListl-2* may include a maximum of 16 rows, and the rows include a K0 value, an SLIV value, or a PDSCH mapping type. Here, there is one SLIV value, and therefore, *pdsch-TimeDomainAllocationListForDCI-Format1-2* cannot be used for multi-PDSCH scheduling. Further, *pdsch-TimeDomainAllocationListForDCI-Format1-2* is applied only to DCI format 1_2.

Referring to Table 24 and Table 25, when the terminal receives the four configurations for the TDRA table, TDRA tables of DCI format 1_0, DCI format 1_1, and DCI format 1_2 monitored by the terminal for PDSCH reception may be determined as follows.

Table 24 shows the TDRA table of DCI format 1_0 and DCI format 1_1. First, when DCI format 1_0 and DCI format 1_1 are monitored in a common search space of CORESET0, if *"pdsch-TimeDomainAllocationList* provided in *PDSCH-ConfigCommon"* is configured, the TDRA table is determined according to a configuration of *"pdsch-TimeDomainAllocationList* provided in *PDSCH-ConfigCommon",* and if *"pdsch-TimeDomainAllocationList* provided in *PDSCH-ConfigCommon"* is not configured, a default A TDRA table is used. Here, the default A TDRA table is a TDRA table available for the terminal without a separate configuration, and is described in 3GPP standard document TS38.214. When DCI format 1_0 and DCI format 1_1 are monitored in a common search space of a CORESET other than CORESET0 or monitored in a UE-specific search space, if *"pdsch-TimeDomainAllocationListForMultiPDSCH-r17* provided in *PDSCH-Config"* is configured, the TDRA table is determined according to a configuration of *"pdsch-TimeDomainAllocationListForMultiPDSCH-r17* provided in *PDSCH-Config",* if *"pdsch-TimeDomainAllocationListForMultiPDSCH-r17* provided in *PDSCH-Config"* is not configured and *"pdsch-TimeDomainAllocationList* provided in *PDSCH-Config"* is configured, the TDRA table is determined according to a configuration of *"pdsch-TimeDomainAllocationList* provided in *PDSCH-Config",* if *"pdsch-TimeDomainAllocationListForMultiPDSCH-r17* provided in *PDSCH-Config"* and *"pdsch-TimeDomainAllocationList* provided in *PDSCH-Config"* are not configured and *"pdsch-TimeDomainAllocationList* provided in *PDSCH-ConfigCommon"* is configured, the TDRA table is determined according to *"pdsch-TimeDomainAllocationList* provided in *PDSCH-ConfigCommon",* and if *"pdsch-TimeDomainAllocationList* provided in *PDSCH-ConfigCommon"* is not configured, the default A TDRA table is used.

[Table 24]

| RNTI | PDCCH search space | *PDSCH-ConfigCom mon* includes *pdsch-TimeDomain AllocationLi st* | *PDSCH-Config* includes *pdsch-TimeDomainA llocationList* | *PDSCH-Config* includes *pdsch-TimeDomainA llocationListF orMultiPDSC H-r 17* | PDSCH time domain resource allocation to apply |
|---|---|---|---|---|---|
| C-RNTI, MCS-C-RNTI, CS-RNTI | Any common search space associated with CORESET 0 | No | - | - | Default A |
| | | Yes | - | - | *pdsch-TimeDomainAlloc ationList* provided in *PDSCH-ConfigCommon* |
| C-RNTI, MCS-C-RNTI, CS-RNTI | | No | No | - | Default A |
| | | Yes | No | - | *pdsch-TimeDomainAlloc ationList* provided |

(continued)

| RNTI | PDCCH search space | *PDSCH-ConfigCom mon* includes *pdsch-TimeDomain AllocationLi st* | *PDSCH-Config* includes *pdsch-TimeDomainA llocationList* | *PDSCH-Config* includes *pdsch-TimeDomainA llocationListF orMultiPDSC H-r 17* | PDSCH time domain resource allocation to apply |
|---|---|---|---|---|---|
| | Any common search space not associated with CORESET 0 | | | | in *PDSCH-ConfigCommon* |
| | | No/Yes | Yes | - | *pdsch-TimeDomainAlloc ationList* provided in *PDSCH- Config* |
| | UE specific search space | No/Yes | - | Yes | *pdsch-TimeDomainAlloc ationListForMulti PDSCH-r17* provided in *PDSCH-Config* |

Table 25 shows the TDRA table of DCI format 1_2. If *"pdsch-TimeDomainAllocationListForDCI-Format1-2 provided in PDSCH-Config"* is configured, the TDRA table is determined according to a configuration of *"pdsch-Time-DomainAllocationListForDCI-Format1-2 provided in PDSCH-Config"*, if *"pdsch-TimeDomainAllocationListForDCI-Format1-2 provided in PDSCH-Config"* is not configured and *"pdsch-TimeDomainAllocationList provided in PDSCH-Config"* is configured, the TDRA table is determined according to a configuration of *"pdsch-TimeDomainAllocationList provided in PDSCH-Config"*, if *"pdsch-TimeDomainAllocationListForDCI-Format1-2 provided in PDSCH-Config"* and *"pdsch-TimeDomainAllocationList provided in PDSCH-Config"* are not configured and *"pdsch-TimeDomainAllocationList provided in PDSCH ConfigCommon"* is configured, the TDRA table is determined according to a configuration of *"pdsch-TimeDomainAllocationList provided in PDSCH ConfigCommon"*, and if *"pdsch-TimeDomainAllocationList provided in PDSCH ConfigCommon"* is not configured, the default A TDRA table is used.

[Table 25]

| *PDSCH-ConfigCommon* includes *pdsch-TimeDomainAllocat ion List* | *PDSCH-Config* includes *pdsch-TimeDomainAllocat ion List* | *PDSCH-Config* includes *pdsch-TimeDomainAllocat ion ListForDCI-Format1-2* | PDSCH time domain resource allocation to apply |
|---|---|---|---|
| No | No | No | Default A |
| Yes | No | No | *pdsch-TimeDomainAllocationList* provided in *PDSCH-ConfigCommon* |
| No/Yes | Yes | No | *pdsch-TimeDomainAllocationList* provided in *PDSCH-Config* |
| No/Yes | No/Yes | Yes | *pdsch-TimeDomainAllocationList DCI-1-2* provided in *PDSCH-Config* |

Based on Tables 24 and 25, when the terminal receives a configuration of *"pdsch-TimeDomainAllocationList-ForMultiPDSCH-r17 provided in PDSCH-Config"* which is TDRA table configuration information for multi-PDSCH scheduling, the *"pdsch-TimeDomainAllocationListForMultiPDSCH-rl7 provided in PDSCH-Config"* may be applied to DCI format 1_1. However, the *"pdsch-TimeDomainAllocationListForMultiPDSCH-r17 provided in PDSCH-Config"* cannot be applied to DCI format 1_0 or DCI format 1_2. Therefore, DCI format 1_0 and DCI format 1_2 cannot be used for multi-PDSCH scheduling.

The terminal may receive, from the base station, *"pdsch-AggregationFactor* in *pdsch-config"* or *"pdsch-AggregationFactor in sps-Config"* through a higher layer signal as a configuration for PDSCH repetitive reception. If the terminal receives the configuration, PDSCH repetitive reception may be performed according to the configuration. For example, *pdschAggregationFactor* may be configured to be one value among 2, 4, and 8. According to the configuration, a PDSCH may be repeatedly received in consecutive slots, and a reception symbol of the PDSCH in each slot may be determined to have the same SLIV. Further, the same transport block (TB) may be repeatedly received in the consecutive slots.

The *"pdsch AggregationFactor* in *pdsch-config"* may be applied to a PDSCH scheduled in DCI format 1_1 or DCI format 1_2 in which a CRC is scrambled with C-RNTI, MCS-C-RNTI, or CS-RNTI with NDI=1. However, *"pdsch AggregationFactor* in *pdsch-config"* is not applied to DCI format 1_0. In addition, when multi-PDSCH scheduling (*"pdsch-TimeDomainAllocationListForMultiPDSCH-r17* provided in *PDSCH-Config"*) is configured in DCI format 1_1, the *"pdschAggregationFactor* in*pdsch-config"* is not applied to DCI format 1_1. In other words, when multi-PDSCH scheduling (*"pdsch-TimeDomainAllocationListForMultiPDSCH-r17* provided in *PDSCH-Config"*) is configured in DCI format 1_1, *"pdsch-AggregationFactor* in *pdsch-config"* is applied only in DCI format 1_2.

The *"pdsch AggregationFactor* in *sps-Config"* may be applied to a PDSCH scheduled with DCI format 1_1 or DCI format 1_2 in which a CRC is scrambled with CS-RNTI with NDI=1, and a PDSCH scheduled by using *sps-Config* without PDCCH transmission. However, *"pdsch-AggregationFactor* in *sps-Config"* is not applied to DCI format 1_0. In addition, when multi-PDSCH scheduling (*"pdsch-TimeDomainAllocationListForMultiPDSCH-r17* provided in *PDSCH-Config"*) is configured in DCI format 1_1, the *"pdsch-AggregationFactor* in *sps-Config"* is not applied to DCI format 1_1. In other words, when multi-PDSCH scheduling (*"pdsch-TimeDomainAllocationListForMultiPDSCH-r17* provided in *PDSCH-Config"*) is configured in DCI format 1_1, *"pdsch-AggregationFactor* in *sps-Config"* is applied only in DCI format 1_2.

[Relating to Type-1 HARQ-ACK Codebook]

In the NR system, a Type-1 HARQ-ACK codebook is also referred to as a semi-static HARQ-ACK codebook.

The following description corresponds to a situation in which the number of PUCCHs through which a terminal is able to transmit HARQ-ACK information within one time unit (e.g., a slot, a sub-slot, or a mini-slot) is limited to one. Unless otherwise specified, the time unit is described as a slot, but may be extended to a sub-slot, a mini-slot, and the like.

The terminal may receive a semi-static HARQ-ACK codebook configuration from a base station. The configuration may be configured through a higher layer signal (e.g., an RRC signal). The terminal may receive a DCI format from the base station. The terminal may transmit HARQ-ACK information of an SCell dormancy indication, an SPS PDSCH release, or a PDSCH scheduled by the DCI format, in a slot indicated by a value of a PDSCH-to-HARQ_feedback timing indicator field in the DCI format. If the terminal is indicated to transmit multiple pieces of HARQ-ACK information in one slot, the terminal may generate the HARQ-ACK information as an HARQ-ACK codebook according to a predetermined rule and transmit the same through one PUCCH in the slot.

A more specific rule for generating a semi-static HARQ-ACK codebook is as follows.

The terminal may report, as NACK, an HARQ-ACK information bit value within an HARQ-ACK codebook for a slot not indicated by the PDSCH-to-HARQ_feedback timing indicator field in the DCI format.

If the terminal reports only HARQ-ACK information for one PDSCH reception or one SPS PDSCH release in set $M_{A,C}$ of all PDSCH reception candidate occasions for candidate PDSCH reception and the report is scheduled by DCI format 1_0 which includes information indicating that a counter downlink assignment index (DAI) field indicates 1 in a PCell, the terminal may determine one HARQ-ACK codebook for the corresponding PDSCH reception or the corresponding SPS PDSCH release.

Otherwise, an HARQ-ACK codebook determination method according to the method described below is followed.

For convenience of the disclosure, a PDSCH-to-HARQ_feedback timing indicator value is referred to as a K1 value. The terminal may receive a configuration of multiple K1 values, and the multiple K1 values are collectively referred to as set K1.

A set of PDSCH reception candidate occasions in serving cell c is referred to as $M_{A,c}$, and a method for obtaining $M_{A,c}$ will be described later.

<Type-1 HARQ-ACK codebook for single PDSCH reception>

First, it is assumed that a PDSCH scheduled by a DCI format is received in one slot. This may include a case where *pdsch-AggregationFactor* is not configured from a higher layer.

When a PUCCH or a PUSCH delivering a Type-1 HARQ-ACK codebook is transmitted in slot n, a pseudo-code therefor is as follows. Hereinafter, the pseudo-code describes an operation performed by the terminal, and the base station may also determine a PDSCH corresponding to each HARQ-ACK bit through the same method.

[pseudo-code 1: (No PDSCH repetitive reception)]

- Preparation operation: Set R is a set of scheduling information (slot information (hereinafter, K0 value) to which a PDSCH is mapped, and start symbol and length information (hereinafter, a starting and length value (SLIV))) configured in a TDRA table. If the terminal monitors one or more DCI formats, and the DCI formats use different TDRA tables, the set R is generated based on all TDRA tables.
- Operation 0: $M_{A,c}$ is initialized to an empty set. k is initialized to 0. j is initialized to 0.
- Operation 1: A k-th largest K1 value is selected from configured set K1. (For example, if k=0, a largest K1 value is selected from the set K1, and if k=1, a second largest K1 value is selected from the set K1.) The K1 value is referred to as $K_{1,k}$.
- Operation 2: If a symbol corresponding to start symbol and length information (SLIV) belonging to each row of set R and a symbol configured for uplink in a higher layer overlap in a slot (slot $n-K_{1,k}$) corresponding to a $K_{1,k}$ value, the row may be excluded from set R.
- Operation 3-1 (when the terminal has only UE capability of receiving a maximum of one unicast PDSCH in one slot): If the determined set R is not an empty set, j is added as a new PDSCH reception candidate occasion to set $M_{A,c}$. If one of PDSCH candidates of set R is received, the terminal may place HARQ-ACK of the one PDSCH in the new PDSCH candidate occasion of j. The terminal increases j by 1.
- Operation 3-2 (when the terminal has UE capability of receiving more than one unicast PDSCH in one slot): For an SLIV which ends first in the determined set R and SLIVs which overlap the SLIV in time, j is added as a new PDSCH reception candidate occasion to the set $M_{A,c}$. If one of PDSCH candidates having the SLIV is received, the terminal may place HARQ-ACK of the one PDSCH in the new PDSCH candidate occasion of j. The terminal increases j by 1. The SLIVs are excluded from the set R. Operation 3-2 is repeated until the set R becomes an empty set.
- Operation 4: The terminal increases k by 1. If k is less than the cardinality of the set K1, operations start again from operation 2, and if k is equal to or greater than the cardinality of the set K1, pseudo-code 1 ends.

[End of pseudo-code 1]

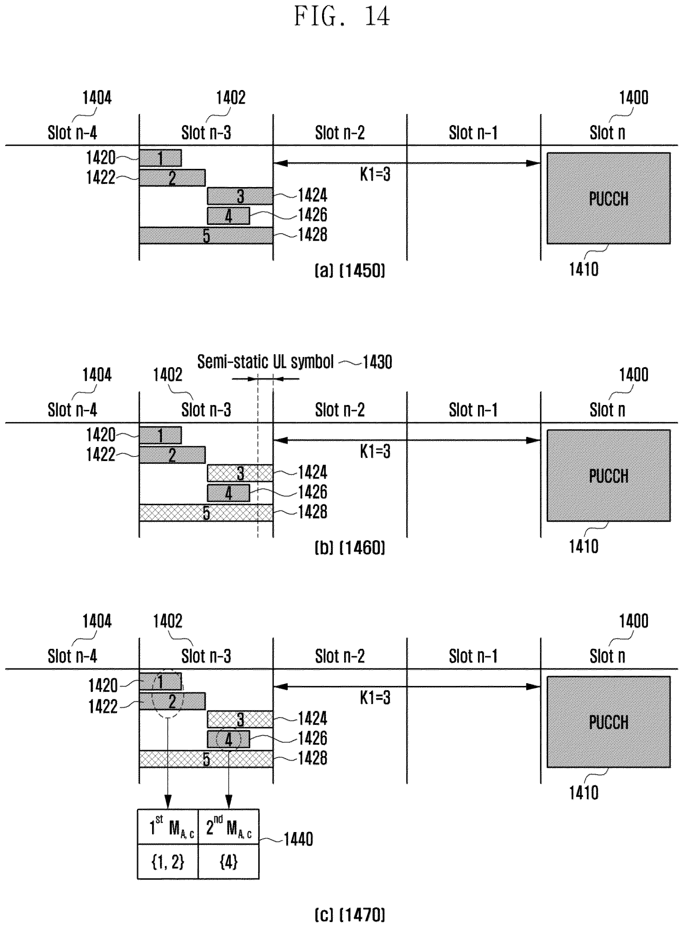

FIG. 14 illustrates an example of describing a pseudo-code for generating an HARQ-ACK codebook for a PDSCH received in one slot according to an embodiment of the disclosure.

The above-described pseudo-code 1 will be described with reference to FIG. 14. A PUCCH 1410 including HARQ-ACK information may be transmitted in slot n 1400. For example, the HARQ-ACK information may be generated in the form of a Type-1 HARQ-ACK codebook.

It is assumed that K1=3 is configured for a terminal as a K1 value. In addition, a TDRA table in a DCI format monitored by the terminal may include 5 rows as in Table 26. For reference, a K0 value, an SLIV value, or a PDSCH mapping type value may be configured in each row, but a PDSCH mapping type is omitted for convenience of description. The respective rows are shown at 1450 as 1420, 1422, 1424, 1426, and 1428, respectively.

[Table 26]

| Index | K0 | SLIV (S,L) |
|---|---|---|
| 1 | 0 | SLIV 1 (0,4) |
| 2 | 0 | SLIV 2 (0,7) |
| 3 | 0 | SLIV 3 (7,7) |
| 4 | 0 | SLIV 4 (7,4) |
| 5 | 0 | SLIV 5 (0,14) |

The terminal may include, in set R, each row of the TDRA table in Table 26 according to the preparation operation in the pseudo-code 1. 1450 shows SLIVs according to the respective rows of Table 26. The terminal may determine set $M_{A,c}$ of PDSCH reception candidate occasions, based on the K1 value and the set R. Referring to FIG. 14, the pseudo-code 1 may be interpreted as follows. In the following description, it is assumed that the terminal has UE capability of receiving more than one unicast PDSCH in one slot.

- Operation 0: $M_{A,c}$ is initialized to an empty set. k is initialized to 0. j is initialized to 0.

- Operation 1: A k-th (k=0) largest K1 value is selected from configured set K1. The K1 value is $K_{1,0}=3$.
- Operation 2: If a symbol corresponding to start symbol and length information (SLIV) belonging to each row of set R and a symbol configured for uplink in a higher layer overlap in slot $n-K_{1,0}$=slot n-3 1402, the row may be excluded from the set R. Referring to 1460, if some symbols of slot n-3 are semi-static UL symbols 1430 configured through a higher layer, rows including SLIVs overlapping the symbol may be excluded from the set R. Referring to 1460, the last two symbols of slot n-3 may be semi-static uplink symbols, and SLIV (7,7) 1426 of row 3 and SLIV (0,14) 1428 of row 5 overlap with the semi-static uplink symbol and thus may be excluded from the set R. The set R may include rows 1, 2, and 4 1420, 1422, and 1426.
- Operation 3-2 (when the terminal has UE capability of receiving more than one unicast PDSCH in one slot):

    • j=0 is added as a new PDSCH reception candidate occasion to set $M_{A,c}$ for an SLIV which ends first in the determined set R and SLIVs which overlap the SLIV in time. Here, the SLIV which ends first is SLIV (0,4) 1420 of row 1, and an SLIV overlapping the SLIV is SLIV (0,7) 1422 of row 2. Therefore, if j=0 is added to $M_{A,c}$, and the terminal receives a PDSCH scheduled with SLIV (0,4) 1420 of row 1 or SLIV (0,7) 1422 of row 2, HARQ-ACK of the PDSCH may be included in a position corresponding to the first (j=0) $M_{A,c}$ in a type-1 HARQ-ACK codebook 1440. The terminal increases j by 1 so that j=1. The SLIVs 1420 and 1422 of rows 1 and 2 are excluded from the set R, so that R={4}. Since the set R is not an empty set, operation 3-2 is repeated.
    • j=1 is added as a new PDSCH reception candidate occasion to set $M_{A,c}$ for an SLIV which ends first in the determined set R and SLIVs which overlap the SLIV in time. Here, the SLIV which ends first is SLIV (7,4) 1426 of row 4, and there is no SLIV overlapping the SLIV. Therefore, if j=1 is added to $M_{A,c}$, and the terminal receives a PDSCH scheduled with SLIV (7,4) 1426 of row 4, HARQ-ACK of the PDSCH may be included in a position corresponding to the second (j=1) $M_{A,c}$ in the type-1 HARQ-ACK codebook 1440. The terminal increases j by 1 so that j=2. The SLIV of row 4 is excluded from the set R, and thus the set R is an empty set. Therefore, operation 3-2 may end (1470).

- Operation 4: The terminal increases k by 1 so that k=1. Since k=1 is equal to 1, which is the cardinality of set K1, pseudo-code 1 ends.

Therefore, referring to FIG. 14, the terminal may determine $M_{A,c}$ corresponding to two PDSCH reception candidate occasions of j=0 and j=1. The size of the Type-1 HARQ-ACK codebook may be determined according to the number of PDSCH reception candidate occasions. The actual number of bits per PDSCH reception candidate occasion may be determined according to a configuration such as the number of transport blocks included in each PDSCH, the number of code block groups (CBGs) included in each PDSCH, or spatial bundling.

<Type-1 HARQ-ACK codebook for single PDSCH reception and PDSCH repetitive reception>

The terminal may receive PDSCHs delivering the same transport block (TB) in multiple slots from a base station. This may include a case where *pdsch-AggregationFactor* is configured from a higher layer. For reference, when the terminal receives a configuration of *pdsch-AggregationFactor,* a PDSCH scheduled in a first DCI format may be repeatedly received in the multiple slots according to the *pdsch-AggregationFactor,* but a PDSCH scheduled in a second DCI format may be received in one slot. The first DCI format may be referred to as non-fallback DCI or may be referred to as DCI format 1_1 or DCI format 1_2. The second DCI format may be referred to as fallback DCI or may be referred to as DCI format 1_0.

Even when the terminal receives the PDSCHs in the multiple slots, the PDSCHs received in the multiple slots transmit the same TB, and thus the terminal may transmit HARQ-ACK information for the TB to the base station. In other words, the terminal may not transmit HARQ-ACK information of each PDSCH received in each slot to the base station.

When the *pdsch-AggregationFactor* is configured, the terminal may generate a type-1 HARQ-ACK codebook on the assumption that PDSCHs are received in multiple slots. Although the terminal receives a PDSCH scheduled in the second DCI format only in one slot, when generating the Type-1 HARQ-ACK codebook, it is assumed that PDSCHs are received in multiple slots, as PDSCHs scheduled in the first DCI format.

When a PUCCH or a PUSCH delivering a Type-1 HARQ-ACK codebook is transmitted in slot n, a pseudo-code therefor is as follows.

[pseudo-code 2: (PDSCH repetitive reception configuration)]

- Preparation operation: Set R is a set of scheduling information (slot information (hereinafter, K0 value) to which a PDSCH is mapped, and start symbol and length information (hereinafter, a starting and length value (SLIV))) configured in a TDRA table. If the terminal monitors one or more DCI formats, and the DCI formats use different TDRA tables, the set R is generated based on all TDRA tables. $N_{PDSCH}^{max}$ may be configured to be a value of *pdsch-AggregationFactor*.

- Operation 0: $M_{A,c}$ is initialized to an empty set. k is initialized to 0. j is initialized to 0.
- Operation 1: A k-th largest K1 value is selected from configured set K1. (For example, if k=0, a largest K1 value is selected from the set K1, and if k=1, a second largest K1 value is selected from the set K1.) The K1 value is $K_{1,k}$.
- Operation 2: If a symbol corresponding to start symbol and length information (SLIV) belonging to each row of set R and a symbol configured for uplink in a higher layer overlap in each of previous $N_{PDSCH}^{max}$ slots from a slot (slot n-$K_{1,k}$) corresponding to a $K_{1,k}$ value, the row may be excluded from the set R.
- Operation 3-1 (when the terminal has only UE capability of receiving a maximum of one unicast PDSCH in one slot): If the determined set R is not an empty set, the terminal adds j as a new PDSCH reception candidate occasion to set $M_{A,c}$. If one of PDSCH candidates of set R is received (regardless of being received repeatedly in multiple slots or being received in one slot, if a last reception slot is a slot (slot n-$K_{1,k}$) corresponding to a $K_{1,k}$ value), the terminal may place HARQ-ACK of the PDSCH in the new PDSCH candidate occasion of j. The terminal increases j by 1.
- Operation 3-2 (when the terminal has UE capability of receiving more than one unicast PDSCH in one slot): The terminal adds j as a new PDSCH reception candidate occasion to the set $M_{A,c}$ for an SLIV which ends first in the determined set R and SLIVs which overlap the SLIV in time. If one of PDSCH candidates having the SLIV is received (regardless of being received repeatedly in multiple slots or being received in one slot, if a last reception slot is a slot (slot n-$K_{1,k}$) corresponding to a $K_{1,k}$ value), the terminal may place HARQ-ACK of the PDSCH in the new PDSCH candidate occasion of j. The terminal increases j by 1. The SLIVs are excluded from the set R. Operation 3-2 is repeated until the set R becomes an empty set.
- Operation 4: The terminal increases k by 1. If k is less than the cardinality of the set K1, operations start again from operation 2, and if k is equal to or greater than the cardinality of the set K1, pseudo-code 2 ends.

[End of pseudo-code 2]

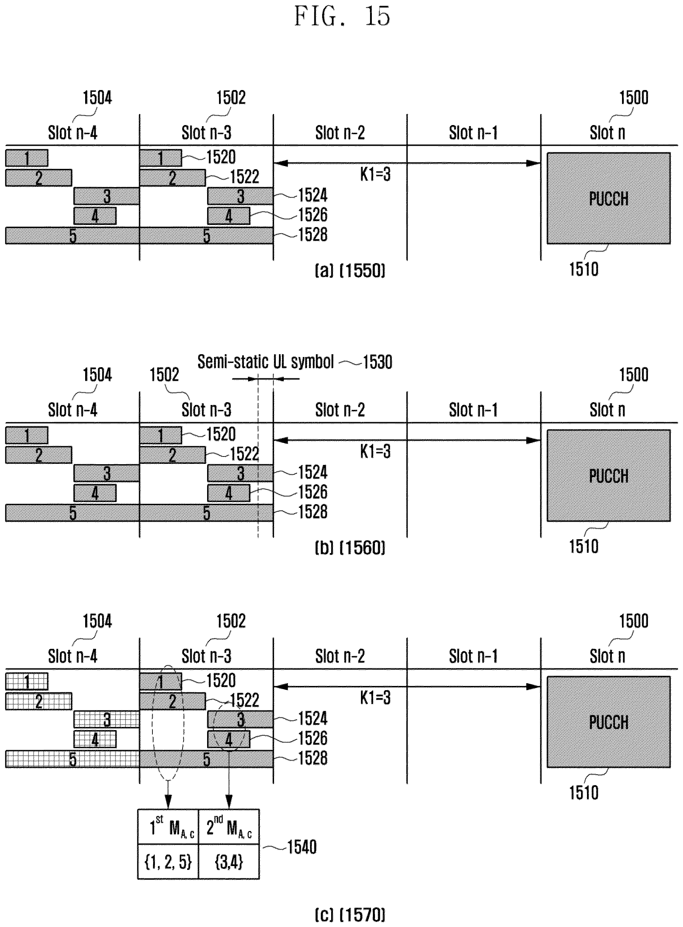

FIG. 15 illustrates an example of describing a pseudo-code for generating an HARQ-ACK codebook for a PDSCH repeatedly received in multiple slots according to an embodiment of the disclosure.

The above-described pseudo-code 2 will be described with reference to FIG. 15. A PUCCH 1510 including HARQ-ACK information may be transmitted in slot n 1500. For example, the HARQ-ACK information may be generated in the form of a Type-1 HARQ-ACK codebook.

It is assumed that K1=3 is configured for a terminal as a K1 value. In addition, a TDRA table in a DCI format monitored by the terminal may include 5 rows as in Table 26. The terminal may include, in set R, each row of the TDRA table in Table 26 according to the preparation operation. For reference, in Table 26, some rows may belong to a TDRA table in a first DCI format, and some rows may belong to a TDRA table in a second DCI format. For example, rows in indexes 1, 2, and 3 may belong to the TDRA table in the first DCI format, and rows in indexes 4 and 5 may belong to the TDRA table in the second DCI format. However, the set R is the union of all rows regardless of DCI formats to which the rows belong.

In FIG. 15, $N_{PDSCH}^{max}$ is assumed to be 2. 1550 shows SLIVs according to the respective rows of Table 26. 1520, 1522, 1524, 1556, or 1558 corresponds to an SLIV for each row. Here, when a Type-1 HARQ-ACK codebook is generated, $N_{PDSCH}^{max}$ is assumed to be 2, and it may be thus considered that a PDSCH is repeatedly received in slot n-3 1502 and slot n-4 1504.

The terminal may determine set $M_{A,c}$ of PDSCH reception candidate occasions, based on the K1 value, set R, and $N_{PDSCH}^{max}$. Referring to FIG. 15, the pseudo-code 2 may be interpreted as follows. In the following description, it is assumed that the terminal has UE capability of receiving more than one unicast PDSCH in one slot.

- Operation 0: $M_{A,c}$ is initialized to an empty set. k is initialized to 0. j is initialized to 0.
- Operation 1: A k-th (k=0) largest K1 value is selected from configured set K1. The K1 value is $K_{1,0}$=3.
- Operation 2: If a symbol corresponding to start symbol and length information (SLIV) belonging to each row of set R and a symbol configured for uplink in a higher layer overlap in each of previous $N_{PDSCH}^{max}$=2 slots (that is, slot n-3 1502 and slot n-4 1504) from slot n-$K_{1,0}$=slot n-3 1502, the row may be excluded from the set R. In other words, only when a symbol corresponding to start symbol and length information (SLIV) belonging to each row of set R and a symbol configured for uplink in a higher layer overlap commonly in (both) slot n-3 1502 and slot n-4 1504, the corresponding row may be excluded from the set R. Referring to 1560, it is assumed that a semi-static uplink symbol 1530 is configured for the last two symbols of slot n-3. In this case, SLIV (7,7) 1524 of row 3 and SLIV (0,14) 1528 of row 5 overlap with the semi-static uplink symbol 1530 in slot n-3 1502, but do not overlap with the semi-static uplink symbol in slot n-4 1504, and thus the corresponding row may not be excluded from the set R. Therefore, the set R may include rows 1, 2, 3, 4, and 5 1520, 1522, 1524, 1526, and 1528 (1560).

- Operation 3-2 (when the terminal has UE capability of receiving more than one unicast PDSCH in one slot):

  • The terminal adds j=0 as a new PDSCH reception candidate occasion to set $M_{A,c}$ for an SLIV which ends first in the determined set R and SLIVs which overlap the SLIV in time. Here, the SLIV which ends first is SLIV (0,4) 1520 of row 1, and the SLIVs overlapping the SLIV are SLIV(0,7) 1522 of row 2 and SLIV(0,14) 1528 of row 5. Therefore, if the terminal adds j=0 to $M_{A,c}$, and the terminal receives a PDSCH scheduled with SLIV (0,4) 1520 of row 1, SLIV (0,7) 1522 of row 2, or SLIV (0,14) 1528 of row 5, HARQ-ACK of the PDSCH may be included in a position corresponding to the first (j=0) $M_{A,c}$ in a type-1 HARQ-ACK codebook 1540. The terminal increases j by 1 so that j=1. The SLIVs 1520, 1522, and 1528 of the row 1, row 2, and row 5 are excluded from the set R, so that R={3, 4}. Since the set R is not an empty set, operation 3-2 is repeated.
  • The terminal adds j=1 as a new PDSCH reception candidate occasion to set $M_{A,c}$ for an SLIV which ends first in the determined set R and SLIVs which overlap the SLIV in time. Here, the SLIV which ends first is SLIV (7,4) 1526 of row 4, and an SLIV overlapping the SLIV is SLIV (7,7) 1524 of row 3. Therefore, if j=1 is added to $M_{A,c}$, and the terminal receives a PDSCH scheduled with SLIV (7,7) 1524 of row 3 or SLIV (7,4) 1526 of row 4, HARQ-ACK of the PDSCH may be included in a position corresponding to the second (j=1) $M_{A,c}$ in the type-1 HARQ-ACK codebook 1540. The terminal increases j by 1 so that j=2. The SLIVs 1524 and 1526 of the rows 3 and 4 are excluded from the set R, so that the set R is an empty set. Therefore, operation 3-2 may end (1570).

- Operation 4: The terminal increases k by 1 so that k=1. Since k=1 is equal to 1, which is the cardinality of the set K1, pseudo-code 2 ends.

Therefore, referring to FIG. 15, the terminal may determine $M_{A,c}$ corresponding to two PDSCH reception candidate occasions of j=0 and j=1. The size of the Type-1 HARQ-ACK codebook may be determined according to the number of PDSCH reception candidate occasions. The actual number of bits per PDSCH reception candidate occasion may be determined according to a configuration such as the number of transport blocks included in each PDSCH, the number of code block groups (CBGs) included in each PDSCH, or spatial bundling.

In comparison with pseudo-code 1 (no PDSCH repetitive reception), the biggest difference in pseudo-code 2 (PDSCH repetitive reception configuration) is the SLIVs excluded from the set R according to operation 2. Referring to 1460 in FIG. 14, when the terminal does not receive a PDSCH repeatedly, the terminal may receive a PDSCH only in slot n-3, and thus if an SLIV of the PDSCH overlaps with the semi-static uplink symbol in the slot, the SLIV may be excluded from the set R. On the other hand, referring to 1560 in FIG. 15, when the terminal repeatedly receives a PDSCH, the terminal may receive a PDSCH in multiple slots (for example, slot n-3 and slot n-4), and thus if an SLIV of the PDSCH does not overlap with the semi-static uplink symbol in at least one of the multiple slots, the SLIV may not be excluded from the set R. In other words, if the SLIV of the PDSCH overlaps with the semi-static uplink symbol in all slots, the SLIV may be excluded from the set R. Therefore, compared to pseudo-code 1, pseudo-code 2 may include more PDSCH reception candidate occasions.

It has been previously said that some indexes in Table 26 may belong to the TDRA table in the second DCI format. The PDSCH scheduled in the second DCI format may be received in one slot. However, the terminal may generate a Type-1 HARQ-ACK codebook on the assumption that the terminal repeatedly receives all rows in $N_{PDSCH}^{max}$ slots, as in a case of being scheduled in the first DCI format. As mentioned earlier, if repetitive reception is assumed, more PDSCH reception candidate occasions may be included, and thus HARQ-ACK information of the PDSCH scheduled in the second PDSCH format may also be included in the Type-1 HARQ-ACK codebook.

The above-mentioned pseudo-codes 1 and 2 are described in 9.1.2.1 of 3GPP standard document TS38.213. In this disclosure, for description, the pseudo-code of v16.6.0 of the standard document will be described. The pseudo-code is as shown in Table 27.

【Table 27】

[TS38.213 v16.6.0 pseudo-code]

Set $j = 0$ - index of occasion for candidate PDSCH reception or SPS PDSCH release

Set $B = \varnothing$

Set $M_{A,c} = \varnothing$

Set $\mathcal{C}(K_1)$ to the cardinality of set $K_1$

Set $k = 0$ – index of slot timing values $K_{1,k}$, in descending order of the slot timing values, in set $K_1$ for serving cell $c$

while $k < \mathcal{C}(K_1)$

    if $\mathrm{mod}\left(n_\mathrm{U} - K_{1,k} + 1, \max\left(2^{\mu_\mathrm{UL} - \mu_\mathrm{DL}}, 1\right)\right) = 0$

        Set $n_\mathrm{D} = 0$ – index of a DL slot within an UL slot

        while $n_\mathrm{D} < \max\left(2^{\mu_\mathrm{DL} - \mu_\mathrm{UL}}, 1\right)$

            Set $R$ to the set of rows

            Set $\mathcal{C}(R)$ to the cardinality of $R$

            Set $r = 0$ – index of row in set $R$

if slot $n_U$ starts at a same time as or after a slot for an active DL BWP change on serving cell $c$ or an active UL BWP change on the PCell and slot $\lfloor (n_U - K_{1,k}) \cdot 2^{\mu_{DL} - \mu_{UL}} \rfloor + n_D$ is before the slot for the active DL BWP change on serving cell $c$ or the active UL BWP change on the PCell

$n_D = n_D + 1$;

else

  while $r < \mathcal{C}(R)$

    if the UE is provided *tdd-UL-DL-ConfigurationCommon*, or *tdd-UL-DL-ConfigurationDedicated* and, for each slot from slot $\lfloor (n_U - K_{1,k}) \cdot 2^{\mu_{DL} - \mu_{UL}} \rfloor + n_D - N_{PDSCH}^{repeat,max} + 1$ to slot $\lfloor (n_U - K_{1,k}) \cdot 2^{\mu_{DL} - \mu_{UL}} \rfloor + n_D$, at least one symbol of the PDSCH time resource derived by row $r$ is configured as UL where $K_{1,k}$ is the $k$-th slot timing value in set $K_1$,

      $R = R \setminus r$;

    else

      $r = r + 1$;

    end if

  end while

  if the UE does not indicate a capability to receive more than one unicast PDSCH per slot and $R \neq \varnothing$,

    $M_{A,c} = M_{A,c} \bigcup j$;

    $j = j + 1$;

  else

    Set $\mathcal{C}(R)$ to the cardinality of $R$

    Set $m$ to the smallest last OFDM symbol index, as determined by the *SLIV*, among all rows of $R$

    while $R \neq \varnothing$

      Set $r = 0$

      while $r < \mathcal{C}(R)$

if $S \le m$ for start OFDM symbol index $S$ for row $r$

$$b_{r,k,n_D} = j \; ; \text{- index of occasion for candidate PDSCH reception or SPS PDSCH}$$

release associated with row $r$

$$R = R \setminus r \; ;$$

$$B = B \bigcup b_{r,k,n_D} \; ;$$

else

$$r = r + 1 \; ;$$

end if

end while

$$M_{A,c} = M_{A,c} \bigcup j \; ;$$

$$j = j + 1 \; ;$$

Set $m$ to the smallest last OFDM symbol index among all rows of $R$ ;

end while

end if

$$n_D = n_D + 1 \; ;$$

end if

end while

end if

$$k = k + 1 \; ;$$

end while

In addition, definitions of the above pseudo-code symbols may be found in 3GPP standard document TS38.213.

<Type-1 HARQ-ACK codebook for multi-PDSCH reception>

The terminal may receive a configuration of multi-PDSCH scheduling. That is, the terminal may receive a configuration of a TDRA table having rows including multiple pieces of scheduling information. Detailed descriptions of multi-PDSCH scheduling have been described above.

The terminal may receive PDSCHs delivering different TBs in multiple slots according to multi-PDSCH scheduling. Since the PDSCHs received in the multiple slots transmit different TBs, the terminal may transmit HARQ-ACK information for each of the TBs to a base station. In other words, the terminal is required to transmit, to the base station, HARQ-ACK information of each of the PDSCHs received in the respective slots.

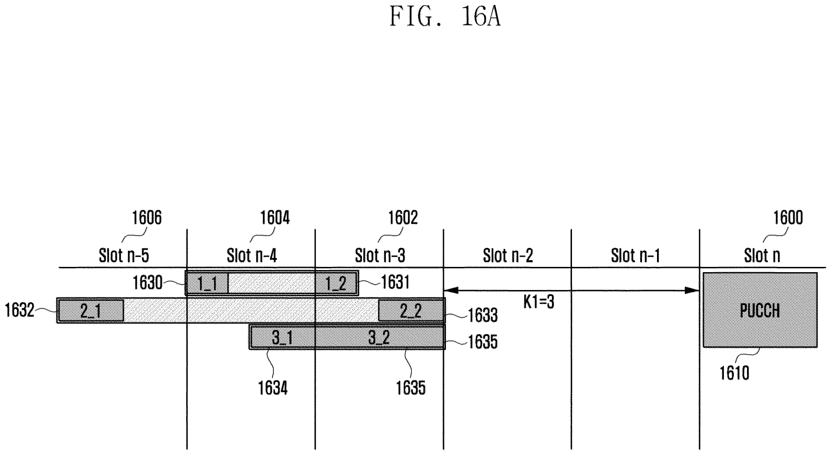

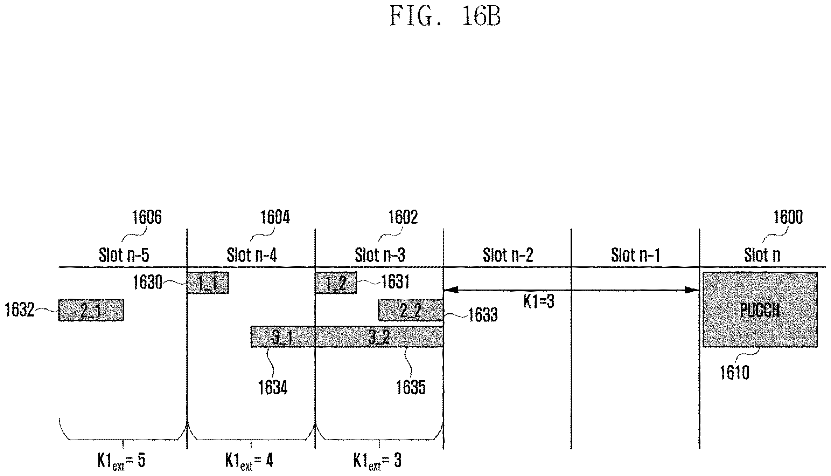

To this end, K1 set extension has been introduced to the Type-1 HARQ-ACK codebook. The set K1 extension is described through Table 28 or FIGS. 16A and 16B.

First, as shown in Table 28, the terminal may receive a configuration of a TDRA table having rows including multiple pieces of scheduling information. Table 28 is only an example to help understanding of the disclosure and does not limit the technical scope of the disclosure. Therefore, it goes without saying that the TDRA table may be configured so that each row includes one piece of scheduling information or includes three or more pieces of scheduling information, or different rows include different numbers of pieces of scheduling information.

[Table 28]

| Index | First scheduling information | | Second scheduling information | |
|---|---|---|---|---|
| | K0 | SLIV (S,L) | K0 | SLIV (S,L) |
| 1 | 0 | SLIV 1_1 (0,4) | 1 | SLIV 1_2 (0,4) |
| 2 | 0 | SLIV 2_1 (0,7) | 2 | SLIV 2_2 (7,7) |
| 3 | 0 | SLIV 3_1 (7,7) | 1 | SLIV 3_2 (0,14) |

FIG. 16A illustrates an example illustrating PDSCHs based on a TDRA table including multiple pieces of scheduling information according to an embodiment of the disclosure. FIG. 16A illustrates SLIVs of PDSCHs which may be received according to a TDRA table in Table 28. For reference, in FIG. 16A, X_Y may represent an SLIV according to Y-th scheduling information of row index X of the TDRA table. Here, it is assumed that a K1 value is 3, and HARQ-ACKs of the PDSCHs are transmitted in slot n 1600. That is, an SLIV of the last scheduling information according to the TDRA table appears in slot n-3 which is a value of slot n-K1. In addition, a difference between K0 values of scheduling information is an offset (that is, the number of slots between two slots) between slots in which two SLIVs of the scheduling information are located.

Referring to FIG. 16A, four symbols starting from symbol 0 of slot n-3 1602 correspond to SLIV 1_2 1631 according to last (second) scheduling information of a row having an index of 1. In addition, an offset, which is a difference between K0 values of first scheduling information and second scheduling information, is 1, and thus in slot n-3-offset=slot n-4 1604, four symbols starting from symbol 0 correspond to SLIV 1_1 1630 according to first scheduling information of a row having an index of 1.

According to last (second) scheduling information of a row having an index of 2, seven symbols starting from symbol 7 of slot n-3 1602 correspond to SLIV 2_2 1633. In addition, an offset, which is a difference between K0 values of first scheduling information and second scheduling information, is 2, and thus in slot n-3-offset=slot n-5 1606, seven symbols starting from symbol 0 correspond to SLIV 2_1 1632 according to first scheduling information of a row having an index of 2.

According to last (second) scheduling information of a row having an index of 3, 14 symbols starting from symbol 0 of slot n-3 1602 correspond to SLIV 3_2 1635. In addition, an offset, which is a difference between K0 values of first scheduling information and second scheduling information, is 1, and thus in slot n-3-offset=slot n-4 1604, seven symbols starting from symbol 7 correspond to SLIV 3_1 1634 according to first scheduling information of a row having an index of 3.

FIG. 16B illustrates an example of describing extension of K1 values as a result of considering PDSCHs based on a TDRA table including multiple pieces of scheduling information as single-PDSCH scheduling according to an embodiment of the disclosure.

Referring to FIG. 16B, a terminal may consider SLIVs of PDSCHs which may be received according to Table 28, as SLIVs scheduled by single-PDSCH scheduling. Accordingly, the terminal may generate a TDRA table for single-PDSCH scheduling, as in Table 29. For reference, each row of the TDRA table for single PDSCH scheduling may include only one piece of scheduling information.

[Table 29]

| Index | K0 | SLIV (S,L) |
|---|---|---|
| 1 | 0 | SLIV 1_1 (0,4) |
| 2 | 1 | SLIV 1_2 (0,4) |
| 3 | 0 | SLIV 2_1 (0,7) |
| 4 | 2 | SLIV 2_2 (7,7) |

(continued)

| Index | K0 | SLIV (S,L) |
|-------|----|-----------| 
| 5 | 0 | SLIV 3_1 (7,7) |
| 6 | 1 | SLIV 3_2 (0,14) |

Further, based on a K1 value of 3 configured for the terminal, the terminal may determine slots n-3 1602, slot n-4 1604, and slot n-5 1606, which are slots in which a PDSCH may be received. Accordingly, the K1 value may be extended to 3, 4, and 5. In other words, SLIV 1_2 1631, SLIV 2_2 1633, and SLIV 3_2 1635 of indexes 2, 4, and 6 may be received in slot n-3 1602. Therefore, the K1 value is required to be 3 to transmit HARQ-ACK information in slot n 1600. SLIV 1_1 1630 and SLIV 3_1 1634 of indexes 1 and 5 may be received in slot n-4 1604. Therefore, the K1 value is required to be 4 to transmit HARQ-ACK information in slot n 1600. SLIV 2_1 1632 of index 3 may be received in slot n-5 1606. Therefore, the K1 value is required to be 5 to transmit HARQ-ACK information in slot n 1600. The K1 values obtained here are referred to as extended K1 values ($K1_{ext}$), and a set of the extended K1 values is referred to as extended set K1. However, the use of these terms does not limit the technical scope of the disclosure.

The terminal may generate a Type-1 HARQ-ACK codebook, based on a TDRA table (e.g., Table 29) interpreted based on single-PDSCH scheduling and the extended set K1.

When a PUCCH or a PUSCH delivering a Type-1 HARQ-ACK codebook is transmitted in slot n, a pseudo-code therefor is as follows.

[pseudo-code 3: (multi-PDSCH scheduling)]

- Preparation operation: Set R is a set of single-PDSCH scheduling information, which is obtained by dividing multiple pieces of scheduling information (slot information (hereinafter, K0 value) to which a PDSCH is mapped, and start symbol and length information (hereinafter, a starting and length value (SLIV))) configured in a time domain resource assignment (TDRA) table. If the terminal monitors one or more DCI formats, and the DCI formats use different TDRA tables, the set R is generated based on all TDRA tables. In addition, the terminal obtains extended set K1 according to the TDRA table.
- Operation 0: $M_{A,c}$ is initialized to an empty set. k is initialized to 0. j is initialized to 0.
- Operation 1: A k-th largest K1 value is selected from the extended set K1. (For example, if k=0, a largest K1 value is selected from the extended set K1, and if k=1, a second largest K1 value is selected from the extended set K1.) The K1 value is $K_{1,k}$.
- Operation 2: If a symbol corresponding to start symbol and length information (SLIV) belonging to each row of set R and a symbol configured for uplink in a higher layer overlap in a slot (slot $n-K_{1,k}$) corresponding to a $K_{1,k}$ value, or the SLIV of slot $n-K_{1,k}$ does not correspond to HARQ-ACK information transmitted in slot n, the row may be excluded from the set R.
- Operation 3-1 (when the terminal has only UE capability of receiving a maximum of one unicast PDSCH in one slot): If the determined set R is not an empty set, the terminal adds j as a new PDSCH reception candidate occasion to set $M_{A,c}$. If one of PDSCH candidates of the set R is received, the terminal may place HARQ-ACK of the PDSCH in the new PDSCH candidate occasion of j. The terminal increases j by 1.
- Operation 3-2 (when the terminal has UE capability of receiving more than one unicast PDSCH in one slot): The terminal adds j as a new PDSCH reception candidate occasion to the set $M_{A,c}$ for an SLIV which ends first in the determined set R and SLIVs which overlap the SLIV in time. If one of PDSCH candidates having the SLIV is received, the terminal may place HARQ-ACK of the PDSCH in the new PDSCH candidate occasion of j. The terminal increases j by 1. The SLIVs are excluded from the set R. Operation 3-2 is repeated until the set R becomes an empty set.
- Operation 4: The terminal increases k by 1. If k is less than the cardinality of the extended set K1, operations start again from operation 2, and if k is equal to or greater than the cardinality of the extended set K1, pseudo-code 3 ends.

[End of pseudo-code 3]

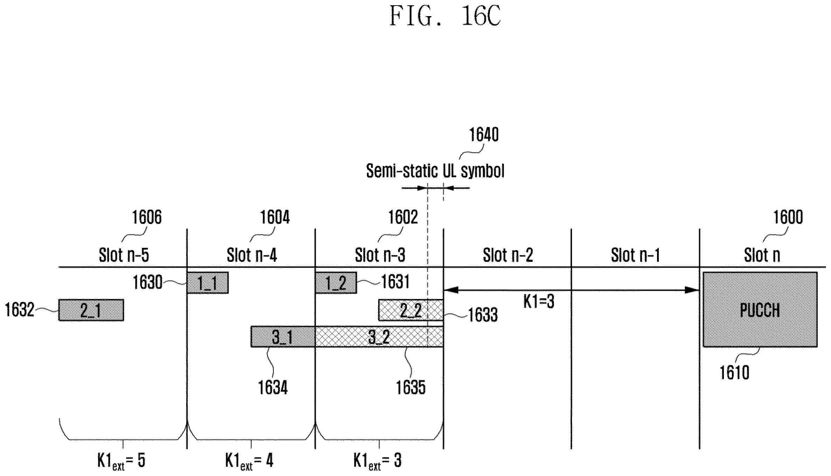

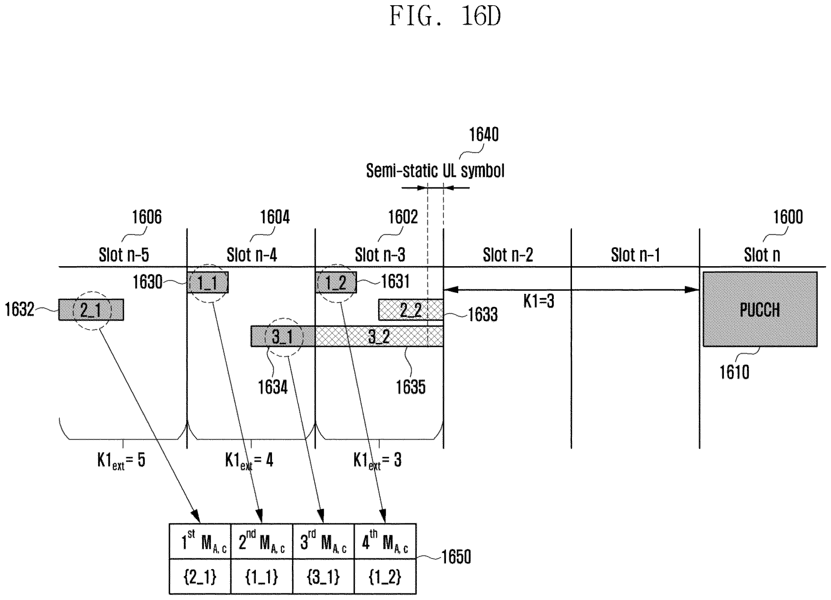

FIGS. 16C and 16D illustrate another example of describing a pseudo-code for generating an HARQ-ACK codebook according to an embodiment of the disclosure.

The above-described pseudo-code 3 is described using FIGS. 16C and 16D as an example. A PUCCH 1610 including HARQ-ACK information may be transmitted in slot n 1600. For example, the HARQ-ACK information may be generated in the form of a Type-1 HARQ-ACK codebook.

It is assumed that K1=3 is configured for a terminal as a K1 value. In addition, a TDRA table in a DCI format monitored by the terminal may include 3 rows as in Table 28. According to the preparation operation, the terminal may change multiple pieces of scheduling information of respective rows of the TDRA table of Table 28 into single-scheduling information as in Table 29, and the single-scheduling information may be included in set R. In addition, {3, 4, 5} may be obtained as extended set K1. FIG. 16B shows SLIVs and extended K1 values according to respective rows.

The terminal may determine set $M_{A,c}$ of PDSCH reception candidate occasions, based on the extended set K1 and the set R. Referring to FIGS. 16C and 16D, the pseudo-code 3 may be interpreted as follows. In the following description, it is assumed that the terminal has UE capability of receiving more than one unicast PDSCH in one slot.

- Operation 0: $M_{A,c}$ is initialized to an empty set. k is initialized to 0. j is initialized to 0.
- Operation 1: A k-th (k=0) largest K1 value is selected from the extended set K1. In the above example, the K1 value is $K_{1,0}$=5.
- Operation 2: If a symbol corresponding to start symbol and length information (SLIV) belonging to each row of set R and a symbol configured for uplink in a higher layer overlap in slot n-$K_{1,0}$=slot n-5 1606, or the SLIV does not correspond to HARQ-ACK information transmitted in slot n, the row may be excluded from the set R. Referring to FIGS. 16C and 16D, if some symbols of slot n-5 1606 are semi-static UL symbols configured through a higher layer, rows including SLIVs overlapping the symbols may be excluded from the set R. Slot n-5 does not include a semi-static uplink symbol and, in slot n-5 1606, SLIV 1_1 1630 of row 1, SLIV 1_2 1631 of row 2, SLIV 2_2 1633 of row 4, SLIV 3_1 1634 of row 5, and SLIV 3_2 1635 of row 6 do not correspond to HARQ-ACK information transmitted in slot n 1600, and thus may be excluded from the set R. Therefore, the set R may include SLIV 2_1 1632 of row 3.
- Operation 3-2 (when the terminal has UE capability of receiving more than one unicast PDSCH in one slot):

    • The terminal adds j=0 as a new PDSCH reception candidate occasion to set $M_{A,c}$ for an SLIV which ends first in the determined set R and SLIVs which overlap the SLIV in time. Here, the SLIV which ends first is SLIV (0,4) 1632 of row 3, and there is no SLIV overlapping the SLIV. Therefore, if j=0 is added to $M_{A,c}$, and the terminal receives a PDSCH scheduled with SLIV 2_1 (0,4) 1632 of row 3, HARQ-ACK of the PDSCH may be included in a position corresponding to the first (j=0) $M_{A,c}$ in a type-1 HARQ-ACK codebook 1650. The terminal increases j by 1 so that j=1. The SLIV of row 5 is excluded from the set R, and thus the set R is an empty set. Therefore, operation 3-2 may end.

- Operation 4: The terminal increases k by 1 so that k=1. Since k=1 is less than 3, which is the cardinality of the extended set K1, operation 1 is performed.
- Operation 1: A k-th (k=1) largest K1 value is selected from the extended set K1. In the above example, the K1 value is $K_{1,1}$=4.
- Operation 2: If a symbol corresponding to start symbol and length information (SLIV) belonging to each row of set R and a symbol configured for uplink in a higher layer overlap in slot n-$K_{1,1}$=slot n-4 1604, or the SLIV does not correspond to HARQ-ACK information transmitted in slot n, the row may be excluded from the set R. If some symbols of slot n-4 1604 are semi-static UL symbols configured through a higher layer, rows including SLIVs overlapping the symbol may be excluded from the set R. Slot n-4 1604 does not include a semi-static uplink symbol and, in slot n-4 1604, SLIV 1_2 1631 of row 2, SLIV 2_1 1632 of row 3, SLIV 2_2 1633 of row 4, and SLIV 3_2 1635 of row 6 do not correspond to HARQ-ACK information transmitted in slot n 1600, and thus may be excluded from the set R. Therefore, the set R may include SLIV 1_1 1630 of row 1 and SLIV 3_1 1634 of row 5.
- Operation 3-2 (when the terminal has UE capability of receiving more than one unicast PDSCH in one slot):

    • The terminal adds j=1 as a new PDSCH reception candidate occasion to set $M_{A,c}$ for an SLIV which ends first in the determined set R and SLIVs which overlap the SLIV in time. Here, the SLIV which ends first is SLIV 1_1 (0,4) 1630 of row 1, and there is no SLIV overlapping the SLIV. Therefore, if j=1 is added to $M_{A,c}$, and the terminal receives a PDSCH scheduled with SLIV 1_1 (0,4) 1630 of row 1, HARQ-ACK of the PDSCH may be included in a position corresponding to the second (j=1) $M_{A,c}$ in the type-1 HARQ-ACK codebook 1650. The terminal increases j by 1 so that j =2. The SLIV of row 1 is excluded from the set R, so that R={5}. Since the set R is not an empty set, operation 3-2 is repeated.
    • The terminal adds j=2 as a new PDSCH reception candidate occasion to set $M_{A,c}$ for an SLIV which ends first in the determined set R and SLIVs which overlap the SLIV in time. Here, the SLIV which ends first is SLIV 3_1 (7,7) 1634 of row 5, and there is no SLIV overlapping the SLIV. Therefore, if j=2 is added to $M_{A,c}$, and the terminal receives a PDSCH scheduled with SLIV 3_1 (7,7) 1634 of row 5, HARQ-ACK of the PDSCH may be included in a position corresponding to the third (j=2) $M_{A,c}$ in the type-1 HARQ-ACK codebook 1650. The terminal increases j by 1 so that j=3. The SLIV of row 5 is excluded from the set R, and thus the set R is an empty set.

Therefore, operation 3-2 ends.

- Operation 4: k is increased by 1 so that k=2. Since k=2 is less than 3, which is the cardinality of the extended set K1, operation 1 is performed.
- Operation 1: A k-th (k=2) largest K1 value is selected from the extended set K1. In the above example, the K1 value is $K_{1,2}$=3.
- Operation 2: If a symbol corresponding to start symbol and length information (SLIV) belonging to each row of set R and a symbol configured for uplink in a higher layer overlap in slot n-$K_{1,2}$=slot n-3 1602, or the SLIV does not correspond to HARQ-ACK information transmitted in slot n 1600, the row may be excluded from the set R. If some symbols of slot n-3 are semi-static UL symbols configured through a higher layer, rows including SLIVs overlapping the symbols may be excluded from the set R. The last two symbols of slot n-3 may be semi-static uplink symbols 1640, and SLIV 2_2 (7,7) 1633 of row 4 and SLIV 3_2 (0,14) 1635 of row 6 overlap with the semi-static uplink symbol in slot n-3 1602 and thus may be excluded from the set R. In addition, in slot n-3 1602, SLIV 1_1 1630 of row 1, SLIV 2_1 1632 of row 3, and SLIV 3_1 1634 of row 5 do not correspond to HARQ-ACK information transmitted in slot n 1600, and thus may be excluded from the set R. Therefore, the set R may include SLIV 1_2 1631 of row 2.
- Operation 3-2 (when the terminal has UE capability of receiving more than one unicast PDSCH in one slot):

  • The terminal adds j=3 as a new PDSCH reception candidate occasion to set $M_{A,c}$ for an SLIV which ends first in the determined set R and SLIVs which overlap the SLIV in time. Here, the SLIV which ends first is SLIV 1_2 (0,4) 1631 of row 2, and there is no SLIV overlapping the SLIV. Therefore, if j=3 is added to $M_{A,c}$, and the terminal receives a PDSCH scheduled with SLIV 1_2 (0,4) 1631 of row 2, HARQ-ACK of the PDSCH may be included in a position corresponding to the fourth (j=3) $M_{A,c}$ in the type-1 HARQ-ACK codebook 1650. The terminal increases j by 1 so that j=4. The SLIV 1_2 1631 of row 2 is excluded from the set R, and thus the set R is an empty set. Therefore, operation 3-2 ends.

- Operation 4: k is increased by 1 so that k=3. Since k=3 is equal to 3, which is the cardinality of the extended set K1, pseudo-code 3 ends.

[End of pseudo-code 3]

Therefore, referring to FIGS. 16C and 16D, the terminal may determine $M_{A,c}$ with four PDSCH reception candidate occasions j=0, j=1, j=2, and j=3. The size of the Type-1 HARQ-ACK codebook may be determined according to the number of PDSCH reception candidate occasions. The actual number of bits per PDSCH reception candidate occasion may be determined according to a configuration such as the number of transport blocks included in each PDSCH, the number of code block groups (CBGs) included in each PDSCH, or spatial bundling.

<Type-1 HARQ-ACK codebook for multi-PDSCH reception and time-domain bundling>

In the above-described example of FIG. 16D, the terminal includes four PDSCH reception candidate occasions for the Type-1 HARQ-ACK codebook. For example, if a TDRA table has more rows or the rows of the TDRA table include more pieces of scheduling information, the Type-1 HARQ-ACK codebook may include a larger number of PDSCH reception candidate occasions. Therefore, a problem may occur in which the size of the Type-1 HARQ-ACK codebook increases. To solve this problem, time-domain bundling may be configured.

When time-domain bundling is configured for the terminal, PDSCHs scheduled through multi-PDSCH scheduling in one DCI format deliver different TBs, but the terminal may bundle HARQ-ACKs of the TBs into one HARQ-ACK bit and transmit the same. Here, a bundling process may be determined by a binary AND operation of the HARQ-ACKs of the TBs of the PDSCHs received by the terminal.

PDSCHs which are not received by the terminal, for example, PDSCHs which cannot be received due to overlapping with a semi-static uplink symbol may be excluded from the binary AND operation.

When multi-PDSCH scheduling and time-domain bundling are configured, the terminal may obtain a Type-1 HARQ-ACK codebook similarly to PDSCH repetitive reception. The difference from PDSCH repetitive reception is as follows.

- In the case of PDSCH repetitive reception, when the last PDSCH is received in slot n-$K_{1,k}$, the terminal may repeatedly receive a PDSCH in previous $N_{PDSCH}^{max}$ slots. That is, a PDSCH may be repeatedly received in slot n-$K_{1,k}$, slot n-$K_{1,k}$-1, ..., and slot n-$K_{1,k}$-($N_{PDSCH}^{max}$-1).
- In the case of multi-PDSCH reception, when the last PDSCH is received in slot n-$K_{1,k}$, previous slots may be determined according to K0 values of scheduling information. For example, if one row of the TDRA table has two pieces of scheduling information, and the K0 values are K0_1 and K0_2 ($\geq$K0_1), a PDSCH according to first scheduling information and a PDSCH according to second scheduling information may be received in slot n-$K_{1,k}$-Delta_$K_1$ and slot n-$K_{1,k}$-Delta_$K_2$, respectively. Here, Delta_$K_i$ represents a difference between a K0 value of i-th scheduling information and a K0 value of the last scheduling information (a largest K0 value due to being the last scheduling information). That is, Delta_$K_1$=K0_2-K0_1 and Delta_$K_2$=K0_2-K0_2. In general, Delta_$K_i$ is represented as Delta_$K_i$=K0_max-K0_i. Here, K0_i is an i-th K0 value of multiple pieces of scheduling information, and K0_max is a K0 value (largest K0 value) of the last scheduling information.

- In the case of PDSCH repetitive reception, an SLIV of each slot is the same. That is, an SLIV of one piece of scheduling information has been applied to multiple slots.
- In the case of multi-PDSCH reception, an SLIV of each slot may be indicated according to multiple pieces of scheduling information. Therefore, the SLIV of each slot may be different depending on multiple pieces of scheduling information.
- In the case of PDSCH repetitive reception, a PDSCH of each slot receives the same TB repeatedly. Therefore, in the case of PDSCH repetitive reception, one HARQ-ACK for the TB may be generated without the need for a separate HARQ-ACK bundling process.
- In the case of multi-PDSCH reception, a different TB may be received for each PDSCH of each slot. Therefore, in the case of multi-PDSCH reception, HARQ-ACK of a separate TB may be generated for each PDSCH. If time-domain bundling is configured, one HARQ-ACK may be generated by bundling HARQ-ACKs of the TBs.

In consideration of the difference between PDSCH repetitive reception and multi-PDSCH reception, pseudo-code 2 may be modified to pseudo-code 4 as follows.

[pseudo-code 4: (multi-PDSCH scheduling and time-domain bundling configuration)]

- Preparation operation: Set R is a set of multiple pieces of scheduling information (slot information (hereinafter, K0 value) to which a PDSCH is mapped, and start symbol and length information (hereinafter, a starting and length value (SLIV))) configured in a TDRA table. If the terminal monitors one or more DCI formats, and the DCI formats use different TDRA tables, the set R is generated based on all TDRA tables.
- Operation 0: $M_{A,c}$ is initialized to an empty set. k is initialized to 0. j is initialized to 0.
- Operation 1: A k-th largest K1 value is selected from configured set K1. (For example, if k=0, a largest K1 value is selected from the set K1, and if k=1, a second largest K1 value is selected from the set K1.) The K1 value is referred to as $K_{1,k}$.
- Operation 2: If a symbol corresponding to start symbol and length information (SLIV) belonging to each row of set R and a symbol configured for uplink in a higher layer overlap in each of slots determined by K0 values of respective rows of set R and a slot (slot n-$K_{1,k}$) corresponding to a $K_{1,k}$ value of the row of set R, the row may be excluded from the set R. The slots determined by the K0 values of the respective rows include slot n-$K_{1,k}$-Delta_$K_1$ (i=0, 1, ..., the number of pieces of scheduling information in row-1), and Delta_$K_i$=K0_max-K0_i. Here, K0_i is an i-th K0 value of multiple pieces of scheduling information, and K0_max is a K0 value (largest K0 value) of the last scheduling information.
- Operation 3-1 (when the terminal has only UE capability of receiving a maximum of one unicast PDSCH in one slot): If the determined set R is not an empty set, the terminal adds j as a new PDSCH reception candidate occasion to set $M_{A,c}$. If one of PDSCH candidates of the set R is received, the terminal may place HARQ-ACK of the PDSCH in the new PDSCH candidate occasion of j. The terminal increases j by 1.
- Operation 3-2 (when the terminal only has UE capability of receiving more than one unicast PDSCH in one slot): The terminal collects only the last scheduling information of the determined set R to generate set R'. The terminal adds j as a new PDSCH reception candidate occasion to set $M_{A,c}$ for an SLIV which ends first in the set R' and SLIVs which overlap the SLIV in time. If one of PDSCH candidates having the SLIV is received, the terminal may place HARQ-ACK of the PDSCH in the new PDSCH candidate occasion of j. The terminal increases j by 1. The SLIVs are excluded from the set R'. Operation 3-2 is repeated until the set R' becomes an empty set.
- Operation 4: The terminal increases k by 1. If k is less than the cardinality of the set K1, operations start again from operation 2, and if k is equal to or greater than the cardinality of the set K1, pseudo-code 4 ends.

[End of pseudo-code 4]

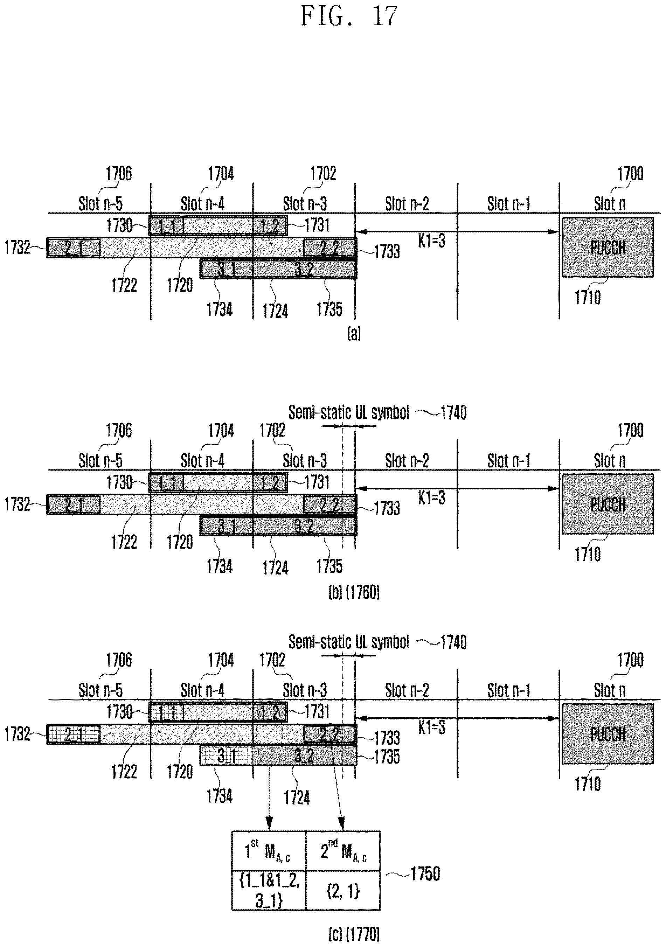

FIG. 17 illustrates an example of describing a pseudo-code for generating an HARQ-ACK codebook by configuring/applying time-domain bundling for a PDSCH repeatedly received in multiple slots according to an embodiment of the disclosure.

The above-described pseudo-code 4 is described using FIG. 17 as an example. A PUCCH 1710 including HARQ-ACK information may be transmitted in slot n 1700. For example, the HARQ-ACK information may be generated in the form of a Type-1 HARQ-ACK codebook.

As shown in Table 28, a terminal may receive a configuration of a TDRA table having rows including multiple pieces of scheduling information.

The terminal may determine set $M_{A,c}$ of PDSCH reception candidate occasions, based on the K1 value and set R. Referring to FIG. 17, the pseudo-code 4 may be interpreted as follows. In the following description, it is assumed that the terminal has UE capability of receiving more than one unicast PDSCH in one slot.

- Operation 0: $M_{A,c}$ is initialized to an empty set. k is initialized to 0. j is initialized to 0.
- Operation 1: A k-th (k=0) largest K1 value is selected from configured set K1. The K1 value is $K_{1,0}$=3.
- Operation 2: If a symbol corresponding to start symbol and length information (SLIV) belonging to each row of set R and a symbol configured for uplink in a higher layer overlap in each of slots determined by K0 values of respective rows of set R and a slot (e.g., slot n-3 1702) corresponding to a $K_{1,k}$ value of the row of the set R, the row may be excluded from the set R. The slots determined by the K0 values of the respective rows include slot n-$K_{1,k}$-Delta_$K_1$ (i=0, 1, ..., the number of pieces of scheduling information in row-1), and Delta_$K_i$=K0_max-K0_i. Here, K0_i is an i-th K0 value of multiple pieces of scheduling information, and K0_max is a K0 value (largest K0 value) of the last scheduling information.

For a first row, K0_0=0, K0_1=1, and thus Delta_$K_0$=1 and Delta_$K_1$=0. Therefore, in each of slot (n-3)-(Delta_$K_0$)=slot n-4 1704 and slot (n-3)-(Delta_$K_1$)=slot n-3 1702, both SLIVs 1730 and 1731 according to two pieces of scheduling information in the first row do not overlap a semi-static uplink symbol, and thus the first row may not be excluded from the set R.

For a second row, K0_0=0, K0_1=2, and thus Delta_$K_0$=2 and Delta_$K_1$=0. Therefore, in each of slot (n-3)-(Delta_$K_0$)=slot n-5 1706 and slot (n-3)-(Delta_$K_1$)=slot n-3 1702, a second SLIV 1733 of two SLIVs 1732 and 1733 according to two pieces of scheduling information in the second row overlaps a semi-static uplink symbol 1740 but a first SLIV of the two SLIVs does not overlap the semi-static uplink symbol, and thus the second row may not be excluded from the set R.

For a third row, K0_0=0, K0_1=1, and thus Delta_$K_0$=1 and Delta_$K_1$=0. Therefore, in each of slot (n-3)-(Delta_$K_0$)=slot n-4 1704 and slot (n-3)-(Delta_$K_1$)=slot n-3 1702, a second SLIV 1735 of two SLIVs 1734 and 1735 according to two pieces of scheduling information in the third row overlaps a semi-static uplink symbol 1740 but a first SLIV of the two SLIVs does not overlap the semi-static uplink symbol, and thus the third row may not be excluded from the set R.

Therefore, the set R may include row 1, row 2, and row 3 1720, 1722, and 1724 (1760).

- Operation 3-2 (when the terminal has UE capability of receiving more than one unicast PDSCH in one slot):

  • Set R' is generated by collecting only the last scheduling information of the determined set R. In the set R', row 1 1720 includes SLIV 1_2 1731, row 2 1722 includes SLIV 2_2 1733, and row 3 1724 includes SLIV 3_2 1735.
  • j=0 is added as a new PDSCH reception candidate occasion to set $M_{A,c}$ for an SLIV which ends first in the determined set R' and SLIVs which overlap the SLIV in time. Here, the SLIV which ends first is SLIV 1_2 (0,4) 1731 of row 1 1720, and an SLIV overlapping the SLIV is SLIV 3_2 (0,14) 1735 of row 3 1724. Therefore, if j=0 is added to $M_{A,c}$, and the terminal receives a PDSCH scheduled with SLIV 1_2 (0,4) 1731 of row 1 1720 or SLIV 3_2 (0,14) 1735 of row 3 1724, HARQ-ACK of the PDSCH may be included in a position corresponding to the first (j=0) $M_{A,c}$ in a type-1 HARQ-ACK codebook 1750.
  • HARQ-ACKs of PDSCHs scheduled together are bundled. For example, if the terminal receives a PDSCH scheduled with SLIV 1_2 (0,4) 1731 of row 1 1720, HARQ-ACK of the PDSCH and HARQ-ACK of a PDSCH scheduled with SLIV 1_1 (0,4) 1730, which is scheduled together with the PDSCH, are bundled. For example, if the terminal receives a PDSCH scheduled with SLIV 3_2 (0,14) 1735 of row 3 1724, HARQ-ACK of the PDSCH and HARQ-ACK of a PDSCH scheduled with SLIV 3_1 (7,7) 1734, which is scheduled together with the PDSCH, are bundled.

If some PDSCHs overlap with a semi-static uplink, HARQ-ACKs of the PDSCHs are excluded from a bundling process. For example, SLIV 3_2 (0,14) 1735 overlaps the semi-static uplink symbol, and thus HARQ-ACK of the PDSCH corresponding to SLIV 3_2 1735 is excluded from the bundling process.

  • The terminal increases j by 1 so that j=1. The SLIVs of row 1 and row 3 are excluded from the set R', so that R'={2}. Since the set R is not an empty set, operation 3-2 is repeated.
  • The terminal adds j=1 as a new PDSCH reception candidate occasion to set $M_{A,c}$ for an SLIV which ends first in the determined set R' and SLIVs which overlap the SLIV in time. Here, the SLIV which ends first is SLIV 2_2 (7,7) 1733 of row 2 1722, and there is no SLIV overlapping the SLIV. Therefore, if j=1 is added to $M_{A,c}$, and the terminal receives a PDSCH scheduled with SLIV 2_2 (7,7) 1733 of row 2, HARQ-ACK of the PDSCH may be included in a position corresponding to the second (j=1) $M_{A,c}$ in the type-1 HARQ-ACK codebook 1750.

- HARQ-ACKs of PDSCHs scheduled together are bundled. For example, if the terminal receives a PDSCH scheduled with SLIV 2_2 (7,7) 1733 of row 2 1722, HARQ-ACK of the PDSCH and HARQ-ACK of a PDSCH scheduled with SLIV 2_1 (0,7) 1732, which is scheduled together with the PDSCH, are bundled. If some PDSCHs overlap with a semi-static uplink, HARQ-ACKs of the PDSCHs are excluded from the bundling process. For example, SLIV 2_2 (7,7) 1733 overlaps the semi-static uplink symbol, and thus HARQ-ACK of the PDSCH corresponding to SLIV 2_2 is excluded from the bundling process.

- The terminal increases j by 1 so that j=2. The SLIVs of row 2 are excluded from the set R', so that the set R' is an empty set. Since the set R' is an empty set, operation 3-2 ends.

  - Operation 4: The terminal increases k by 1 so that k=1. Since k=1 is equal to 1, which is the cardinality of the set K1, pseudo-code 4 ends.

Therefore, referring to FIG. 17, the terminal may determine $M_{A,c}$ corresponding to two PDSCH reception candidate occasions of j=0 and j=1 (1770). The size of the Type-1 HARQ-ACK codebook may be determined according to the number of PDSCH reception candidate occasions. The actual number of bits per PDSCH reception candidate occasion may be determined according to a configuration such as the number of transport blocks included in each PDSCH, the number of code block groups (CBGs) included in each PDSCH, or spatial bundling.

The above-described pseudo-code for the Type-1 HARQ-ACK codebook for single PDSCH reception and multi-PDSCH reception is described in 9.1.2.1 of 3GPP standard document TS38.213. In this disclosure, for description, the pseudo-code of v17.0.0 of the standard document will be described. The pseudo-code is shown in Table 30.

【Table 30】

| |
|---|
| while $r < \mathrm{C}(R)$ |
| if the UE is not provided *enableTimeDomainHARQ-Bundling* and is provided *tdd-UL-DL-ConfigurationCommon*, or *tdd-UL-DL-ConfigurationDedicated* and, for each slot from slot $\lfloor (n_U - K_{1,k}) \cdot 2^{\mu_{DL} - \mu_{UL}} \rfloor + n_D - N_{\mathrm{PDSCH}}^{\mathrm{repeat,max}} + 1$ to slot $\lfloor (n_U - K_{1,k}) \cdot 2^{\mu_{DL} - \mu_{UL}} \rfloor + n_D$, at least one symbol of the PDSCH time resource derived by row $r$ is configured as UL where $K_{1,k}$ is the $k$-th slot timing value in set $K_1$, or if HARQ-ACK information for PDSCH time resource derived by row $r$ in slot $\lfloor (n_U - K_{1,k}) \cdot 2^{\mu_{DL} - \mu_{UL}} \rfloor + n_D$ cannot be provided in slot $n_U$ |
| $R = R \backslash r$; |
| elseif the UE is provided *enableTimeDomainHARQ-Bundling* and *tdd-UL-DL-ConfigurationCommon*, or *tdd-UL-DL-ConfigurationDedicated* and, for each slot $\lfloor (n_U - K_{1,k}) \cdot 2^{\mu_{DL} - \mu_{UL}} \rfloor + n_D - \Delta K_{0,r}(d)$, at least one symbol of the PDSCH time resource |

derived by row $r$ of set $R'$ is configured as UL, where $d = 0,1,\dots,\mathrm{C}\big(\Delta K_{0,r}\big) - 1$, $\Delta K_{0,r} = \max_{K_0}\big(K_{0,r}\big) - K_{0,r}$, and $\mathrm{C}\big(\Delta K_{0,r}\big)$ is the cardinality of $\Delta K_{0,r}$.

$R = R\backslash r;$

$R' = R'\backslash r;$

else

$r = r + 1;$

end if

end while

<Type-1 HARQ-ACK CB for multi-PDSCH reception, time-domain bundling, and PDSCH repetitive reception>

In the above, PDSCH repetitive reception has not been considered in the method for generating a Type-1 HARQ-ACK codebook for multi-PDSCH reception and the method for generating a Type-1 HARQ-ACK codebook for multi-PDSCH reception and time-domain bundling.

The disclosure provides a method for generating a Type-1 HARQ-ACK codebook when multi-PDSCH reception and PDSCH repetitive reception are configured for a terminal. Unless otherwise mentioned, in the following description, it may be assumed that time-domain bundling is configured.

As described above, if the terminal receives a configuration of *"pdsch-TimeDomainAllocationListForMultiPDSCH-r17 provided in PDSCH-Config"* which is TDRA table configuration information for multi-PDSCH scheduling, the *"pdsch-TimeDomainAllocationListForMultiPDSCH-rl7 provided in PDSCH-Config"* may be applied to DCI format 1_1. However, the *"pdsch-TimeDomainAllocationListForMultiPDSCH-r17 provided in PDSCH-Config"* cannot be applied to DCI format 1_0 to DCI format 1_2. Therefore, DCI format 1_0 and DCI format 1_2 cannot be used for multi-PDSCH scheduling.

In addition, as described above, if the terminal receives a configuration of *"pdsch-AggregationFactor in pdsch-config"* or *"pdsch AggregationFactor in sps-Config"*, a PDSCH scheduled in DCI format 1_1 or DCI format 1_2 may be repeatedly received in multiple slots according to the configuration. However, if multi-PDSCH scheduling (*PDSCH-Config includes pdsch-TimeDomainAllocationListForMultiPDSCH-r17*) is configured in DCI format 1_1, the *"pdsch-AggregationFactor in pdsch-config"* and *"pdsch-AggregationFactor in sps-Config"* are applied only in DCI format 1_2. That is, the PDSCH scheduled in DCI format 1_1 is not repeatedly received by ignoring the configuration, and the PDSCH scheduled in DCI format 1_2 may be repeatedly received according to the configuration.

Therefore, a Type-1 HARQ-ACK codebook needs to include HARQ-ACK information for PDSCH reception in one slot scheduled in DCI format 1_0, PDSCH reception for delivering different TBs in multiple slots scheduled in DCI format 1_0, and PDSCH reception for delivering the same TB in multiple slots scheduled in DCI format 1_2. A method therefor is disclosed.

Unless otherwise stated in the following description, set R may refer to the union of rows of TDRA tables of all DCI formats.

[Method 1: Differentially applying the number of repetitions, based on which DCI format TDRA Table an SLIV of a row of set R belongs to]

As one method of the disclosure, a terminal may determine which DCI format TDRA table an SLIV of each row of set R belongs to. The terminal may determine the number of repetitions (e.g., $N_{PSCH}^{max}$) to be applied to the SLIV of each row, based on the determination. The terminal may determine whether the row is to be excluded from the set R, based on the number of repetitions. For example, when determining whether the row is to be excluded from the set R, the terminal may determine the same based on a semi-static uplink symbol.

Specifically, an example is described based on Table 31 which is a TDRA table including only single-scheduling information, and Table 32 which is a TDRA table including multiple pieces of scheduling information. Tables 31 and 32 are only examples for convenience of description and do not limit the technical scope of the disclosure. Therefore, row configurations and values of each TDRA table may vary. A third DCI format of the terminal may include two rows of the TDRA table as in Table 31. In addition, a fourth DCI format of the terminal may include three rows of the TDRA table as in Table 32. The third DCI format is a DCI format that does not support multi-PDSCH scheduling, and the fourth DCI format is a DCI format that supports multi-PDSCH scheduling.

PDSCH repetitive reception may be applied to the third DCI format. That is, the terminal may repeatedly receive a PDSCH scheduled in the third DCI format in $N_{PDSCH}^{max}$ slots. However, PDSCH repetitive reception cannot be applied to the fourth DCI format. That is, the terminal does not repeatedly receive a PDSCH scheduled in the fourth DCI format. This is also applied to a row (for example, index 3 in Table 32) having single-scheduling information in the fourth DCI format.

The terminal may generate Table 33 by using the union of the TDRA tables. For reference, row 2 of Table 31 and row 3 of Table 32 include the same SLIV and the same K0 value and are thus represented by the same index. Here, the indexes are newly assigned.

[Table 31]

| Index | K0 | SLIV (S,L) |
|---|---|---|
| 1 | 0 | SLIV 1 (0,7) |
| 2 | 0 | SLIV 2 (7,7) |

[Table 32]

| Index | First scheduling information | | Second scheduling information | |
|---|---|---|---|---|
| | K0 | SLIV (S,L) | K0 | SLIV (S,L) |
| 1 | 0 | SLIV 1_1 (0,4) | 1 | SLIV 1_2 (0,4) |
| 2 | 0 | SLIV 2_1 (0,7) | 2 | SLIV 2_2 (7,7) |
| 3 | 0 | SLIV 3_1 (7,7) | | |

[Table 33]

| Index | First scheduling information | | Second scheduling information | |
|---|---|---|---|---|
| | K0 | SLIV (S,L) | K0 | SLIV (S,L) |
| 1 | 0 | SLIV 1_1 (0,4) | 1 | SLIV 1_2 (0,4) |
| 2 | 0 | SLIV 2_1 (0,7) | 2 | SLIV 2_2 (7,7) |
| 3 | 0 | SLIV 3_1 (7,7) | | |
| 4 | 0 | SLIV 4_1 (0,7) | - | - |

The terminal may generate set R including indexes of the union of the TDRA tables. That is, the set R may include {1, 2, 3, 4}.

The terminal may determine a DCI format to which scheduling information of each index belongs. For example, in the case of index 1, it may be determined that scheduling information belongs to a TDRA table of the fourth DCI format. In the case of index 2, it may be determined that scheduling information belongs to the TDRA table of the fourth DCI format. In the case of index 3, it may be determined that scheduling information belongs to a TDRA table of the third DCI format and the TDRA table of the fourth DCI format. In the case of index 4, it may be determined that scheduling information belongs to the TDRA table of the third DCI format.

If the terminal determines that a row of set R belongs only to the fourth DCI format, $N_{PDSCH}^{max}=1$ may be determined. $N_{PDSCH}^{max}=1$ indicates that the terminal does not receive a PDSCH repeatedly.

If the terminal determines that a row of set R belongs to the third DCI format, $N_{PDSCH}^{max}$ may be determined based on *pdsch-AggregationFactor*. A method for determining $N_{PDSCH}^{max}$ by the terminal is as follows. For example, if the terminal receives a configuration of *"pdsch-AggregationFactor in PDSCH-Config"*, the terminal may use a value of *"pdsch-AggregationFactor in PDSCH-Config"* as $N_{PDSCH}^{max}$. If the terminal receives a configuration of *"pdsch AggregationFactor-rl6 in SPS-Config"*, the terminal may use a value of *"pdsch-AggregationFactor-r16 in SPS-Config"* as $N_{PDSCH}^{max}$. If the terminal receives a configuration of both *"pdsch AggregationFactor in PDSCH-Config"* and *"pdsch*

*AggregationFactor-rl6 in SPS-Config"*, the terminal may use, as $N_{PDSCH}^{max}$, a larger value among the value of *"pdsch-AggregationFactor in PDSCH-Config"* and the value of *"pdsch-AggregationFactor-r16 in SPS-Config".*

For reference, a row of set R may belong to both the third DCI format and the fourth DCI format. For example, row 3 of Table 33 may belong to both the third DCI format and the fourth DCI format. In this case, the terminal may use, as $N_{PDSCH}^{max}$, a larger value among the obtained $N_{PDSCH}^{max}$ values. In other words, the $N_{PDSCH}^{max}$ value of the third DCI format may be used.

In the description of the disclosure, the terminal assumes two DCI formats, but the DCI formats may be extended to two or more. Even in this case, the terminal may identify a DCI format to which a row of set R belongs, and obtain an $N_{PDSCH}^{max}$ value of each DCI format.

[pseudo-code 5: (multi-PDSCH scheduling, time-domain bundling configuration, PDSCH repetitive reception configuration - method 1)]

- Preparation operation: Set R is a set of multiple pieces of scheduling information (slot information (hereinafter, K0 value) to which a PDSCH is mapped, and start symbol and length information (hereinafter, a starting and length value (SLIV))) configured in a TDRA table. If the terminal monitors one or more DCI formats, and the DCI formats use different TDRA tables, the set R is generated based on all TDRA tables.
- Operation 0: $M_{A,c}$ is initialized to an empty set. k is initialized to 0. j is initialized to 0.
- Operation 1: A k-th largest K1 value is selected from configured set K1. (For example, if k=0, a largest K1 value is selected from the set K1, and if k=1, a second largest K1 value is selected from the set K1.) The K1 value is referred to as $K_{1,k}$.
- Operation 2: A row may be excluded from the set R according to the following two conditions.

Condition 1) If a row of set R belongs to the third DCI format, and if a symbol corresponding to start symbol and length information (SLIV) belonging to each row of set R and a symbol configured for uplink in a higher layer overlap in each of previous $N_{PDSCH}^{max}$ slots (slot n-$K_{1,k}$-($N_{PDSCH}^{max}$-1), slot n-$K_{1,k}$-($N_{PDSCH}^{max}$-1)+1, ..., slot n-$K_{1,k}$) from a slot (slot n-$K_{1,k}$) corresponding to a $K_{1,k}$ value of the row of set R, the row may be excluded from the set R. $N_{PDSCH}^{max}$ is a value determined based on *pdsch-AggregationFactor.*

Condition 2) If the aforementioned condition 1 is not satisfied (that is, if a row belongs to the fourth DCI format), and if a symbol corresponding to start symbol and length information (SLIV) belonging to each row of set R and a symbol configured for uplink in a higher layer overlap in each of slots determined by K0 values of respective rows of the set R and a slot (slot n-$K_{1,k}$) corresponding to a $K_{1,k}$ value of the row of the set R, the row may be excluded from the set R. The slots determined by the K0 values of the respective rows include slot n-$K_{1,k}$-Delta _Ki (i=0, 1, ..., the number of pieces of scheduling information in row-1), and Delta_Ki=K0_max-K0_i. Here, K0_i is an i-th K0 value of multiple pieces of scheduling information, and K0_max is a K0 value (largest K0 value) of the last scheduling information.

- Operation 3-1 (when the terminal has only UE capability of receiving a maximum of one unicast PDSCH in one slot): If the determined set R is not an empty set, the terminal adds j as a new PDSCH reception candidate occasion to set $M_{A,c}$. If one of PDSCH candidates of the set R is received, the terminal may place HARQ-ACK of the PDSCH in the new PDSCH candidate occasion of j. The terminal increases j by 1.
- Operation 3-2 (when the terminal only has UE capability of receiving more than one unicast PDSCH in one slot): The terminal collects only the last scheduling information of the determined set R to generate set R'. The terminal adds j as a new PDSCH reception candidate occasion to set $M_{A,c}$ for an SLIV which ends first in the set R' and SLIVs which overlap the SLIV in time. If one of PDSCH candidates having the SLIV is received, the terminal may place HARQ-ACK of the PDSCH in the new PDSCH candidate occasion of j. The terminal increases j by 1. The SLIVs are excluded from the set R'. Operation 3-2 is repeated until the set R' becomes an empty set.
- Operation 4: The terminal increases k by 1. If k is less than the cardinality of the set K1, operations start again from operation 2, and if k is equal to or greater than the cardinality of the set K1, pseudo-code 5 ends.

[End of pseudo-code 5]

A pseudo-code according to the method 1 of the disclosure may be as shown in Tables 34 and 35.

【Table 34】

<Pseudo code #1>

while $r < \mathrm{C}(R)$

Set $X = N_{\mathrm{PDSCH}}^{\mathrm{repeat,max}}$ if *PDSCH-TimeDomainResourceAllocationListForMultiPDSCH* is not provided or if *PDSCH-TimeDomainResourceAllocationListForMultiPDSCH* is provided and the PDSCH time resource derived by row $r$ is associated with DCI format 1_2, if monitored, or $X=1$ otherwise.

if the UE is not provided *enableTimeDomainHARQ-Bundling* and is provided *tdd-UL-DL-ConfigurationCommon*, or *tdd-UL-DL-ConfigurationDedicated* and, for each slot from slot $\left\lfloor \left(n_U - K_{1,k}\right) \cdot 2^{\mu_{DL} - \mu_{UL}}\right\rfloor + n_D - X + 1$ to slot $\left\lfloor \left(n_U - K_{1,k}\right) \cdot 2^{\mu_{DL} - \mu_{UL}}\right\rfloor + n_D$, at least one symbol of the PDSCH time resource derived by row $r$ is configured as UL where $K_{1,k}$ is the $k$-th slot timing value in set $K_1$, or if HARQ-ACK information for PDSCH time resource derived by row $r$ in slot $\left\lfloor \left(n_U - K_{1,k}\right) \cdot 2^{\mu_{DL} - \mu_{UL}}\right\rfloor + n_D$ cannot be provided in slot $n_U$,

$$R = R\backslash r;$$

elseif the UE is provided *enableTimeDomainHARQ-Bundling* and *tdd-UL-DL-ConfigurationCommon*, or *tdd-UL-DL-ConfigurationDedicated* and,

if the PDSCH time resource derived by row $r$ is associated with DCI format 1_2, if monitored, and if for each slot from slot $\lfloor (n_U - K_{1,k}) \cdot 2^{\mu_{DL} - \mu_{UL}} \rfloor + n_D - X + 1$ to slot $\lfloor (n_U - K_{1,k}) \cdot 2^{\mu_{DL} - \mu_{UL}} \rfloor + n_D$, at least one symbol of the PDSCH time resource derived by row $r$ is configured as UL where $K_{1,k}$ is the $k$-the slot timing value in set $K_1$,

$$R = R\backslash r;$$

$$R' = R'\backslash r;$$

else for each slot $\lfloor (n_U - K_{1,k}) \cdot 2^{\mu_{DL} - \mu_{UL}} \rfloor + n_D - \Delta K_{0,r}(d)$, at least one symbol of the PDSCH time resource derived by row $r$ of set $R'$ is configured as UL, where $d = 0,1,\ldots,\mathrm{C}(\Delta K_{0,r}) - 1$, $\Delta K_{0,r} = \max_{K_0}(K_{0,r}) - K_{0,r}$, and $\mathrm{C}(\Delta K_{0,r})$ is the cardinality of $\Delta K_{0,r}$.

$$R = R\backslash r;$$

$$R' = R'\backslash r;$$

endif

else

$$r = r + 1;$$

end if

end while

【Table 35】

<Pseudo code #2>

while $r < \mathrm{C}(R)$

if the UE is not provided *PDSCH-TimeDomainResourceAllocationListForMultiPDSCH* and is provided *tdd-UL-DL-ConfigurationCommon*, or *tdd-UL-DL-ConfigurationDedicated* and, for each slot from slot $\left\lfloor (n_U - K_{1,k}) \cdot 2^{\mu_{DL} - \mu_{UL}} \right\rfloor + n_D - N_{\mathrm{PDSCH}}^{\mathrm{repeat,max}} + 1$ to slot $\left\lfloor (n_U - K_{1,k}) \cdot 2^{\mu_{DL} - \mu_{UL}} \right\rfloor + n_D$, at least one symbol of the PDSCH time resource derived by row $r$ is configured as UL

$R = R \backslash r;$

elseif the UE is provided *PDSCH-TimeDomainResourceAllocationListForMultiPDSCH* and if the UE is not provided *enableTimeDomainHARQ-Bundling*

if the UE is provided *tdd-UL-DL-ConfigurationCommon*, or *tdd-UL-DL-ConfigurationDedicated* and for each slot from slot $\lfloor(n_U - K_{1,k}) \cdot 2^{\mu_{DL}-\mu_{UL}}\rfloor + n_D - X + 1$ to slot $\lfloor(n_U - K_{1,k}) \cdot 2^{\mu_{DL}-\mu_{UL}}\rfloor + n_D$, at least one symbol of the PDSCH time resource derived by row $r$ is configured as UL or if HARQ-ACK information for PDSCH time resource derived by row $r$ in slot $\lfloor(n_U - K_{1,k}) \cdot 2^{\mu_{DL}-\mu_{UL}}\rfloor + n_D$ cannot be provided in slot $n_U$, where $X = N_{PDSCH}^{repeat,max}$ if the PDSCH time resource derived by row $r$ is associated with DCI format 1_2, if monitored, or $X=1$ otherwise.

$R = R\backslash r$;

elseif the UE is provided *PDSCH-TimeDomainResourceAllocationListForMultiPDSCH* and *enableTimeDomainHARQ-Bundling*

if the UE is provided *tdd-UL-DL-ConfigurationCommon*, or *tdd-UL-DL-ConfigurationDedicated* and for each slot $\lfloor(n_U - K_{1,k}) \cdot 2^{\mu_{DL}-\mu_{UL}}\rfloor + n_D - \Delta K_{0,r}(d)$, at least one symbol of the PDSCH time resource derived by row $r$ of set $R'$ is configured as UL, where $d = 0,1,\dots,C(\Delta K_{0,r}) - 1$

$R = R\backslash r$;

$R' = R'\backslash r$;

endif

else

$r = r + 1$;

end if

end while

[Method 2: Differentially applying the number of repetitions according to the number of SLIVs of rows of set R]

As one method of the disclosure, a terminal may determine the number of SLIVs of each row of set R. The terminal may determine the number of repetitions (e.g., $N_{PDSCH}^{max}$) to be applied to the SLIV of each row, based on the determination. The terminal may determine whether the row is to be excluded from the set R, based on the number of repetitions. For example, when determining whether the row is to be excluded from the set R, the terminal may determine the same based on a semi-static uplink symbol.

As a specific example, descriptions are provided based on Table 31 which is a TDRA table including only single-scheduling information, and Table 32 which is a TDRA table including multiple pieces of scheduling information. The third DCI format of the terminal may include two rows of the TDRA table as in Table 31. In addition, the fourth DCI format of the terminal may include three rows of the TDRA table as in Table 32.

PDSCH repetitive reception may be applied to the third DCI format. That is, the terminal may repeatedly receive a PDSCH scheduled in the third DCI format in $N_{PDSCH}^{max}$ slots. However, PDSCH repetitive reception cannot be applied to the fourth DCI format. That is, the terminal does not repeatedly receive a PDSCH scheduled in the fourth DCI format. This is also applied to a row having single-scheduling information in the fourth DCI format.

The terminal may generate Table 33 by using the union of the TDRA tables. The terminal may generate set R including indexes of the union of the TDRA tables. That is, the set R may include {1, 2, 3, 4}.

The terminal may determine the number of piece of scheduling information (e.g., SLIV) of each index. For example, in the case of index 1, it may be determined that two pieces of scheduling information are included. In the case of index 2, it may be determined that two pieces of scheduling information are included. In the case of index 3, it may be determined that one piece of scheduling information is included. In the case of index 4, it may be determined that one piece of scheduling information is included.

The terminal may determine the number of repetitions (e.g., $N_{PDSCH}^{max}$), based on the number of pieces of scheduling information included in each row of set R. If the terminal determines that two or more pieces of scheduling information belong to a row of set R, $N_{PDSCH}^{max}=1$ may be determined. $N_{PDSCH}^{max}=1$ indicates that a PDSCH is not repeatedly received.

If the terminal determines that one piece of scheduling information belongs to a row of set R, $N_{PDSCH}^{max}$ may be determined based on *pdsch-AggregationFactor*. A method for determining $N_{PDSCH}^{max}$ by the terminal is as follows. For example, if the terminal receives a configuration of *pdsch-AggregationFactor in PDSCH-Config,* the terminal may use, as $N_{PDSCH}^{max}$, a value of *pdsch-AggregationFactor* in *PDSCH-Config.* If the terminal receives a configuration of *pdsch-AggregationFactor-r16 in SPS-Config,* the terminal may use, as $N_{PDSCH}^{max}$, a value of *pdsch-AggregationFactor-r16 in SPS-Config.* If the terminal receives a configuration of both *pdsch-AggregationFactor in PDSCH-Config* and *pdsch-AggregationFactor-r16 in SPS-Config,* the terminal may use, as $N_{PDSCH}^{max}$, a larger value among the value of *pdsch-AggregationFactor in PDSCH-Config* and the value of *pdsch-AggregationFactor-r16 in SPS-Config.*

[pseudo-code 6: (multi-PDSCH scheduling, time-domain bundling configuration, and PDSCH repetitive reception configuration - method 2)]

- Preparation operation: Set R is a set of multiple pieces of scheduling information (slot information (hereinafter, K0 value) to which a PDSCH is mapped, and start symbol and length information (hereinafter, a starting and length value (SLIV))) configured in a time domain resource assignment (TDRA) table. If the terminal monitors one or more DCI formats, and the DCI formats use different TDRA tables, the set R is generated based on all TDRA tables.
- Operation 0: $M_{A,c}$ is initialized to an empty set. k is initialized to 0. j is initialized to 0.
- Operation 1: A k-th largest K1 value is selected from configured set K1. (For example, if k=0, a largest K1 value is selected from the set K1, and if k=1, a second largest K1 value is selected from the set K1.) The K1 value is referred to as $K_{1,k}$.
- Operation 2: A row may be excluded from the set R according to the following two conditions.

Condition 1) If a row of set R includes one piece of scheduling information, and if a symbol corresponding to start symbol and length information (SLIV) belonging to each row of set R and a symbol configured for uplink in a higher layer overlap in each of previous $N_{PDSCH}^{max}$ slots (slot n-$K_{1,k}$-($N_{PDSCH}^{max}$-1), slot n-$K_{1,k}$-($N_{PDSCH}^{max}$-1)+1, ..., slot n-$K_{1,k}$) from a slot (slot n-$K_{1,k}$) corresponding to a $K_{1,k}$ value of the row of set R, the row may be excluded from the set R. Here, $N_{PDSCH}^{max}$ is a value determined based on *pdsch-AggregationFactor*.

Condition 2) If the aforementioned condition 1 is not satisfied (that is, if a row includes multiple pieces of scheduling information), and if a symbol corresponding to start symbol and length information (SLIV) belonging to each row of set R and a symbol configured for uplink in a higher layer overlap in each of slots determined by K0 values of respective rows of set R and a slot (slot n-$K_{1,k}$) corresponding to a $K_{1,k}$ value of the row of set R, the row may be excluded from the set R. The slots determined by the K0 values of the respective rows include slot n-$K_{1,k}$-Delta_$K_i$ (i=0, 1, ..., the number of pieces of scheduling information in row-1), and Delta_$K_i$=K0_max-K0_i. Here, K0_i is an i-th K0 value of multiple pieces of scheduling information, and K0_max is a K0 value (largest K0 value) of the last scheduling information.

- Operation 3-1 (when the terminal has only UE capability of receiving a maximum of one unicast PDSCH in one slot): If determined set R is not an empty set, the terminal adds j as a new PDSCH reception candidate occasion to set $M_{A,c}$. If one of PDSCH candidates of set R is received, the terminal may locate HARQ-ACK of the PDSCH in the new PDSCH candidate occasion of j. The terminal increases j by 1.
- Operation 3-2 (when the terminal has UE capability of receiving more than one unicast PDSCH in one slot): The terminal collects only the last scheduling information of the determined set R to generate set R'. • The terminal adds j as a new PDSCH reception candidate occasion to set $M_{A,c}$ for an SLIV which ends first in set R' and SLIVs which overlap the SLIV in time. When one of PDSCH candidates having the SLIV is received, the terminal may place HARQ-ACK of the PDSCH in the new PDSCH candidate occasion of j. The terminal increases j by 1. The SLIVs are excluded from set R'. Operation 3-2 is repeated until set R' becomes an empty set.
- Operation 4: The terminal increases k by 1. If k is less than the cardinality of set K1, operations start again from operation 2, and if k is equal to or greater than the cardinality of set K1, pseudo-code 6 ends.

[End of pseudo-code 6]

A pseudo-code according to the above-described method 2 above may be as in Table 36.

【Table 36】

<Pseudo-code #3>

while $r < C(R)$

if the UE is not provided *enableTimeDomainHARQ-Bundling* and is provided *tdd-UL-DL-ConfigurationCommon*, or *tdd-UL-DL-ConfigurationDedicated* and, for each slot from slot $\lfloor (n_U - K_{1,k}) \cdot 2^{\mu_{DL}-\mu_{UL}} \rfloor + n_D - N_{\text{PDSCH}}^{\text{repeat,max}} + 1$ to slot $\lfloor (n_U - K_{1,k}) \cdot 2^{\mu_{DL}-\mu_{UL}} \rfloor + n_D$, at least one symbol of the PDSCH time resource derived by row $r$ is configured as UL where $K_{1,k}$ is the $k$-th slot timing value in set $K_1$, or if HARQ-ACK information for PDSCH time

resource derived by row $r$ in slot $\lfloor (n_U - K_{1,k}) \cdot 2^{\mu_{DL}-\mu_{UL}} \rfloor + n_D$ cannot be provided in slot $n_U$

$R = R \backslash r;$

elseif the UE is provided *enableTimeDomainHARQ-Bundling* and *tdd-UL-DL-ConfigurationCommon*, or *tdd-UL-DL-ConfigurationDedicated* and, for each slot $\lfloor (n_U - K_{1,k}) \cdot 2^{\mu_{DL}-\mu_{UL}} \rfloor + n_D - \Delta K_{0,r}(d)$, at least one symbol of the PDSCH time resource derived by row $r$ of set $R'$ is configured as UL, where $d = 0,1,...,C(\Delta K_{0,r}) - 1$, $\Delta K_{0,r} = \max_{K_0}(K_{0,r}) - K_{0,r}$, and $C(\Delta K_{0,r})$ is the cardinality of $\Delta K_{0,r}$ and if the UE is configured to monitor DCI format 1_2 and the row $r$ of set $R$ contains single SLIV, for each slot from slot $\lfloor (n_U - K_{1,k}) \cdot 2^{\mu_{DL}-\mu_{UL}} \rfloor + n_D - N_{\text{PDSCH}}^{\text{repeat,max}} + 1$ to slot $\lfloor (n_U - K_{1,k}) \cdot 2^{\mu_{DL}-\mu_{UL}} \rfloor + n_D$ at least one symbol of the PDSCH time resource derived by row $r$ of set $R$ is configured as UL.

$R = R \backslash r;$

$R' = R' \backslash r;$

else

$r = r + 1;$

end if

end while

[Method 3: Generating set R by considering $N_{\text{PDSCH}}^{\text{max}}$]

As one method of the disclosure, when generating set R, a terminal may generate set R by considering $N_{\text{PDSCH}}^{\text{max}}$. Here, if a row of the TDRA table includes single-scheduling information and a PDSCH is repeatedly received according to $N_{PDSCH}^{max}$, the terminal may consider the row to include $N_{PDSCH}^{max}$ pieces of scheduling information so as to include the same in set R. The terminal may generate a Type-1 HARQ-ACK codebook with the above-described pseudo-code, based on the set R.

More specifically, descriptions are provided based on Table 31 which is a TDRA table including only single-scheduling information, and Table 32 which is a TDRA table including multiple pieces of scheduling information. The third DCI format of the terminal may include two rows of the TDRA table as in Table 31. In addition, the fourth DCI format of the terminal may include three rows of the TDRA table as in Table 32. For reference, the third DCI format is a DCI format that does not support multi-PDSCH scheduling, and the fourth DCI format is a DCI format that supports multi-PDSCH scheduling.

PDSCH repetitive reception may be applied to the third DCI format. That is, the terminal may repeatedly receive a PDSCH scheduled in the third DCI format in $N_{PDSCH}^{max}$ slots. However, PDSCH repetitive reception cannot be applied to the fourth DCI format. That is, the terminal does not repeatedly receive a PDSCH scheduled in the fourth DCI format. This is also applied to a row having single-scheduling information in the fourth DCI format.

Table 31, which is a TDRA table including only single-scheduling information, may be represented as a TDRA table having multiple pieces of scheduling information as in Table 37 according to the number of repetitions $N_{PDSCH}^{max}$. Here, $N_{PDSCH}^{max}=4$ is assumed for convenience of description. That is, in Table 37, single-scheduling information appears to be four pieces of scheduling information. Here, first scheduling information is the same as single-scheduling information, and a K0 value of n-th scheduling information may be sequentially increased by 1 from the first scheduling information. That is, if a K0 value of the first scheduling information is K0_0, the K0 value of the n-th scheduling information is (K0_0)+n-1. Further, SLIVs of all scheduling information may be the same as single-scheduling information.

[Table 37]

| Index | First scheduling information | | Second scheduling information | | Third scheduling information | | Fourth scheduling information | |
|---|---|---|---|---|---|---|---|---|
| | K0 | SLIV (S,L) | K0 | SLIV (S,L) | K0 | SLIV (S,L) | K0 | SLIV (S,L) |
| 1 | 0 | SLIV 3_1 (7,7) | 1 | SLIV 3_2 (7,7) | 2 | SLIV 3_3 (7,7) | 3 | SLIV 3_4 (7,7) |
| 2 | 0 | SLIV 4_1 (0,7) | 1 | SLIV 4_2 (0,7) | 2 | SLIV 4_3 (0,7) | 3 | SLIV 4_4 (0,7) |

The terminal may generate Table 38 by using the union of the TDRA tables (e.g., the union of Table 32 and Table 37). Here, the indexes are newly assigned.

[Table 38]

| Index | First scheduling information | | Second scheduling information | | Third scheduling information | | Fourth scheduling information | |
|---|---|---|---|---|---|---|---|---|
| | K0 | SLIV (S,L) | K0 | SLIV (S,L) | K0 | SLIV (S,L) | K0 | SLIV (S,L) |
| 1 | 0 | SLIV 1_1 (0,4) | 1 | SLIV 1_2 (0,4) | - | - | - | - |
| 2 | 0 | SLIV 2_1 (0,7) | 2 | SLIV 2_2 (7,7) | - | - | - | - |
| 3 | 0 | SLIV 3_1 (7,7) | - | - | - | - | - | - |
| 4 | 0 | SLIV 3_1 (7,7) | 1 | SLIV 3_2 (7,7) | 2 | SLIV 3_3 (7,7) | 3 | SLIV 3_4 (7,7) |
| 5 | 0 | SLIV 4_1 (0,7) | 1 | SLIV 4_2 (0,7) | 2 | SLIV 4_3 (0,7) | 3 | SLIV 4_4 (0,7) |

In Table 38, PDSCH repetitive reception has already been considered. Therefore, the terminal may generate a Type-1 HARQ-ACK CB by using the existing pseudo-code 4 described above.

[Method 4: Assuming that one SLIV of set R is for PDSCH repetitive reception]

In the above-described method 2, a row including one SLIV is found, and whether to exclude the row from set R is determined by applying the number of repetitions (e.g., $N_{PDSCH}^{max}$) to the one SLIV. However, in the above process, a terminal needs additional terminal complexity to find the row including one SLIV. In addition, in the above-described method 1, it is required to determine whether a row is included in the third DCI format or is included in the fourth DCI format. If a row is included in the third DCI format, the terminal determines whether to exclude the row from set R, by applying the number of repetitions (e.g., $N_{PDSCH}^{max}$) to the SLIV included in the row. For reference, if the row is included in the third DCI format, the row may include one SLIV. Here, the process requires additional terminal complexity in order for the terminal to determine whether each row is included in the third DCI format or is included in the fourth DCI format.

In the first and second methods, the additional terminal complexity may cause an increase in cost in terminal implementation, so that a method capable of solving this problem is required.

As one method of the disclosure, when a row includes one or multiple SLIVs, the terminal may select one SLIV from among the one or multiple SLIVs. The terminal may determine whether it is possible to receive the selected one SLIV according to PDSCH repetitive reception scheduling. For example, based on the first condition, the terminal may determine that it is impossible to receive the one SLIV according to PDSCH repetitive reception scheduling. Here, if the one SLIV overlaps a semi-static UL symbol in all slots of the number of repetitions (e.g., $N_{PDSCH}^{max}$), it may be determined that reception of a PDSCH according to the one SLIV is impossible according to PDSCH repetitive reception scheduling. Based on the determination under the first condition, the terminal may determine whether to exclude the row from set R.

As one method of the disclosure, when a row includes one or multiple SLIVs, the terminal may determine whether it is possible to receive the one or multiple SLIVs according to multi-PDSCH scheduling. For example, based on the second condition, if the one or multiple SLIVs overlap a semi-static UL symbol in slots in which the one or multiple SLIVs are received, the terminal may determine whether reception of a PDSCH according to the one or multiple SLIVs is impossible according to multi-PDSCH scheduling. Based on the determination under the second condition, the terminal may determine whether to exclude the row from set R.

As one method of the disclosure, the terminal may determine whether to exclude the row from set R, based on the first condition and the second condition. That is, if it is determined, based on the first condition, that reception of the PDSCH is impossible according to PDSCH repetitive reception scheduling, and if it is determined, based on the second condition, that reception of the PDSCH is impossible according to multi-PDSCH scheduling, the terminal may exclude the row from the set R. In other words, the row may be excluded from the set R only if both conditions are satisfied. Although one condition is not satisfied, if another condition is satisfied, the row may not be excluded from the set R.

The biggest difference between the first and second methods and the above-described one method is that, when determining whether reception is possible according to PDSCH repetitive reception scheduling, the terminal determines neither the number of SLIVs included in each row nor a DCI format in which an SLIV is included. Instead, the terminal may select one SLIV among SLIVs included in a row, and the terminal may consider the SLIV to be an SLIV included in the third DCI format of the first method or to be an SLIV of the second method.

As a specific example, descriptions are provided based on Table 31 which is a TDRA table including only single-scheduling information, and Table 32 which is a TDRA table including multiple pieces of scheduling information. The terminal may generate a TDRA table by gathering rows of Table 31 and rows of Table 32. This may be as in Table 33. A set of indexes of rows in the TDRA table may be set R. That is, the set R may be configured so that R={1, 2, 3, 4}. Here, the indexes are an example and may be assigned by the terminal.

Rows 1 and 2 of Table 33 generated by the terminal include multiple SLIVs, and rows 3 and 4 include one SLIV. As described above, multiple SLIVs may be used for multi-PDSCH scheduling, and one SLIV may be used for PDSCH repetitive reception.

According to an example of the disclosure, the terminal may select one SLIV from rows (rows 1 to 2) having multiple SLIVs. For example, the one SLIV may be the last SLIV among the multiple SLIVs. Here, the last may be the last in the order of scheduling information. Alternatively, the last may be the last in terms of a scheduled time axis. That is, the last may be an SLIV of scheduling information having a largest K0 value of the scheduling information.

According to an example of the disclosure, the terminal may select one SLIV from rows (rows 1 to 2) having multiple SLIVs, and may generate a new TDRA table by gathering the selected SLIV and one SLIV from rows (rows 3 to 4) having one SLIV. The new TDRA table is as in Table 39. For reference, Table 39 is generated assuming that the last scheduling information (SLIV) is selected when one row includes multiple SLIVs. For reference, a set of indexes of rows of the TDRA table may be referred to as R_one. That is, set R_one may be configured so that set R_one={1, 2, 3, 4}. For reference, the indexes of set R_one and set R may correspond to each other. In other words, one selected SLIV among SLIVs of a row of index i in set R may be an SLIV of a row of index i in set R.

[Table 39]

| Index | Selected scheduling information | |
|---|---|---|
| | K0 | SLIV (S,L) |
| 1 | 1 | SLIV 1_2 (0,4) |
| 2 | 2 | SLIV 2_2 (7,7) |
| 3 | 0 | SLIV 3_1 (7,7) |
| 4 | 0 | SLIV 4_1 (0,7) |

According to an example of the disclosure, the terminal may apply PDSCH repetitive reception, based on the new TDRA table (e.g., Table 39) generated by gathering the one SLIV. That is, it may be assumed that a PDSCH candidate according to one SLIV of each row of the new TDRA table (e.g., Table 39) is received in $N_{PDSCH}^{max}$ slots. If the one SLIV does not overlap a semi-static UL symbol in at least one of the $N_{PDSCH}^{max}$ slots, the terminal may not exclude the row from set R. In addition, the row may not be excluded from set R_one.

According to an example of the disclosure, the terminal may apply multi-PDSCH reception, based on the TDRA table (e.g., Table 33) obtained by gathering all scheduling information. That is, it may be assumed that a PDSCH candidate corresponding to one or multiple SLIVs of each row of the TDRA table (e.g., Table 33) is received in slots scheduled for reception. If the one or multiple SLIVs do not overlap a semi-static UL symbol in at least one of the slots scheduled for reception, the terminal may not exclude the row from set R. In addition, the row may not be excluded from set R_one.

According to an example of the disclosure, the terminal may apply PDSCH repetitive reception, based on the new TDRA table (e.g., Table 39) generated by gathering the one SLIV. The terminal may assume that a PDSCH candidate according to one SLIV of a row of the new TDRA table (e.g., Table 39) is received in $N_{PDSCH}^{max}$ slots. In addition, the terminal may apply multi-PDSCH reception, based on the TDRA table (e.g., Table 33) obtained by gathering all scheduling information. That is, it may be assumed that one or multiple SLIVs of each row of the TDRA table (e.g., Table 33) are received in slots scheduled for reception. If one SLIV of a row of the new TDRA table (e.g., Table 39) overlaps a semi-static UL symbol in all $N_{PDSCH}^{max}$ slots, and if one or multiple SLIVs of a row of the TDRA table (e.g., Table 33) overlap a semi-static UL symbol in all slots scheduled for the one or multiple SLIVs, the terminal may exclude the row from set R. In addition, the row may be excluded from set R_one.

$N_{PDSCH}^{max}$ may be determined based on *pdsch-AggregationFactor.* A method for determining $N_{PDSCH}^{max}$ by the terminal may be as follows. For example, if the terminal receives a configuration of *pdsch-AggregationFactor in PDSCH-Config,* the terminal may use, as $N_{PDSCH}^{max}$, a value of *pdsch-AggregationFactor* in PDSCH-Config. If the terminal receives a configuration of *pdsch-AggregationFactor-r16 in SPS-Config,* the terminal may use, as $N_{PDSCH}^{max}$, a value of *pdsch-AggregationFactor-r16 in SPS-Config.* If the terminal receives a configuration of both *pdsch-AggregationFactor in PDSCH-Config* and *pdsch-AggregationFactor-r16 in SPS-Config,* the terminal may use, as $N_{PDSCH}^{max}$,a larger value among the value of *pdsch-AggregationFactor in PDSCH-Config* and the value of *pdsch-AggregationFactor-r16 in SPS-Config.*

[pseudo-code 7: (multi-PDSCH scheduling, time-domain bundling configuration, and PDSCH repetitive reception configuration - method 4)]

- Preparation operation 1: Set R is a set of multiple pieces of scheduling information (slot information (hereinafter, K0 value) to which a PDSCH is mapped, and start symbol and length information (hereinafter, a starting and length value (SLIV))) configured in a TDRA table. If the terminal monitors one or more DCI formats, and the DCI formats use different TDRA tables, the set R is generated based on all TDRA tables.
- Preparation operation 2: Set R_one may be generated by selecting only one piece of scheduling information (e.g., SLIV) in each row of set R. That is, if row i of set R includes multiple pieces of scheduling information, row i of set R_one may include only one of the multiple pieces of scheduling information. Here, the one piece of scheduling information may be the last scheduling information.
- Operation 0: $M_{A,c}$ is initialized to an empty set. k is initialized to 0. j is initialized to 0.
- Operation 1: A k-th largest K1 value is selected from configured set K1. (For example, if k=0, a largest K1 value is selected from the set K1, and if k=1, a second largest K1 value is selected from the set K1.) The K1 value is referred to as $K_{1,k}$.

- Operation 2: If a row satisfies both of the following conditions, the row may be excluded from set R and set R_one.

Condition 1) A symbol corresponding to start symbol and length information (SLIV) of one piece of scheduling information belonging to a row of set R_one and a symbol configured for uplink in a higher layer overlap in each of previous $N_{PDSCH}^{max}$ slots (slot $n-K_{1,k}-(N_{PDSCH}^{max}-1)$, slot $n-K_{1,k}-(N_{PDSCH}^{max}-1)+1$, ..., slot $n-K_{1,k}$) from a slot (slot $n-K_{1,k}$) corresponding to a $K_{1,k}$ value. Here, $N_{PDSCH}^{max}$ is a value determined based on *pdsch-AggregationFactor*.

Condition 2) A symbol corresponding to start symbol and length information (SLIV) belonging to each row of set R and a symbol configured for uplink in a higher layer overlap in each of slots determined by K0 values of respective rows of set R and a slot (slot $n-K_{1,k}$) corresponding to a $K_{1,k}$ value of the row of set R. The slots determined by the K0 values of the rows include slot $n-K_{1,k}-Delta\_K_i$ (i=0, 1, ..., the number of pieces of scheduling information in row-1), and $Delta\_K_i=K0\_max-K0\_i$. Here, $K0\_i$ is an i-th K0 value of multiple pieces of scheduling information, and $K0\_max$ is a K0 value (largest K0 value) of the last scheduling information.

- Operation 3-1 (when the terminal has only UE capability of receiving a maximum of one unicast PDSCH in one slot): If determined set R is not an empty set, the terminal adds j as a new PDSCH reception candidate occasion to set $M_{A,c}$. If one of PDSCH candidates of set R is received, the terminal may place HARQ-ACK of the PDSCH in the new PDSCH candidate occasion of j. The terminal increases j by 1.
- Operation 3-2 (when the terminal has UE capability of receiving more than one unicast PDSCH in one slot): The terminal generates set R_last by gathering only the last scheduling information of the determined set R. The terminal adds j as a new PDSCH reception candidate occasion to set $M_{A,c}$ for an SLIV which ends first in set R_last and SLIVs which overlap the SLIV in time. When one of PDSCH candidates having the SLIV is received, the terminal may place HARQ-ACK of the PDSCH in the new PDSCH candidate occasion of j. The terminal increases j by 1. The SLIVs are excluded from set R'. Operation 3-2 is repeated until set R_last becomes an empty set. For reference, if set R_one includes only the last scheduling information of set R, the set R_last may be the same as set R_one. Therefore, operation 3-2 may be performed based on set R_one.
- Operation 4: The terminal increases k by 1. If k is less than the cardinality of set K1, operations start again from operation 2, and if k is equal to or greater than the cardinality of set K1, pseudo-code 7 ends.

In the above-described pseudo-code 7, in operation 2, condition 1 may be applied only when $N_{PDSCH}^{max}$ is greater than 1. If $N_{PDSCH}^{max}=1$, operation 2 may be determined based on only condition 2. That is, if a row satisfies only condition 2, the row may be excluded from set R and set R_one.

A pseudo-code according to the above-described method 4 may be as in Table 40. Here, set R' is the same as set R of the disclosure.

【Table 40】

<Pseudo-code #4>

while $r < \mathrm{C}(R)$

if the UE is not provided *enableTimeDomainHARQ-Bundling* and is provided *tdd-UL-DL-ConfigurationCommon*, or *tdd-UL-DL-ConfigurationDedicated* and, for each slot from slot $\left\lfloor \left(n_U - K_{1,k}\right) \cdot 2^{\mu_{DL}-\mu_{UL}} \right\rfloor + n_D - N_{\mathrm{PDSCH}}^{\mathrm{repeat,max}} + 1$ to slot $\left\lfloor \left(n_U - K_{1,k}\right) \cdot 2^{\mu_{DL}-\mu_{UL}} \right\rfloor + n_D$, at least one symbol of the PDSCH time resource derived by row $r$ is configured as UL where $K_{1,k}$ is the $k$-th slot timing value in set $K_1$, or if HARQ-ACK information for PDSCH time resource derived by row $r$ in slot $\left\lfloor \left(n_U - K_{1,k}\right) \cdot 2^{\mu_{DL}-\mu_{UL}} \right\rfloor + n_D$ cannot be provided in slot $n_U$

$\quad R = R \backslash r$;

elseif the UE is provided *enableTimeDomainHARQ-Bundling* and *tdd-UL-DL-ConfigurationCommon*, or *tdd-UL-DL-ConfigurationDedicated* and, for each slot $\left\lfloor \left(n_U - K_{1,k}\right) \cdot 2^{\mu_{DL}-\mu_{UL}} \right\rfloor + n_D - \Delta K_{0,r}(d)$, at least one symbol of the PDSCH time resource derived by row $r$ of set $R'$ is configured as UL, where $d = 0,1,\dots,\mathrm{C}\left(\Delta K_{0,r}\right) - 1$, $\Delta K_{0,r} = \max_{K_0}\left(K_{0,r}\right) - K_{0,r}$, and $\mathrm{C}\left(\Delta K_{0,r}\right)$ is the cardinality of $\Delta K_{0,r}$ and for each slot from slot $\left\lfloor \left(n_U - K_{1,k}\right) \cdot 2^{\mu_{DL}-\mu_{UL}} \right\rfloor + n_D - N_{\mathrm{PDSCH}}^{\mathrm{repeat,max}} + 1$ to slot $\left\lfloor \left(n_U - K_{1,k}\right) \cdot 2^{\mu_{DL}-\mu_{UL}} \right\rfloor + n_D$ at least one symbol of the PDSCH time resource derived by row $r$ of set $R_{one}$ is configured as UL.

$\quad R_{one} = R \backslash r$;

$\quad R' = R' \backslash r$;

else

$\quad r = r + 1$;

end if

end while

[Method 5: Impossibility of HARQ-ACK transmission of PDSCH repetitive reception through Type-1 HARQ-ACK codebook]

As another method of the disclosure, HARQ-ACK of PDSCH repetitive reception may not be transmitted through a Type-1 HARQ-ACK codebook. That is, a terminal may not configure HARQ-ACK of PDSCH repetitive reception with a Type-1 HARQ-ACK codebook. This may be implemented with an appropriate configuration of a base station.

For example, if the terminal receives a configuration of a Type-1 HARQ-ACK codebook and receives a configuration of multi-PDSCH scheduling, the terminal may receive a configuration of only one of time-domain bundling and PDSCH repetitive reception. That is, if time-domain bundling is configured, it may be assumed that the terminal does not perform PDSCH repetitive reception. That is, the Type-1 HARQ-ACK codebook may be generated by assuming

$N_{PDSCH}^{max}=1$. Conversely, if PDSCH repetitive reception is configured, it may be assumed that time-domain bundling is not configured.

If the terminal receives a configuration of multi-PDSCH scheduling, the terminal may receive a configuration of a codebook other than the Type-1 HARQ-ACK codebook for time-domain bundling and PDSCH repetitive reception. As an example, a Type-2 HARQ-ACK codebook may be configured.

Therefore, if the terminal receives a configuration of the Type-1 HARQ-ACK codebook and receives a configuration of multi-PDSCH scheduling, the terminal may not expect to be configured with both time-domain bundling and PDSCH repetitive reception.

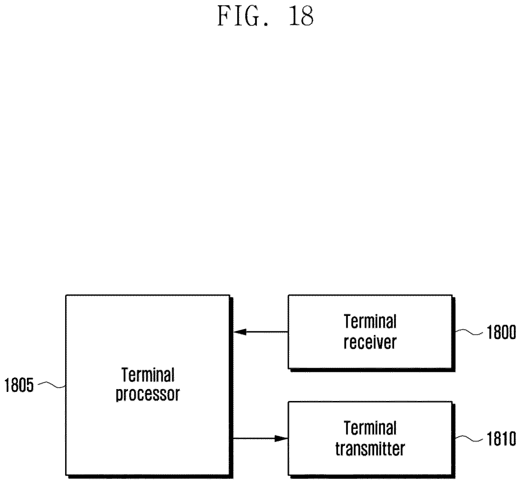

FIG. 18 illustrates a structure of a UE in a wireless communication system according to an embodiment of the disclosure.

Referring to FIG. 18, the base station may include a transceiver, which refers to a base station receiver 1800 and a base station transmitter 1810 as a whole, a memory (not illustrated), and a base station processor 1805 (or base station controller or processor). The UE transceiver 1800 and 1810, the memory, and the UE processor 1805 may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with the base station. The signals may include control information and data. To this end, the transceiver may include an RF transmitter configured to up-convert and amplify the frequency of transmitted signals, an RF receiver configured to low-noise-amplify received signals and down-convert the frequency thereof, and the like. This is only an embodiment of the transceiver and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the UE may include multiple memories.

In addition, the processor may control a series of processes such that the UE can operate according to the above-described embodiments. For example, the processor may control components of the UE so as to receive DCI configured in two layers such that multiple PDSCHs are received simultaneously. The UE may include multiple processors, and the processors may perform the UE's component control operations by executing programs stored in the memory.

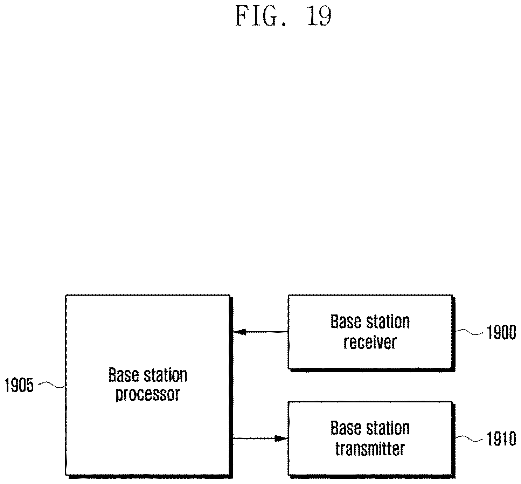

FIG. 19 illustrates a structure of a base station in a wireless communication system according to an embodiment of the disclosure.

Referring to FIG. 19, the base station may include a transceiver, which refers to a base station receiver 1900 and a base station transmitter 1910 as a whole, a memory (not illustrated), and a base station processor 1905 (or base station controller or processor). The UE transceiver 1900 and 1910, the memory, and the UE processor 1905 may operate according to the above-described communication methods of the UE. Components of the base station are not limited to the above-described example. For example, the base station may include a larger or smaller number of components than the above-described components. Furthermore, the transceiver, the memory, and the processor may be implemented as a single chip.

The transceiver may transmit/receive signals with the UE. The signals may include control information and data. To this end, the transceiver may include an RF transmitter configured to up-convert and amplify the frequency of transmitted signals, an RF receiver configured to low-noise-amplify received signals and down-convert the frequency thereof, and the like. This is only an embodiment of the transceiver , and the components of the transceiver are not limited to the RF transmitter and the RF receiver.

= In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the base station may include multiple memories.

The processor may control a series of processes such that the base station can operate according to the above-described embodiments of the disclosure. For example, the processor may control components of the base station so as to configure DCI configured in two layers including allocation information regarding multiple PDSCHs and to transmit the same. The base station may include multiple processors, and the processors may perform the base station's component control operations by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Moreover, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Furthermore, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Furthermore, the above respective embodiments may be employed in combination, as necessary. For example, one embodiment of the disclosure may be partially combined with other embodiments to operate a base station and a terminal. As an example, embodiment 1 and 2 of the disclosure may be partially combined with each other to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure has been given by way of example, and embodiments of the disclosure are not limited to the embodiments disclosed herein. Those skilled in the art will appreciate that other specific modifications and changes may be easily made thereto without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

### Claims

1. A method performed by a terminal in a communication system, the method comprising:

   receiving time-domain bundling configuration information of a hybrid automatic repeat request-acknowledgement (HARQ-ACK) bit from a base station;
   receiving multiple downlink data through a physical downlink shared channel (PDSCH) from the base station;
   generating an HARQ-ACK codebook including HARQ-ACK bits for the multiple downlink data; and
   transmitting the HARQ-ACK codebook through an uplink channel to the base station,
   wherein the HARQ-ACK codebook is based on a set of occasions of PDSCH reception candidates, and
   wherein in case that multi-PDSCH scheduling and repetitive reception are configured through higher layer signaling, the set of the occasions of the PDSCH reception candidates is determined based on a determination of whether multi-PDSCH scheduling or repetitive reception is applied to scheduling information included in a row included in TDRA configuration information based on a downlink control information (DCI) format related to the row.

2. The method of claim 1, wherein in case that the row and a first DCI format to which multi-PDSCH scheduling is applied are related, the set of the occasions of the PDSCH reception candidates is determined based on one or more slots according to multiple pieces of scheduling information included in the row.

3. The method of claim 1, wherein in case that the row and a second DCI format to which repetitive transmission is applied are related, the set of the occasions of the PDSCH reception candidates is determined based on one or more slots according to a number of repetitive receptions and the scheduling information included in the row.

4. The method of claim 2, wherein the first DCI format is DCI format 1_2.

5. A method performed by a base station in a communication system, the method comprising:

transmitting time-domain bundling configuration information of a hybrid automatic repeat request-acknowledgement (HARQ-ACK) bit to a terminal;
transmitting multiple downlink data through a physical downlink shared channel (PDSCH) to the terminals; and
receiving an HARQ-ACK codebook including HARQ-ACK bits for the multiple downlink data through an uplink channel from the terminal,
wherein the HARQ-ACK codebook is based on a set of occasions of PDSCH reception candidates, and
wherein in case that multi-PDSCH scheduling and repetitive reception are configured for the terminal through higher layer signaling, the set of the occasions of the PDSCH reception candidates is based on a determination of whether multi-PDSCH scheduling or repetitive reception is applied to scheduling information included in a row included in TDRA configuration information based on a downlink control information (DCI) format related to the row.

6. The method of claim 5, wherein in case that the row and a first DCI format to which multi-PDSCH scheduling is applied are related, the set of the occasions of the PDSCH reception candidates is based on one or more slots according to multiple pieces of scheduling information included in the row.

7. The method of claim 5, wherein in case that the row and a second DCI format to which repetitive transmission is applied are related, the set of the occasions of the PDSCH reception candidates is based on one or more slots according to the number of repetitive receptions and the scheduling information included in the row.

8. The method of claim 6, wherein the first DCI format is DCI format 1_2.

9. A terminal in a communication system, the terminal comprising:

a transceiver; and
a controller configured to:

receive time-domain bundling configuration information of a hybrid automatic repeat request-acknowledgement (HARQ-ACK) bit from a base station;
receive multiple downlink data through a physical downlink shared channel (PDSCH) from the base stations, generate an HARQ-ACK codebook including HARQ-ACK bits for the multiple downlink data, and transmit the HARQ-ACK codebook through an uplink channel to the base station,
wherein the HARQ-ACK codebook is based on a set of occasions of PDSCH reception candidates, and
wherein in case that multi-PDSCH scheduling and repetitive reception are configured through higher layer signaling, the set of the occasions of the PDSCH reception candidates is determined based on a determination of whether multi-PDSCH scheduling or repetitive reception is applied to scheduling information included in a row included in TDRA configuration information based on a downlink control information (DCI) format related to the row.

10. The terminal of claim 9, wherein in case that the row and a first DCI format to which multi-PDSCH scheduling is applied are related, the set of the occasions of the PDSCH reception candidates is determined based on one or more slots according to multiple pieces of scheduling information included in the row.

11. The terminal of claim 9, wherein in case that the row and a second DCI format to which repetitive transmission is applied are related, the set of the occasions of the PDSCH reception candidates is determined based on one or more slots according to the number of repetitive receptions and the scheduling information included in the row.

12. The terminal of claim 10, wherein the first DCI format is DCI format 1_2.

13. A base station in a communication system, the base station comprising:

a transceiver; and
a controller configured to :

transmit time-domain bundling configuration information of a hybrid automatic repeat request-acknowledgement (HARQ-ACK) bit to a terminal,
transmit multiple downlink data through a physical downlink shared channel (PDSCH) to the terminal, and receive an HARQ-ACK codebook including HARQ-ACK bits for the multiple downlink data through an uplink channel from the terminal,
wherein the HARQ-ACK codebook is based on a set of occasions of PDSCH reception candidates, and wherein in case that multi-PDSCH scheduling and repetitive reception are configured for the terminal through higher layer signaling, the set of the occasions of the PDSCH reception candidates is based on a determination of whether multi-PDSCH scheduling or repetitive reception is applied to scheduling information included in a row included in TDRA configuration information based on a downlink control information (DCI) format related to the row.

14. The base station of claim 13, wherein in case that the row and a first DCI format to which multi-PDSCH scheduling is applied are related, the set of the occasions of the PDSCH reception candidates is based on one or more slots according to multiple pieces of scheduling information included in the row, and
wherein in case that the row and a second DCI format to which repetitive transmission is applied are related, the set of the occasions of the PDSCH reception candidates is based on one or more slots according to the number of repetitive receptions and the scheduling information included in the row.

15. The base station of claim 14, wherein the first DCI format is DCI format 1_2.

One subframe (110)

$N_{symb}^{subframe,\mu}$ OFDM symbols

1 OFDM symbols (102)

1 subcarrier (103)

$K = N_{RB,x}^{max,\mu} N_{sc}^{RB} - 1$

Resource block $N_{sc}^{RB}$ subcarriers (104)

$N_{RB}^{\mu} N_{sc}^{RB}$ subcarriers

Resource element (k,l) (101)

$K = 0$

$\bar{l} = 0$

$\bar{l} = 14 \cdot 2^{\mu} - 1$

Frequency

Time

# FIG. 2

1 frame (200)

1 subframe (201)

μ=0 (204): slot (202) — 0 | 1 | 2 | 3 | 4 | 5 | 6 | 7 | 8 | 9

μ=1 (205): slot (203) — 0 | 1 | 2 | 3 | 4 | 5 | 6 | 7 | 8 | 9 | 10 | 11 | 12 | 13 | 14 | 15 | 16 | 17 | 18 | 19

EP 4 443 789 A1

# FIG. 3

BWP#1
(301)

BWP#2
(302)

Frequency

UE bandwidth
(300)

EP 4 443 789 A1

# FIG. 4

Duration (404)

Frequency resources (403)

UE bandwidth part (410)

Slot (420)

Frequency

Time

Control resource set#1 (401)

Control resource set#2 (402)

# FIG. 5

1 symbol
(501)

1 PRB
(502)

DMRS
(505)

CCE
(504)

REG
(503)

# FIG. 6

# FIG. 7

RA type 0
(700)

715

| Bitmap |
|---|

RA type 1
(705)

720                                      725

| Starting VRB | Length |
|---|---|

Both RA
type 0 & 1
(710)

730                                      735

| 1 bit for RA type indication | Max{payload for RA type 0, payload for RA type 1} |
|---|---|

FIG. 8

S
(800)

L (805)

| 0 | 1 | 2 | 3 | 4 | 5 | 6 | 7 | 8 | 9 | 10 | 11 | 12 | 13 |

OFDM symbol

$$\text{Slot} \left\lfloor n \cdot \frac{2^{\mu_{PDSCH}}}{2^{\mu_{PDCCH}}} \right\rfloor + K_0 \quad (810)$$

FIG. 9

(900)

$\mu_{\text{PDCCH}} = 1$

| PDCCH | |
| Slot n | Slot n + 1 | $\cdots$ | t

$\mu_{\text{PDSCH}} = 1$

| PDSCH |
$\cdots$ | Slot n + K$_0$ | t

(905)

$\mu_{\text{PDCCH}} = 1$

| PDCCH | |
| Slot n | Slot n + 1 | $\cdots$ | t

$\mu_{\text{PDSCH}} = 2$

| PDSCH |
$\cdots$ | t

$\text{Slot} \left\lfloor n \cdot \dfrac{2^{\mu_{\text{PDSCH}}}}{2^{\mu_{\text{PDCCH}}}} \right\rfloor$

$\text{Slot} \left\lfloor n \cdot \dfrac{2^{\mu_{\text{PDSCH}}}}{2^{\mu_{\text{PDCCH}}}} \right\rfloor + K_0$

EP 4 443 789 A1

# FIG. 10

Single cell LTE/NR (1000)          Carrier aggregation (1010)          Dual connectivity (1020)

### gNB
- SDAP (1025)
- PDCP (1030)
- RLC (1035)
- MAC (1040)
- PHY (1045)

### UE
- PHY (1050)
- MAC (1055)
- RLC (1060)
- PDCP (1065)
- SDAP (1070)

### gNB
- SDAP
- PDCP
- RLC
- MAC
- PHY  ...  PHY

### UE
- PHY  ...  PHY
- MAC
- RLC
- PDCP
- SDAP

### MgNB
- SDAP
- PDCP
- RLC
- MAC
- PHY

### SgNB
- RLC
- MAC
- PHY

### UE
- PHY
- MAC
- RLC
- PDCP
- SDAP

### (SgNB UE)
- PHY
- MAC
- RLC

FIG. 11

(a) TDRA row 0 — 1130

(b) TDRA row 1 — 1140

(c) TDRA row 2 — 1150

FIG. 12

**[a] DCI for single-PDSCH scheduling**

TDRA field [1200]

MCS field [1205]

NDI field for single PDSCH [1210]

RV field for single PDSCH [1215]

HARQ process number field [1220]

Antenna port(s) field [1225]

DMRS sequence initialization field [1230]

Padding bits [1235]

[1240]

**[b] DCI for multi-PDSCH scheduling**

TDRA field [1200]

MCS field [1255]

NDI field for 1st PDSCH [1260]

RV field for 1st PDSCH [1262]

NDI field for 2nd PDSCH [1261]

RV field for 2nd PDSCH [1263]

HARQ process number field [1270]

Antenna port(s) field [1275]

DMRS sequence initialization field [1280]

[1285]

1 bit

EP 4 443 789 A1

# FIG. 13

# FIG. 14

(a) (1450)

(b) (1460)

Semi-static UL symbol ∼1430

(c) (1470)

| 1st $M_{A,c}$ | 2nd $M_{A,c}$ |
|---|---|
| {1, 2} | {4} |

# FIG. 15

(a) (1550)

(b) (1560)

(c) (1570)

FIG. 16A

# FIG. 16B

EP 4 443 789 A1

FIG. 16C

FIG. 16D

# FIG. 17

## (a)

| 1706 | 1704 | 1702 | | | 1700 |
|---|---|---|---|---|---|
| Slot n-5 | Slot n-4 | Slot n-3 | Slot n-2 | Slot n-1 | Slot n |

1730 — 1_1 | 1_2 — 1731
1732 — 2_1 | 2_2 — 1733
3_1 | 3_2
K1=3
PUCCH
1722 | 1720
1734 | 1724 | 1735
1710

[a]

## (b) (1760)

Semi-static UL symbol —1740

| 1706 | 1704 | 1702 | | | 1700 |
|---|---|---|---|---|---|
| Slot n-5 | Slot n-4 | Slot n-3 | Slot n-2 | Slot n-1 | Slot n |

1730 — 1_1 | 1_2 — 1731
1732 — 2_1 | 2_2 — 1733
3_1 | 3_2
K1=3
PUCCH
1722 | 1720
1734 | 1724 | 1735
1710

[b] [1760]

## (c) (1770)

Semi-static UL symbol —1740

| 1706 | 1704 | 1702 | | | 1700 |
|---|---|---|---|---|---|
| Slot n-5 | Slot n-4 | Slot n-3 | Slot n-2 | Slot n-1 | Slot n |

1730 — 1_1 | 1_2 — 1731
1732 — 2_1 | 2_2 — 1733
3_1 | 3_2 — 1735
K1=3
PUCCH
1722 | 1720
1734 | 1724
1710

| $1^{st}\ M_{A,c}$ | $2^{nd}\ M_{A,c}$ |
|---|---|
| {1_1&1_2, 3_1} | {2, 1} |

—1750

[c] [1770]

FIG. 18

FIG. 19

# EP 4 443 789 A1

<table>
<tr><td colspan="2" style="text-align:center"><strong>INTERNATIONAL SEARCH REPORT</strong></td><td colspan="2">International application No.<br><strong>PCT/KR2022/021561</strong></td></tr>
</table>

**A.    CLASSIFICATION OF SUBJECT MATTER**

**H04L 1/18**(2006.01)i; **H04L 5/00**(2006.01)i; **H04L 1/08**(2006.01)i

According to International Patent Classification (IPC) or to both national classification and IPC

**B.    FIELDS SEARCHED**

Minimum documentation searched (classification system followed by classification symbols)

H04L 1/18(2006.01); H04L 1/16(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: HARQ-ACK(hybrid automatic repeat request-acknowledgement), 멀티-PDSCH(multi-PDSCH), 반복(repetition), HARQ-ACK 코드북(HARQ-ACK codebook), DCI 포맷(DCI format), TDRA(Time Domain Resource Allocation)

**C.    DOCUMENTS CONSIDERED TO BE RELEVANT**

| Category* | Citation of document, with indication, where appropriate, of the relevant passages | Relevant to claim No. |
|---|---|---|
| A | VIVO. Remaining issues on PDSCH PUSCH enhancements for NR operation from 52.6GHz to 71GHz. R1-2111002, 3GPP TSG RAN WG1 #107-e, e-Meeting. 05 November 2021. <br>      See sections 3.2.1-3.2.2; and figure 3. | 1-15 |
| A | MODERATOR (LG ELECTRONICS). Summary #4 of PDSCH/PUSCH enhancements (Scheduling/HARQ). R1-2112714, 3GPP TSG RAN WG1 #107-e, e-Meeting. 20 November 2021. <br>      See section 2.5. | 1-15 |
| A | ERICSSON. PDSCH/PUSCH enhancements. R1-2111468, 3GPP TSG RAN WG1 #107-e, e-Meeting. 06 November 2021. <br>      See sections 2.1.3 and 2.2.2. | 1-15 |
| DA | 3GPP; TSG RAN; NR; Physical layer procedures for control (Release 17). 3GPP TS 38.213 V17.0.0. 05 January 2022. <br>      See section 9.1.2.1. | 1-15 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 April 2023** | **05 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2022/021561** |

**C. DOCUMENTS CONSIDERED TO BE RELEVANT**

| Category* | Citation of document, with indication, where appropriate, of the relevant passages | Relevant to claim No. |
|---|---|---|
| A | WO 2020-226547 A1 (TELEFONAKTIEBOLAGET LM ERICSSON (PUBL)) 12 November 2020 (2020-11-12)<br>    See claims 1-24. | 1-15 |

Form PCT/ISA/210 (second sheet) (July 2022)

INTERNATIONAL SEARCH REPORT
Information on patent family members

International application No.

**PCT/KR2022/021561**

| Patent document cited in search report | | | Publication date (day/month/year) | Patent family member(s) | | | Publication date (day/month/year) |
|---|---|---|---|---|---|---|---|
| WO | 2020-226547 | A1 | 12 November 2020 | EP | 3963803 | A1 | 09 March 2022 |
| | | | | US | 2022-0224455 | A1 | 14 July 2022 |

Form PCT/ISA/210 (patent family annex) (July 2022)